(19) Europäisches Patentamt
European Patent Office
Office européen des brevets

(11) Publication number: 0 587 440 A2

# (12) EUROPEAN PATENT APPLICATION

(21) Application number: 93307161.5

(51) Int. Cl.[5]: C08F 4/655, C08F 10/00

(22) Date of filing: 10.09.93

(30) Priority: 10.09.92 JP 283394/92
28.12.92 JP 360607/92
28.12.92 JP 361970/92

(43) Date of publication of application:
16.03.94 Bulletin 94/11

(84) Designated Contracting States:
DE FR GB IT NL

(71) Applicant: NIPPON OIL CO., LTD.
3-12, 1-chome, Nishi-shimbashi Minato-ku
Tokyo (JP)

(72) Inventor: Tajima, Yoshio
4-605 Ookurayamaheim, 902 Mamedo-cho
Kohhoku-ku, Yokohama-shi, Kanagawa (JP)
Inventor: Seki, Takashi
155-72 Honmoku-Oosato-cho, Naka-ku
Yokohama-shi, Kanagawa (JP)
Inventor: Mori, Satoshi
612-2 Kamihirama, Nakahara-ku
Kawasaki-shi, Kanagawa (JP)
Inventor: Aida, Fuyuki
1-30-3 Higashi-mukohjima
Sumida-ku, Tokyo (JP)
Inventor: Matsuura, Kazuo
207-27 Akiba-cho, Totsuka-ku
Yokohama-shi, Kanagawa (JP)
Inventor: Kataoka, Naoki
A-503, 1-1006 Kosugigoten-cho, Nakahara-ku
Kawasaki-shi, Kanagawa (JP)

(74) Representative: Cropp, John Anthony David
MATHYS & SQUIRE 10 Fleet Street
London, EC4Y 1AY (GB)

## (54) Catalyst component for the polymerisation of olefins and process for preparing olefin polymers using same.

(57) A catalyst component for use in the polymerization or copolymerization of olefin(s) is obtained by contacting the following components (1) to (4) with one another:

(1) a compound of the general formula $Me^1R^1p(OR^2)qX^14\text{-}p\text{-}q$ where $R^1$ is a hydrocarbon radical having 1 to 24 carbon atoms, $X^1$ is a halogen atom, $Me^1$ is Zr, Ti or Hf, and n is $0 \leqq n \leqq 4$;

(2) a compound of the general formula $Me^2R^3m(OR^4)nX^2z\text{-}m\text{-}n$ where $R^2$ is a hydrocarbon radical having 1 to 24 carbon atoms, $X^2$ is a halogen atom, $Me^2$ is an element from Groups I to III in the Periodic Table, z is the valence of $Me^2$ and m is $0 \leqq m \leqq z$;

(3) an organocyclic compound having two or more conjugated double bonds; and

(4) a modified organoaluminum compound containing Al-O-Al bond and with at least one branched-chain alkyl group being attached to aluminum atom.

EP 0 587 440 A2

Background of the Invention

The present invention relates to a catalyst component for use in the homopolymerization or copolymerization of olefins and capable of affording olefin homopolymers or copolymers having a high molecular weight and a relatively wide molecular weight distribution, in high efficiency, further the olefin copolymers having a narrow composition distribution. The present invention is also concerned with a process for preparing olefin homopolymers or copolymers using such catalyst component.

In preparing polyolefins, particularly ethylene polymers or ethylene/$\alpha$-olefin copolymers, it is well known to use, for example, a catalyst comprising a zirconium compound (typically a zirconocene compound) and an aluminoxane, as described in Japanese Patent Laid Open No,19309/1983). According to such prior art, ethylene polymers can be produced in a certain yield and copolymers obtained are narrow in both molecular weight distribution and composition distribution.

However, for obtaining polymers in high yield using such catalyst system, it is necessary to increase the proportion of the aluminoxane used as a promotor relative to the amount of a transition metal used, e.g. zirconium. Further, the manufacturing cost for such catalyst system is high because aluminoxanes, especially methylaluminoxane, are expensive. Therefore, it has been desired to decrease the proportion of aluminoxane in the catalyst system.

Techniques for remedying such drawbacks have been proposed, for example, as in Japanese Patent Laid Open Nos. 280802/1985 and 218707/1988, but the effects obtained thereby cannot be said fully satisfactory yet.

It is the object of the present invention to overcome the above-mentioned problems of the prior art.

Having made intensive studies for overcoming the foregoing drawbacks of the prior art, the present inventors found out that by using a novel catalyst system entirely different in construction from the conventional catalyst systems, there could be produced olefin polymers having a high molecular weight, a relatively wide molecular weight distribution and a narrow composition distribution, in high yield, even in a low ratio of an aluminoxane to a transition metal.

Summary of the Invention

The present invention, in the first aspect thereof, resides in a catalyst component for the polymerization of olefins which catalyst component is prepared by contacting the following components (1) to (4) with one another:

(1) a compound represented by the general formula $Me^1R^1_p(OR^2)_qX^1_{4-p-q}$ where $R^1$ and $R^2$ each are hydrocarbon radicals having 1 to 24 carbon atoms, $X^1$ is a halogen atom, $Me^1$ is Zr, Ti, or Hf and p, q are $0 \leqq p \leqq 4$, $0 \leqq q \leqq 4$, $0 \leqq p+q \leqq 4$.

(2) a compound represented by the general formula $Me^2R^3_m(OR^4)_nX^2_{z-m-n}$ where $R^3$ and $R^4$ each are hydrocarbon radicals having 1 to 24 carbon atoms, $X^2$ is a halogen atom, $Me^2$ is an element for the Groups I to III in the Periodic Table, z is the valence, and m and n are $0 \leqq m \leqq z$, $0 \leqq n \leqq z$, $0 \leqq m+n \leqq z$.

(3) an organocyclic compound having two or more conjugated double bonds; and

(4) a compound selected from the group consisting of A) a modified organoaluminum compound containing Al-O-Al bond and with at least one branched-chain alkyl group attached to aluminum atom, B) a boric compound, C) a compound containing C-X bond where X is a halogen atom and D) a sulfide.

The present invention, in the second aspect thereof, resides in a catalyst component for the polymerization of olefins, prepared by contacting the following components (1) to (5) with one another;

(1) a compound represented by the general formula $Me^1R^1_p(OR^2)_qX^1_{4-p-q}$ where $R^1$ and $R^2$ each are hydrocarbon radicals having 1 to 24 carbon atoms, $X^1$ is a halogen atom, $Me^1$ is Zr, Ti, or Hf and p, q are $0 \leqq p \leqq 4$, $0 \leqq q \leqq 4$, $0 \leqq p+q \leqq 4$.

(2) a compound represented by the general formula $Me^2R^3_m(OR^4)nX^2_{z-m-n}$ where $R^3$ and $R^4$ each are hydrocarbon radicals having 1 to 24 carbon atoms, $X^2$ is a halogen atom, $Me^2$ is an element for the Groups I to III in the Periodic Table, z is the valence, and m and n are $0 \leqq m \leqq z$, $0 \leqq n \leqq z$, $0 \leqq m+n \leqq z$.

(3) an organocyclic compound having two or more conjugated double bonds.

(4) a compound selected from the group consisting of A) a modified organoaluminum compound containing Al-O-Al bond and with at least one branched-chain alkyl group attached to aluminum atom, B) a boric compound, C) a compound containing C-X bond where X is a halogen atom and D) a sulfide; and

(5) an inorganic carrier or particulate polymer carrier or mixture.

The present invention, in the third aspect thereof, a process for preparing an olefin polymer, characterized by homopolymerizing or copolymerizing an olefin or olefins in the presence of a catalyst comprising a component obtained by contacting the following components (1) to (5):

(1) a compound represented by the general formula $Me^1R^1_p(OR^2)_qX^1_{4-p-q}$ where $R^1$ and $R^2$ each are hydrocarbon radicals having 1 to 24 carbon atoms, $X^1$ is a halogen atom, $Me^1$ is Zr, Ti, or Hf and p, q are $0 \leqq p \leqq 4$, $0 \leqq q \leqq 4$, $0 \leqq p+q \leqq 4$.

(2) a compound represented by the general formula $Me^2R^3_m(OR^4)_nX^2_{z-m-n}$ where $R^3$ and $R^4$ each are hydrocarbon radicals having 1 to 24 carbon atoms, $X^2$ is a halogen atom, $Me^2$ is an element for the Groups I to III in the Periodic Table, z is the valence, and m and n are $0 \leqq m \leqq z$, $0 \leqq n \leqq z$, $0 \leqq m+n \leqq z$.

(3) an organocyclic compound having two or more conjugated double bonds; and

(4) a compound selected from the group consisting of A) a modified organoaluminum compound containing Al-O-Al bond and with at least one branched-chain alkyl group attached to aluminum atom, B) a boric compound, C) a compound containing C-X bond where X is a halogen atom and D) a sulfide.

(5) a modified organoaluminum compound derived from reacting an organoaluminum compound with water and having 1-100 Al-O-Al bonds in the molecule.

The present invention, in the fourth aspect thereof, a process for preparing an olefin polymer, characterized by homopolymerizing or copolymerizing an olefin or olefins in the presence of a catalyst comprising a component obtained by contacting the following components (1) to (6):

(1) a compound represented by the general formula $Me^1R^1_p(OR^2)_qX^1_{4-p-q}$ where $R^1$ and $R^2$ each are hydrocarbon radicals having 1 to 24 carbon atoms, $X^1$ is a halogen atom, $Me^1$ is Zr, Ti, or Hf and p, q are $0 \leqq p \leqq 4$, $0 \leqq q \leqq 4$, $0 \leqq p+q \leqq 4$.

(2) a compound represented by the general formula $Me^2R^3_m(OR^4)_nX^2_{z-m-n}$ where $R^3$ and $R^4$ each are hydrocarbon radicals having 1 to 24 carbon atoms, $X^2$ is a halogen atom, $Me^2$ is an element for the Groups I to III in the Periodic Table, z is the valence, and m and n are $0 \leqq m \leqq z$, $0 \leqq n \leqq z$, $0 \leqq m+n \leqq z$.

(3) an organocyclic compound having two or more conjugated double bonds; and

(4) a compound selected from the group consisting of A) a modified organoaluminum compound containing Al-O-Al bond and with at least one branched-chain alkyl group attached to aluminum atom, B) a boric compound, C) a compound containing C-X bond where X is a halogen atom and D) a sulfide.

(5) an inorganic carrier or particulate polymer carrier or mixture.

(6) a modified organoaluminum compound derived from reacting an organoaluminum compound with water and having 1-100 Al-O-Al bonds in the molecule.

The catalyst component used in the process of the present invention is high in its activity based on the transition metal even when the proportion of aluminoxane relative to the transition metal is made low, can afford a polyolefin having a high molecular weight and a relatively wide molecular weight distribution, and permits the said molecular weight distribution to be controlled freely. Particularly, copolymers, e.g. ethylene/$\alpha$-olefin copolymers, obtained using such catalyst component have a narrow composition distribution.

When the above mentioned inorganic carrier or particulate polymer is used, a narrow particle size distribution and good particle shape can also be attained.

Due to such advantages, the resultant polymer exhibits excellent moldability. It can be molded into a film without substantial tackiness at a high molding speed by means of T-die or inflation process. The film thus molded has good transparency, anti-blocking property and strength and the film obtained by inflation process has also a good lip opening property.

## Detailed Description of the Invention

The present invention will be described in detail hereinunder.

As mentioned above, the catalyst component for the polymerization of olefins according to the present invention is obtained by mutually contacting (1) a compound of the general formula $Me^1R^1_p(OR^2)_qX^1_{4-p-q}$, (2) a compound of the general formula $Me^2R^3_m(OR^4)_nX^2_{z-m-n}$, (3) an organocyclic compound having two or more conjugated double bonds; and (4) a compound selected from the group consisting of A) a modified organoaluminum compound containing Al-O-Al bond and with at least one branched-chain alkyl group attached to aluminum atom, B) a boric compound, C) a compound containing C-X bond where X is a halogen atom and D) a sulfide and optionally (5) an inorganic carrier or particulate polymer carrier or mixture, (6) a modified organoaluminum compound derived from reacting an organoaluminum compound with water and having 1-100 Al-O-Al bonds in the molecule.

Reference will first be made to component (1) which has the general formula $Me^1R^1_p(OR^2)_qX^1_{4-p-q}$. In this formula, $R^1$ and $R^2$ are each hydrocarbon radical having 1 to 24, preferably 1 to 12, more preferably 1 to 8, carbon atoms. As examples of such hydrocarbon radical, there are mentioned alkyl groups such as methyl, ethyl, propyl, butyl, pentyl, hexyl and octyl; alkenyl groups such as vinyl and allyl; aryl groups such as phenyl, tolyl and xylyl; aralkyl groups such as benzyl, phenethyl, styryl and neophyl; $X^1$ is a halogen atom, which is fluorine, iodine, chlorine or bromine. $Me^1$ is Zr, Ti, or Hf, with Zr being preferred. p and q are $0 \leqq p \leqq 4$, $0 \leqq q$

≦ 4, 0 ≦ p+q ≦ 4, preferably 0 < p+q ≦ 4.

Examples of the compound represented by the above general formula include tetramethyl zirconium, tetraethyl zirconium, tetrapropyl zirconium, tetra-n-butyl zirconium, tetrapentyl zirconium, tetraphenyl zirconium, tetratolyl zirconium, tetrabenzyl zirconium, tetramethoxy zirconium, tetraethoxy zirconium, tetrapropoxy zirconium, tetrabutoxy zirconium, tetraphenoxy zirconium, tetratolyloxy zirconium, tetrapentyloxy zirconium, tetrabenzyloxy zirconium, tetraallyl zirconium, tetraneophyl zirconium, trimethylmonochloro zirconium, triethylmonochloro zirconium, tripropylmonochloro zirconium, tri-n-butylmonochloro zirconium, tribenzylmonochloro zirconium, dimethyldichloro zirconium, diethyldichloro zirconium, di-n-butyldichloro zirconium, dibenzyldichloro zirconium, monomethyltrichloro zirconium, monoethyltrichloro zirconium, mono-n-butyltrichloro zirconium, monobenzyltrichloro zirconium, tetrachloro zirconium, trimethoxymonochloro zirconium, dimethoxydichloro zirconium, monomethoxytrichloro zirconium, tetraethoxy zirconium, triethoxymonochloro zirconium, diethoxydichloro zirconium, monoethoxytrichloro zirconium, triisopropoxymonochloro zirconium, diisopropoxydichloro zirconium, monoisopropoxytrichloro zirconium, tetra-n-butoxy zirconium, tri-n-butoxymonochloro zirconium, di-n-butoxydichloro zirconium, mono-n-butoxytrichloro zirconium, tripentoxymonochloro zirconium, dipentoxydichloro zirconium, monopentoxytrichloro zirconium, triphenoxymonochloro zirconium, diphenoxydichloro zirconium, monophenoxytrichloro zirconium, tritolyloxymonochloro zirconium, ditolyloxydichloro zirconium, monotolyloxytrichloro zirconium, tribenzyloxymonochloro zirconium, dibenzyloxydichloro zirconium, monobenzyloxytrichloro zirconium, trimethylmonobromo zirconium, triethylmonobromo zirconium, tripropyl-monobromo zirconium, tri-n-butylmonobromo zirconium, tribenzylmonobromo zirconium, dimethyldibromo zirconium, diethyldibromo zirconium, di-n-butyldibromo zirconium, dibenzyldibromo zirconium, monomethyltribromo zirconium, monoethyltribromo zirconium, mono-n-butyltribromo zirconium, monobenzyltribromo zirconium, tetrabromo zirconium, trimethoxymonobromo zirconium, dimethoxydibromo zirconium, monomethoxytribromo zirconium, triethoxymonobromo zirconium, diethoxydibromo zirconium, monoethoxytribromo zirconium, triisopropoxymonobromo zirconium, diisopropoxydibromo zirconium, monoisopropoxytribromo zirconium, tri-n-butoxymonobromo zirconium, di-n-butoxydibromo zirconium, mono-n-butoxytribromo zirconium, tripentoxymonobromo zirconium, dipentoxydibromo zirconium, monopentoxytribromo zirconium, triphenoxymonobromo zirconium, diphenoxydibromo zirconium, monophenoxytribromo zirconium, tritolyloxymonobromo zirconium, ditolyloxydibromo zirconium, monotolyloxytribromo zirconium, tribenzyloxymonobromo zirconium, dibenzyloxydibromo zirconium, monobenzyloxytribromo zirconium, trimethylmonoiodo zirconium, triethylmonoiodo zirconium, tripropylmonoiodo zirconium, tri-n-butylmonoiodo zirconium, tribenzylmonoiodo zirconium, dimethyldiiodo zirconium, diethyldiiodo zirconium, di-n-butyldiiodo zirconium, dibenzyldiiodo zirconium, monomethyltriiodo zirconium, monoethyltriiodo zirconium, mono-n-butyltriiodo zirconium, monobenzyltriiodo zirconium, tetraiodo zirconium, trimethoxymonoiodo zirconium, dimethoxymonoiodo zirconium, monomethoxytriiodo zirconium, triethoxydiiodo zirconium, diethoxydiiodozirconium, monoethoxytriiodo zirconium, triisopropoxymonoiodo zirconium, diisopropoxydiiodo zirconium, monoisoproxytriiodo zirconium, tri-n-butoxymonoiodo zirconium, di-n-butoxydiiodo zirconium, mono-n-butoxytriiodo zirconium, tripentoxymonoiodo zirconium, dipentoxydiiodo zirconium, monopentoxytriiodo zirconium, triphenoxymonoiodo zirconium, diphenoxydiiodo zirconium, monophenoxytriiodo zirconium, tritolyloxymonoiodo zirconium, ditolyloxydiiodo zirconium, monotolyloxytriiodo zirconium, tribenzyloxymonoiodo zirconium, dibenzyloxydiiodo zirconium, monobenzyloxytriiodo zirconium, tribenzylmonomethoxy zirconium, tribenzylmonoethoxy zirconium, tribenzylmonopropoxy zirconium, tribenzylmonobutoxy zirconium, tribenzylmonophenoxy zirconium, dibenzyldimethoxy zirconium, dibenzyldiethoxy zirconium, dibenzyldipropoxy zirconium, dibenzyldibutoxy zirconium, dibenzyldiphenoxy zirconium, monobenzyltrimethoxy zirconium, monobenzyltriethoxy zirconium, monobenzyltripropoxy zirconium, monobenzyltributoxy zirconium, monobenzyltriphenoxy zirconium, trineophylmonomethoxy zirconium, trineophylmonoethoxy zirconium, trineophylmonopropoxy zirconium, trineophylmonobutoxy zirconium, trineophylmonophenoxy zirconium, dineophyldimethoxy zirconium, dineophyldiethoxy zirconium, dineophyldipropoxy zirconium, dineophyldibutoxy zirconium, dineophyldiphenoxy zirconium, mononeophyltrimethoxy zirconium, mononeophyltriethoxy zirconium, mononeophyltripropoxy zirconium, mononeophyltributoxy zirconium, mononeophyltriphenoxy zirconium, tetramethyl titanium, tetraethyl titanium, tetrapropyl titanium, tetra-n-butyl titanium, tetrapentyl titanium, tetraphenyl titanium, tetratolyl titanium, tetrabenzyl titanium, tetramethoxy titanium, tetraethoxy titanium, tetrapropoxy titanium, tetrabutoxy titanium, tetraphenoxy titanium, tetratolyloxy titanium, tetrapentyloxy titanium, tetrabenzyloxy titanium, tetraallyl titanium, tetraneophyl titanium, trimethylmonochloro titanium, triethylmonochloro titanium, tripropylmonochloro titanium, tri-n-butylmonochloro titanium, tribenzylmonochloro titanium, dimethyldichloro titanium, diethyldichloro titanium, di-n-butyldichloro titanium, dibenzyldichloro titanium, monomethyltrichloro titanium, monoethyltrichloro titanium, mono-n-butyltrichloro titanium, monobenzyltrichloro titanium, tetrachloro titanium, trimethoxymonochloro titanium, dimethoxydichloro titanium, dimethoxydichloro titanium, monomethoxytrichloro titanium, tetraethoxy titanium, triethoxymonochloro titanium, diethoxydichloro titanium, monoethoxytrichloro titanium, triisopropoxymonochloro titanium, diisopropoxydichloro titanium,

monoisopropoxytrichloro titanium, tetra-n-butoxy titanium, tri-n-butoxymonochloro titanium, di-n-butoxydichloro titanium, mono-n-butoxytrichloro titanium, tripentoxymonochloro titanium, dipentoxydichloro titanium, monopentoxytrichloro titanium, triphenoxymonochloro titanium, diphenoxydichloro titanium, monophenoxytrichloro titanium, tritolyloxy monochloro titanium, ditolyloxydichloro titanium, monotolyloxytrichloro titanium, tribenzyloxymonochloro titanium, dibenzyloxydichloro titanium, monobenzyloxytrichloro titanium, triethylmonobromo titanium, tripropylmonobromo titanium, tri-n-butylmonobromo titanium, tribenzylmonobromo titanium, dimethyldibromo titanium, diethyldibromo titanium, di-n-butyldibromo titanium, dibenzyldibromo titanium, monomethyltribromo titanium, monoethyltribromo titanium, mono-n-butyltribromo titanium, monobenzyltribromo titanium, tetrabromo titanium, trimethoxymonobromo titanium, dimethoxydibromo titanium, monomethoxytribromo titanium, triethoxymonobromo titanium, diethoxydibromo titanium, monoethoxytribromo titanium, triisopropoxymonobromo titanium, diisopropoxydibromo titanium, monoisopropoxytribromo titanium, tri-n-butoxymonobromo titanium, di-n-butoxydibromo titanium, mono-n-butoxytribromo titanium, tripentoxymonobromo titanium, dipentoxydibromo titanium, monopentoxytribromo titanium, triphenoxymonobromo titanium, diphenoxydibromo titanium, monophenoxytribromo titanium, tritolyloxymonobromo titanium, ditolyloxydibromo titanium, monotolyloxytribromo titanium, tribenzyloxymonobromo titanium, dibenzyloxydibromo titanium, monobenzyloxytribromo titanium, trimethylmonoiodo titanium, triethylmonoiodo titanium, tripropylmonoiodo titanium, tri-n-butylmonoiodo titanium, tribenzylmonoiodo titanium, dimethyldiiodo titanium, diethyldiiodo titanium, di-n-butyldiiodo titanium, dibenzyldiiodo titanium, monomethyltriiodo titanium, monoethyltriiodp titanium, mono-n-butyltriiodo titanium, monobenzyltriiodo titanium, tetraiodo titanium, trimethoxymonoiodo titanium, dimethoxydiiodo titanium, monomethoxytriiodo titanium, triethoxymonoiodo titanium, diethoxydiiodo titanium, monoethoxytriiodo titanium, triisopropoxymonoiodo titanium, diisopropoxydiiodo titanium, monoisopropoxytriiodo titanium, tri-n-butoxymonoiodo titanium, di-n-butoxydiiodo titanium, mono-n-butoxytriiodo titanium, tripentoxymonoiodo titanium, dipentoxydiiodo titanium, monopentoxytriiodo titanium, triphenoxymonoiodo titanium, diphenoxydiiodo titanium, monophenoxytriiodo titanium, tritolyloxymonoiodo titanium, ditolyloxydiiodo titanium, monotolyloxytriiodo titanium, tribenzyloxymonoiodo titanium, dibenzyloxydiiodo titanium, monobenzyloxytriiodo titanium, tribenzylmonomethoxy titanium, tribenzylmonoethoxy titanium, tribenzylmonopropoxy titanium, tribenzylmonobentoxy titanium, tribenzylmonophenoxy titanium, dibenzyldimethoxy titanium, dibenzyldiethoxy titanium, dibenzyldipropoxy titanium, dibenzyldibutoxy titanium, dibenzyldiphenoxy titanium, monobenzyltrimethoxy titanium, monobenzyltriethoxy titanium, monobenzyltripropoxy titanium, monobenzyltributoxy titanium, monobenzyltriphenoxy titanium, trineophylmonomethoxy titanium, trineophylmonoethoxy titanium, trineophylmonobutoxy titanium, trineophylmonophenoxy titanium, dineophyldimethoxy titanium, dineophyldiethoxy titanium, dineophyldipropoxy titanium, dineophyldibutoxy titanium, dineophyldiphenoxy titanium, mononeophyltrimethoxy titanium, mononeophyltriethoxy titanium, mononeophyltripropoxy titanium, mononeophyltributoxy titanium, mononeophyltriphenoxy titanium, tetramethyl hafnium, tetraethyl hafnium, tetrapropyl hafnium, tetra-n-butyl hafnium, tetrapentyl hafnium, tetraphenyl hafnium, tetratolyl hafnium, tetrabenzyl hafnium, tetramethoxy hafnium, tetraethoxy hafnium, tetrapropoxy hafnium, tetrabutoxy hafnium, tetraphenoxy hafnium, tetratolyloxy hafnium, tetrapentyloxy hafnium, tetrabenzyloxy hafnium, tetraallyl hafnium, tetraneophyl hafnium, trimethylmonochloro hafnium, triethylmonochloro hafnium, tripropylmonochloro hafnium, tri-n-butylmonochloro hafnium, tribenzylmonochloro hafnium, dimethyldichloro hafnium, diethyldichloro hafnium, di-n-butyldichloro hafnium, dibenzyldichloro hafnium, monomethyltrichloro hafnium, monoethyltrichloro hafnium, mono-n-butyltrichloro hafnium, monobenzyltrichloro hafnium, tetrachloro hafnium, trimethoxymonochloro hafnium, dimethoxydichloro hafnium, monomethoxytrichloro hafnium, tetraethoxy hafnium, triethoxymonochloro hafnium, diethoxydichloro hafnium, monoethoxytrichloro hafnium, triisopropoxymonochloro hafnium, diisopropoxydichloro hafnium, monoisopropoxytrichloro hafnium, tetra-n-butoxy hafnium, tri-n-butoxymonochloro hafnium, di-n-butoxydichloro hafnium, mono-n-butoxytrichloro hafnium, tripentoxymonochloro hafnium, dipentoxydichloro hafnium, monopentoxytrichloro hafnium, triphenoxymonochloro hafnium, diphenoxydichloro hafnium, monophenoxytrichloro hafnium, tritolyloxymonochloro hafnium, ditolyloxydichloro hafnium, monotolyloxytrichloro hafnium, tribenzyloxymonochloro hafnium, dibenzyloxydichloro hafnium, monobenzyloxytrichloro hafnium, trimethylmonobromo hafnium, trietylmonobromo hafnium, tripropylmonobromo hafnium, tri-n-butylmonobromo hafnium, tribenzylmonobromo hafnium, dimethyldibromo hafnium, diethyldibromo hafnium, di-n-butyldibromo hafnium, dibenzyldibromo hafnium, monomethyltribromo hafnium, monoethyltribromo hafnium, mono-n-butyltribromo hafnium, monobenzyltribromo hafnium, tetrabromo hafnium, trimethoxymonobromo hafnium, dimethoxydibromo hafnium, monomethoxytribromo hafnium, triethoxymonobromo hafnium, diethoxydibromo hafnium, monoethoxytribromo hafnium, triisopropoxymonobromo hafnium, diisopropoxydibromo hafnium, monoisopropoxytribromo hafnium, tri-n-butoxymonobromo hafnium, di-n-butoxydibromo hafnium, mono-n-butoxytribromo hafnium, tripentoxymonobromo hafnium, dipentoxydibromo hafnium, monopentoxytribromo hafnium, triphenoxymonobromo hafnium, diphenoxydibromo hafnium, monophenoxytribromo hafnium, tritolyloxymonobromo hafnium, ditolyloxydibromo hafnium, monotolyloxytribromo hafnium, tribenzyloxymonobromo hafnium, dibenzyloxydibromo hafnium, monobenzyloxytribromo hafnium, trimethylmonoiodo hafnium, triethylmonoiodo hafnium, tripropylmonoiodo hafnium, tri-n-butylmonoiodo hafnium, tribenzylmonoiodo hafnium, dimethyldiiodo hafnium, diethyldiiodo hafnium, di-n-butyldiiodo hafnium, dibenzyldiiodo hafnium, monomethyltriiodo hafnium, monoethyltriiodo hafnium, mono-n-butyltriiodo hafnium, monobenzyltriiodo hafnium, tetraiodo hafnium, trimethoxymonoiodo hafnium, dimethoxydiiodo hafnium, monomethoxytriiodo hafnium, triethoxymonoiodo hafnium, diethoxydiiodo hafnium, monoethoxytriiodo hafnium, triisopropoxymonoiodo hafnium, diisopropoxydiiodo hafnium, monoisopropoxytriiodo hafnium, tri-n-butoxymonoiodo hafnium, di-n-butoxydiiodo hafnium, mono-n-butoxytriiodo hafnium, tripentoxymonoiodo hafnium, dipentoxydiiodo hafnium, monopentoxytriiodo hafnium, triphenoxymonoiodo hafnium, diphenoxydiiodo hafnium, monophenoxytriiodo hafnium, tritolyloxymonoiodo hafnium, ditolyloxydiiodo hafnium, monotolyloxytriiodo hafnium, tribenzyloxymonoiodo hafnium, dibenzyloxydiiodo hafnium, monobenzyloxytriiodo hafnium, tribenzylmonomethoxy hafnium, tribenzylmonoethoxy hafnium, tribenzylmonopropoxy hafnium, tribenzylmonobentoxy hafnium, tribenzylmonophenoxy hafnium, dibenzyldimethoxy hafnium, dibenzyldiethoxy hafnium, dibenzyldipropoxy hafnium, dibenzyldibutoxy hafnium, dibenzyldiphenoxy hafnium, monobenzyltrimethoxy hafnium, monobenzyltriethoxy hafnium, monobenzyltripropoxy hafnium, monobenzyltributoxy hafnium, monobenzyltriphenoxy hafnium, trineophylmonomethoxy hafnium, trineophylmonoethoxy hafnium, trineophylmonobutoxy hafnium, trineophylmonophenoxy hafnium, dineophyldimethoxy hafnium, dineophyldiethoxy hafnium, dineophyldipropoxy hafnium, dineophyldibutoxy hafnium, dineophyldiphenoxy hafnium, mononeophyltrimethoxy hafnium, mononeophyltriethoxy hafnium, mononeophyltripropoxy hafnium, mononeophyltributoxy hafnium, and mononeophyltriphenoxy hafnium.

Particularly, tetramethylzirconium, tetraethylzirconium, tetrabenzylzirconium, tetrapropoxyzirconium, tetrabutoxyzirconium and tetrachlorozirconium are preferred. More preferred are compounds having the formula $Zr(OR)_4$ such as tetrapropoxyzirconium and tetrabutoxyzirconium. These compounds may be used as a mixture of two or more.

The following description is now provided about component (2) of the general formula $Me^2R^3_m(OR^4)_nX^2_{z-m-n}$. In this formula, $R^3$ and $R^4$ are a hydrocarbon radical having 1 to 24, preferably 1 to 12, more preferably 1 to 8, carbon atoms. As examples of such hydrocarbon radical there are mentioned alkyl groups such as methyl, ethyl, propyl, butyl, pentyl, hexyl and octyl; alkenyl groups such as vinyl and allyl; aryl groups such as phenyl, tolyl and xylyl; aralkyl groups such as benzyl, phenethyl, styryl and neophyl; $X^1$ is a halogen atom, which is fluorine, iodine, chlorine or bromine. As examples of such alkoxy group there are mentioned methoxy, ethoxy, propoxy and butoxy. $Me^2$ is a Group I to III element in the Periodic Table, examples of which include lithium, sodium, potassium, magnesium, calcium, zinc, boron and aluminum, z is the valence of $Me^2$, and m and n are $0 < m \leqq 3$, $0 < n \leqq 3$, $0 < m+n \leqq 3$ preferably $0 < m+n < 3$, provided m satisfies the relation of $m \leqq z$, $n \leqq z$, $m+n \leqq z$.

Examples of the compound represented by this general formula include methyl lithium, ethyl lithium, n-propyl lithium, methyl lithium, ethyl lithium, n-propyl lithium, isopropyl lithium, n-butyl lithium, t-butyl lithium, pentyl lithium, octyl lithium, phenyl lithium, benzyl lithium, dimethyl magnesium, diethyl magnesium, di-n-propyl magnesium, diisopropyl magnesium, di-n-butyl magnesium, di-t-butyl magnesium, dipentyl magnesium, dioctyl magnesium, diphenyl magnesium, dibenzyl magnesium, methyl magnesium chloride, ethyl magnesium chloride, isopropyl magnesium chloride, n-propyl magnesium chloride, n-butyl magnesium chloride, t-butyl magnesium chloride, pentyl magnesium chloride, octyl magnesium chloride, phenyl magnesium chloride, benzyl magnesium chloride, methyl magnesium bromide, methyl magnesium iodide, ethyl magnesium bromide, ethyl magnesium iodide, isopropyl magnesium bromide, isopropyl magnesium iodide, n-propyl magnesium bromide, n-propyl magnesium iodide, n-butyl magnesium bromide, n-butyl magnesium iodide, t-butyl magnesium bromide, t-butyl magnesium iodide, pentyl magnesium bromide, pentyl magnesium iodide, octyl magnesium bromide, octyl magnesium iodide, phenyl magnesium bromide, phenyl magnesium iodide, dimethyl zinc, diethyl zinc, di-n-propyl zinc, di-isopropyl zinc, di-n-butyl zinc, di-t-butyl zinc, dipentyl zinc, dioctyl zinc, diphenyl zinc, dibenzyl zinc, trimethyl boron, triethyl boron, tri-n-propyl boron, triisopropyl boron, tri-n-butyl boron, tri-t-butyl boron, tripentyl boron, trioctyl boron, triphenyl boron, tribenzyl boron, trimethyl aluminum, triethyl aluminum, diethyl aluminum chloride, diethyl aluminum bromide, diethyl aluminum fluoride, diethyl aluminum iodide, ethyl aluminum dichloride, ethyl aluminum dibromide, ethyl aluminum difluoride, ethyl aluminum diiodide, tripropyl aluminum, dipropyl aluminum chloride, dipropyl aluminum bromide, dipropyl aluminum fluoride, dipropyl aluminum iodide, propyl aluminum dichloride, propyl aluminum dibromide, propyl aluminum difluoride, propyl aluminum diiodide, triisopropyl aluminum, diisopropyl aluminum chloride, diisopropyl aluminum bromide, diisopropyl aluminum fluoride, diisopropyl aluminum iodide, ethyl aluminum sesquichloride, ethyl aluminum sesquibromide, propyl aluminum sesquichloride, propyl aluminum sesquibromide, n-butyl aluminum sesquichloride, n-butyl aluminum sesquibromide, isopropyl aluminum dichloride, isopropyl aluminum dibromide, isopropyl aluminum difluoride, isopropyl aluminum diiodide, tributyl aluminum, dibutyl aluminum chloride, dibutyl aluminum bromide, dibutyl aluminum fluoride, dibutyl aluminum iodide, butyl aluminum dichloride, butyl alminium

dibromide, butyl aluminum difluoride, butyl aluminum diiodide, tri-sec-butyl aluminum, di-sec-butyl aluminum chloride, di-sec-butyl aluminum bromide, di-sec-butyl aluminum fluoride, di-sec-butyl aluminum iodide, sec-butyl aluminum dichloride, sec-butyl aluminum dibromide, sec-butyl aluminum difluoride, sec-butyl aluminum diiodide, tri-t-butyl aluminum, di-t-butyl aluminium chloride, di-t-butyl aluminum bromide, di-t-butyl aluminum fluoride, di-t-butyl aluminum iodide, t-butyl aluminum dichloride, t-butyl aluminum dibromide, t-butyl aluminum difluoride, t-butyl aluminum diiodide, triisobutyl aluminum, diisobutyl aluminum chloride, diisobutyl aluminum bromide, diisobutyl aluminum fluoride, diisobutyl aluminum iodide, isobutyl aluminum dichloride, isobutyl aluminum dibromide, isobutyl aluminum difluoride, isobutyl aluminum diiodide, trihexyl aluminum, dihexyl aluminum chloride, dihexyl aluminum bromide, dihexyl aluminum fluoride, dihexyl aluminum iodide, hexyl aluminum dichloride, hexyl aluminum dibromide, hexyl aluminum difluoride, hexyl aluminum diiodide, tripentyl aluminum, dipentyl aluminum chloride, dipentyl aluminum bromide, dipentyl aluminum fluoride, dipentyl aluminum iodide, pentyl aluminum dichloride, pentyl aluminum dibromide, pentyl aluminum difluoride, pentyl aluminum diiodide, methyl aluminum methoxide, methyl aluminum ethoxide, methyl aluminum propoxide, methyl aluminum butoxide, dimethyl aluminum methoxide, dimethyl aluminum ethoxide, dimethyl aluminum butoxide, ethyl aluminum methoxide, ethyl aluminum ethoxide, ethyl aluminum propoxide, ethyl aluminum butoxide, diethyl aluminum methoxide, diethyl aluminum ethoxide, diethyl aluminum propoxide, diethyl aluminum butoxide, propyl aluminum methoxide, propyl aluminum ethoxide, propyl aluminum propoxide, propyl aluminum butoxide, dipropyl aluminum methoxide, dipropyl aluminum ethoxide, dipropyl aluminum propoxide, dipropyl aluminum butoxide, butyl aluminum methoxide, butyl aluminum ethoxide, butyl aluminum propoxide, butyl aluminum butoxide, dibutyl aluminum methoxide, dibutyl aluminum ethoxide, dibutyl aluminum propoxide, and dibutyl aluminum butoxide.

As component (3) there is used an organocyclic compound having two or more conjugated double bonds. As examples thereof are included cyclic hydrocarbons having two or more, preferably 2 to 4, more preferably 2 to 3, conjugated double bonds and a total number of carbon atoms of 4 to 24, preferably 4 to 12; cyclic hydrocarbons obtained by substituting the said cyclic hydrocarbons partially with 1 to 6 hydrocarbon radicals (typically alkyl or aralkyl groups having 1 to 12 carbon atoms); organosilicon compounds having two or more, preferably 2 to 4, more preferably 2 to 3, conjugated double bonds and having a cyclic hydrocarbon radical which has a total number of carbon atoms of 4 to 24, preferably 4 to 12; organosilicon compounds having the said cyclic hydrocarbon group substituted partially with 1 to 6 hydrocarbon radicals; and alkali metal salts (e.g. sodium salts or lithium salts) of these compounds.

The organosilicon compounds having such cyclic hydrocarbon group can be expressed by the following general formula:

$$(Cp)_L SiR_{4-L}$$

where Cp represents the above cyclic hydrocarbon group examples of which are cyclopentadienyl, substituted cyclopentadienyl, indenyl and substituted indenyl; R is a hydrocarbon group having 1 to 24, preferably 1 to 12, carbon atoms, examples of which are alkyl groups such as methyl, ethyl, propyl, isopropyl, butyl, t-butyl, hexyl and octyl, alkoxy groups such as methoxy, ethoxy, propoxy and butoxy, aryl groups such as phenyl, aryloxy groups such as phenoxy, and aralkyl groups such as benzyl, or hydrogen; and L is $1 \leqq L \leqq 4$, preferably $1 \leqq L \leqq 3$.

As examples of organocyclic hydrocarbons employable as component (3) there are mentioned cyclopentadiene, substituted cyclopentadienes such as methylcyclopentadiene, ethylcyclopentadiene, t-butylcyclopentadiene, hexylcyclopentadiene, octylcyclopentadiene, 1,2-dimethylcyclopentadiene, 1,3-dimethylcyclopentadiene, 1,2,4-trimethylcyclopentadiene, 1,2,3,4-tetramethylcyclopentadiene and pentamethylcyclopentadiene, indene, substituted indenes such as 4-methyl-1-indene, 4,7-dimethylindene and 4,5,6,7-tetrahydroindene, cyclopolyenes or substituted cyclopolyenes, having 7 to 24 carbon atoms, such as cycloheptatriene, methylcycloheptatriene, cyclooctatetraene, methylcyclooctatetraene, azulene, methylazulene, ethylazulene, fluorene and methylfluorene, monocyclopentadienylsilane, dicyclopentadienylsilane, tricyclopentadienylsilane, tetracyclopentadienylsilane, monocyclopentadienylmonomethylsilane, monocyclopentadienylmonoethylsilane, monocyclopentadienyldimethylsilane, monocyclopentadienyldiethylsilane, monocyclopentadienyltrimethylsilane, monocyclopentadienyltriethylsilane, monocyclopentadienylmonomethoxysilane, monocyclopentadienylmonoethoxysilane, monocyclopentadienylmonophenoxysilane, dicyclopentadienylmonomethylsilane, dicyclopentadienyl- monoethylsilane, dicyclopentadienyldimethylsilane, dicyclopentadienyldiethylsilane, dicyclopentadienyl-methylethylsilane, dicyclopentadienyldipropylsilane, dicyclopentadienylethylpropylsilane, dicyclopentadienyldiphenylsilane, dicyclopentadienylphenylmethylsilane, dicyclopentadienylmonomethoxysilane, dicyclopentadienylmonoethoxysilane, tricyclopentadienylmonomethylsilane, tricyclopentadienylmonoethylsilane, tricyclopentadienylmonomethoxysilane, tricyclopentadienylmonoethoxysilane, 3-methylcyclopentadienylsilane, bis-3-methylcyclopentadienylsilane, 3-methylcyclopentadienylmethylsilane, 1,2-dimethylcyclopentadienylsilane, 1,3-dimethylcyclopentadienylsilane, 1,2,4-trimethylcyclopentadienylsilane, 1,2,3,4-tetramethylcyclopentadienylsilane, pentamethylcyclopentadienylsilane, monoindenylsilane, diindenylsilane, triindenylsilane, tetraindenylsilane, monoindenylmonomethylsilane, monoindenylmonoethylsilane, monoindenyldimethylsilane, monoindenyldiethylsilane, monoindenyltrimethylsilane, monoindenyltriethylsilane, monoindenylmonomethoxysilane, monoindenylmonoethoxysilane, monoindenylmonophenoxysilane, monoindenylmonomethylsilane, diindenylmonoethylsilane, diindenyldimethylsilane, diindenyldiethylsilane, diindenylmethylethylsilane, diindenyldipropylsilane, diindenylethylpropylsilane, diindenyldiphenylsilane, diindenylphenylmethylsilane, diindenylmonomethoxysilane, diindenylmonoethoxysilane, triindenylmonomethylsilane, triindenylmonoethylsilane, triindenylmonomethoxysilane, triindenylmonoethoxysilane, 3-methylindenylsilane, bis-3-methylindenylsilane, 3-methylindenylmethylsilane, 1,2-dimethylindenylsilane, 1,3-dimethylindenylsilane, 1,2,4-trimethylindenylsilane, 1,2,3,4-tetramethylindenylsilane and pentamethylindenylsilane.

Any of the above compounds bonded through alkylene groups (having usually 2 to 8, preferably 2 to 3, carbon atoms) are also mentioned as employable examples of component (3) in the invention. More concrete examples include bisindenylethane, bis(4,5,6,7-tetrahydro-1-indenyl) ethane, 1,3-propadinylbisindene, 1,3-propadinylbisindene-(4,5, 6,7-tetrahydro)indene, propylenebis(1-indene), isopropyl(1-indenyl)cyclopentadiene, diphenylmethylene(9-fluorenyl)cyclopentadiene, and isopropylcyclopentadienyl-1-fluorene.

The following description is now provided about component (4) which is a compound selected from A) a modified organoaluminum compound containing Al-O-Al bond with at least one branched - chain alkyl group attached to aluminum atom, B) a boric compound C) a compound containing a C-X band where X is a halogen atom and D) a sulfide

The modified organoaluminum compound A) containing Al-O-Al bond and with at least one branched-chain alkyl group attached to aluminum atom is usually obtained by reacting an organoaluminum compound having a branched-chain alkyl group with water.

Such organoaluminum compound is preferably represented by the general formula $R_mR'_nAlX_{3-m-n}$, wherein R is a branched-chain alkyl group having 3 to 18, preferably 3 to 12, carbon atoms. As examples of such branched-chain alkyl group there are mentioned isopropyl, isobutyl, 2-methylbutylaluminum, 3-methylbutyl, 2-methylpentyl, 3-methylpentyl, 4-methylpentyl, 2-methylhexyl, 3-methylhexyl, 4-methylhexyl and 2-methylhexyl. In the same general formula, R' represents a hydrocarbon radical such as a straight-chain alkyl, alkenyl, aryl or aralkyl group having 1 to 18, preferably 1 to 12, carbon atoms. More concrete examples of such hydrocarbon radical include methyl, ethyl, propyl, butyl, pentyl, hexyl, octyl, decyl, vinyl, alyl, phenyl, tolyl, xylyl, benzyl, phenethyl, styryl and neophyl. In the above general formula, moreover, X is a hydrogen atom or a halogen atom such as fluorine, bromine or chlorine, and m and n satisfy the ranges of $0 < m \leqq 3$ and $0 \leqq n < 3$, preferably satisfy the condition of $m + n = 3$, more preferably the condition of $m = 3$.

As examples of the organoaluminum compound in question there are mentioned triisopropylaluminum, triisobutylaluminum, tri-2-methylbutylaluminum, tri-3-methylbutylaluminum, tri-2-methylpentylaluminum, tri-3-methylpentylaluminum, tri-4-methylpentylaluminum, tri-2-methylhexylaluminum, tri-3-methylhexylaluminum, tri-4-methylhexylaluminum, tri-2-ethylhexylisopropylaluminum, diisopropylmonomethylaluminum, diisopropylmonoethylaluminum, diisopropylmonoisobutylaluminum, diisopropylmono-n-butylaluminum, diisopropylmonophenylaluminum, diisopropylmonobenzylaluminum, diisopropylmonohydride, diisopropylmonochloroaluminum, diisopropylmonobromoaluminum, diisopropylmonoiodoaluminum, diisopropylmonofluoroaluminum, isopropyldimethylaluminum, isopropyldiethylaluminum, isopropyldiisobutylaluminum, isopropyldi-n-butylaluminum, isopropyldiphenylaluminum, isopropyldibenzylaluminum, isopropyldihydride, isopropyldichloroaluminum, isopropyldibromoaluminum, isopropyldiiodoaluminum, isopropyldifluoroaluminum, diisobutylmonomethylaluminum, diisobuylmonoethylaluminum, diisobutylmono-n-propylaluminum, diisobutylmono-n-butylaluminum, diisobutylmonophenylaluminum, diisobutylmonobenzylaluminum, diisobutyl monohydride, diisobutylmonochloroaluminum, diisobutylmonobromoaluminum, diisobutylmonoiodoaluminum, diisobutylmonofluoroaluminum, isobutyldimethylaluminum, isobutyldiethylaluminum, isobutyldi-n-butylaluminum, isobutyldiphenylaluminum, isobutyldibenzylaluminum, isobutyl dihydride, isobutyldichloroaluminum, isobuyldibromoaluminum, isobutyldiiodoaluminum, isobutyldifluoroaluminum, di-2-methylbutylmonomethylaluminum, di-2-methylbutylmonoethylaluminum, di-2-methylbutylmonochloroaluminum, di-2-methylbutylmonophenylaluminum, 2-methylbutyldimethylaluminum, 2-methylbutyldiethylaluminum and 2-methylbutyldichloroaluminum.

As mentioned previously, the modified organoaluminum compound used in the present invention is obtained usually by the reaction of the organoaluminum compound exemplified above and water. The water to be used in the reaction is not specially limited. Examples include not only the ordinary water but also various kinds of crystallization water contained in copper sulfate hydrates and aluminum sulfate hydrates, as well as components capable of producing water in the reaction system.

The modified organoaluminum compound usually has 1 to 100, preferably 1 to 50, Al-O-Al bonds in one molecule and is usually represented by the following general formula:

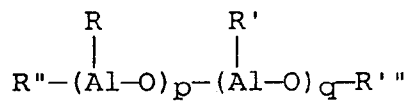

where R is the foregoing branched-chain alkyl group, R', R" and R'" are each a hydrocarbon group exemplified by the foregoing straight-chain alkyl, alkenyl, aryl and aralkyl groups, a hydrogen atom or a halogen atom (e.g. chlorine, fluorine or bromine), provided R" and R'" may conjointly form a ring (e.g. alkylene), p is usually $1 \leqq p \leqq 100$, preferably $2 \leqq p \leqq 50$, and q is $0 \leqq q \leqq 10$, preferably $0 \leqq q \leqq 50$.

The reaction of the organoaluminum compound and water is usually performed in an inert hydrocarbon. As examples of such inert hydrocarbon there are mentioned aliphatic, alicyclic and aromatic hydrocarbons, including pentane, cyclohexane, methylcyclohexane, benzene, toluene and xylene.

The reaction ratio [water ($H_2O$)/Al mole ratio] of water to the organoaluminum compound is usually in the range of 0.1/1 to 2.0/1, preferably 0.25/1 to 1.5/1, more preferably 0.5/1 to 1.25/1. The reaction temperature is usually in the range of -70° to 100°C, preferably -20° to 20°C, and the reaction time is usually in the range of 5 minutes to 24 hours, preferably 1 to 5 hours.

Typical boric compounds (B) include those having the following three general formulae:

$$[L'\text{-}H]^{+}[BAr_1Ar_2X_3X_4]^{-}$$

Wherein:

L' is a neutral Lewis base;

H is a hydrogen atom;

$[L'\text{-}H]^{+}$ is a Bronsted acid;

B is boron in a valence state of 3;

$Ar_1$ and $Ar_2$ are the same or different aromatic or substituted-aromatic hydrocarbon radicals containing from about 6 to about 20 carbon atoms and may be linked to each other through a stable bridging group; and

$X_3$ and $X_4$ are radicals selected, independently, from the group consisting of hydride radicals, halide radicals, hydrocarbyl radicals containing from 1 to about 20 carbon atoms, substituted-hydrocarbyl radicals, wherein one or more of the hydrogen atoms is replaced by a halogen atom, containing from 1 to about 20 carbon atoms.

$$[L'\text{-}H]\ [(CX)_a(BX')_mX''_b]^{c-}$$

Wherein:

L'-H is either $H^+$, ammonium or a substituted ammonium cation having up to 3 hydrogen atoms replaced with a hydrocarbyl radical containing from 1 to about 20 carbon atoms or a substituted-hydrocarbyl radical, wherein one or more of the hydrogen atoms is replaced by a halogen atom, containing from 1 to about 20 carbon atoms, phosphonium radicals, substituted-phosphonium radicals having up to 3 hydrogen atoms replaced with a hydrocarbyl radical containing from 1 to about 20 carbon atoms or a substituted-hydrocarbyl radical, wherein 1 or more of the hydrogen atoms is replaced by a halogen atom, containing from 1 to about 20 carbon atoms and the like;

B and C are, respectively, boron and carbon;

X, X' and X" are radicals selected, independently, from the Group consisting of hydride radicals, halide radicals, hydrocarbyl radicals containing from 1 to about 20 carbon atoms, substituted-hydrocarbyl radicals, wherein one or more of the hydrogen atoms is replaced by a halogen atom, containing from 1 to about 20 carbon atoms, organometalloid radicals wherein each hydrocarbyl substitution in the organo portion contains from 1 to about 20 carbon atoms and said metal is selected from Group IV-A of the Periodic Table of the Elements and the like;

a and b are integers $\geqq 0$;

c is an integer $\geqq 1$;

a + b + c = an even-numbered integer from 2 to about 8; and

m is an integer ranging from 5 to about 22.

$$[L'\text{-}H][[[(CX_3)_{a'}(BX_4)_{m'}(X_5)_{b'}]^{c'-}]_2M^{n+}]^{d-}$$

Wherein:

L'-H is either $H^+$, ammonium or a substituted ammonium radical having up to 3 hydrogen atoms replaced with a hydrocarbyl radical containing from 1 to about 20 carbon atoms or a substituted-hydrocarbyl radical, wherein 1 or more of the hydrogen atoms is replaced by a halogen atom, containing from 1 to about 20 carbon atoms, a phosphonium radical, a substituted-phosphonium radical having up to 3 hydrogen atoms replaced with a hydrocarbyl radical containing from 1 to about 20 carbon atoms or a substituted-hydrocarbyl radical, wherein 1 or more of the hydrogen atoms is replaced by a halogen atom, containing from 1 to about 20 carbon atoms

and the like;

B, C, M and H are, respectively, boron, carbon, a transition metal and hydrogen;

$X_3$, $X_4$, and $X_5$ are radicals selected, independently, from the Group consisting of hydride radicals, halide radicals, hydrocarbyl radicals containing from 1 to about 20 carbon atoms, substituted hydrocarbyl radicals, wherein one or more of the hydrogen atoms is replaced by a halogen atom, containing from 1 to about 20 carbon atoms, organo-metalloid radicals wherein each hydrocarbyl substitution in the organo portion or said organo-metalloid contains from 1 to about 20 carbon atoms and said metal is selected from Group IV-A of the Periodic Table of the Elements and the like;

a' and b' are the same or a different integer $\geqq 0$;

c' is an integer $\geqq 2$;

a' + b' + c' = an even-numbered integer from 4 to about 8;

m' is an integer from 6 to about 12;

n is an integer such that 2c' - n = d; and

d is an integer $\geqq 1$.

Examples of the boric compound include trialkyl-substituted ammonium salts such as triethylammonium tetra(phenyl)boron, tripropylammonium tetra(phenyl)boron, tri(n-butyl)ammonium tetra(phenyl)boron, trimethylammonium tetra(p-tolyl)boron, trimethylammonium tetra(o-tolyl)boron, tributylammonium tetra(pentafluorophenyl)boron, tripropylammonium tetra(o,p-dimethylphenyl)boron, tributylammonium tetra(m,m-dimethylphenyl)boron, tributylammonium tetra(p-trifluoromethylphenyl)boron, tributylammonium tetra(pentafluorophenyl)boron, tri(n-butylammonium tetra(o-tolyl)boron, and the like; N,N-dialkylanilinium salts such as N,N-dimethylanilinium tetra(phenyl)boron, N,N-diethylanilinium tetra(phenyl)boron, N,N-2,4,6-pentamethylanilinium tetra(phenyl)boron and the like; dialkyl ammonium salts such as di(n-propyl)ammonium tetra(pentafluorophenyl)boron, dicyclohexylammonium tetra(phenyl)boron; monohydrocarbyl-substituted ammonium salts such as methylammonium 1-carbododecaborate, ethylammonium 1-carbadodecaborate, propylammonium 1-carbadodecaborate, isopropylammonium 1-carbadodecaborate, (n-butyl)ammonium 1-carbadodecaborate, anilinium 1-carbadodecaborate, and (p-tolyl)ammonium 1-carbadodecaborate and the like; dihydrocarbyl-substituted ammonium salts such as dimethylammonium 1-carbadodecaborate, diethylammonium 1-carbadodecaborate, dipropylammonium 1-carbadodecaborate, diisopropylammonium 1-carbadodecaborate, di(n-butyl)ammonium 1-carbadodecaborate, diphenylammonium 1-carbadodecaborate, di(p-tolyl)ammonium 1-carbadodecaborate and the like; trihydrocarbyl-substituted ammonium salts such as trimethylammonium 1-carbadodecaborate, triethylammonium 1-carbadodecaborate, tripropylammonium 1-carbadodecaborate, tri(n-butyl)ammonium 1-carbadodecaborate, triphenylammonium 1-carbadodecaborate, tri(p-tolyl)ammonium 1-carbadodecaborate, N,N-dimethylanilinium 1-carbadodecaborate, N,N-diethylanilinium 1-carbadodecaborate and the like.

The compound containing C-X bond or a carbon-halogen bond-containing compound ((4)c) is a compound substituted at least one hydrogen atom of an organic compound by halogen atom(s). Compounds having the general formula $R^2$-$R^3{}_q$ and $R^2(A\text{-}R^3)_q$ are typical examples in which q is $1 \leqq q \leqq 4$, preferably $1 \leqq q \leqq 3$, A is a group selected from -O-, $-OSiR^4{}_2-$, $-C(OR^5)_2-$ and $-C(OR^5)_2O-$, $R^2$ is a halocarbon radical having 1-30 carbon atoms, $R^3$ and $R^4$ are hydrogen atom, halogen atom or a hydrocarbon radical having 1-30 carbon atoms, $R^5$ is a hydrocarbon radical having 1-30 carbon atoms, $R^3$, $R^4$ and $R^5$ may be same or different and R2 and R3 may combine each other to form a ring.

The term halocarbon radical means a group in which one or more of hydrogen atoms in a hydrocarbon group, in which one methylene chain therein may be substituted by oxygen, are substituted by one or more halogen atoms selected from fluorine, chlorine, bromine and iodine.

More concrete examples of the compound containing C-X bond include the following compounds:

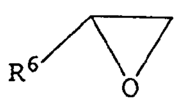

(A)

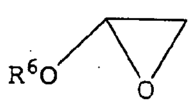

(B)

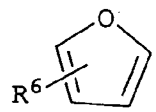
(C)

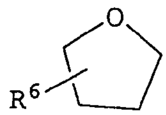
(D)

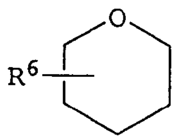
(E)

$R^6$-O-$R^8$ (F)
$R^6$-O-$SiR^8_3$ (G)
$R^6R^9C(OR^8)_2$ (H)
$R^8R^9C(OR^6)(OR^8)$ (I)
$R^6C(OR^8)_3$ (J)
$R^8C(OR^6)(OR^8)_2$ (K)
$R^6$-$R^{10}$ (L)

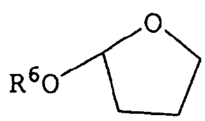
(M)

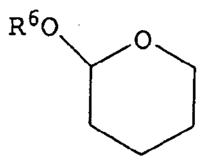
(N)

In the formulae, $R^6$ is a halocarbon radical having 1-30, preferably 1-20, more preferably 1-12 carbon atoms. The hydrocarbon group constituting the halocarbon radical is alkyl group, alkenyl group, aryl group, aralkyl group or the like. As mentioned before, one or more of hydrogens thereof are substituted by halogen atoms.

More concrete examples of $R^6$ include fluoromethyl, fluoroethyl, fluoropropyl, fluoroisopropyl, fluorocyclopropyl, fluorobutyl, fluoroisobutyl, fluoro-t-butyl, fluorocyclobutyl, fluoropentyl, fluoroisopentyl, fluoroneopentyl, fluorocyclopentyl, fluorohexyl, fluoroisohexyl, fluorocyclohexyl, fluoroheptyl, fluorooctyl, fluorophenyl, fluorobenzyl, fluoromesityl, fluoroindenyl, fluoronaphthyl, trifluoroethyl, hexafluoroisopropyl, pentafluoropropyl, perfluorobutylethyl, perfluoroethyl, perfluorodecylethyl, perfluoroethylhexyl, perfluorobutylhexyl, perfluorohexylhexyl, perfluorooctylhexyl, perfluoroisoamylethyl, perfluoroisononylethyl, perfluoroisopropylhexyl, perfluoroisoamylhexyl, perfluoroisoheptylhexyl, perfluoroisononylhexyl, tetrafluoropropyl, octafluoropentyl, decafluoropentyl, hexadecafluorononyl, bis(trifluoromethyl)propyl, hexafluorobutyl, perfluorohexyliodopropyl, perfluorooctyliodopropyl, perfluoroisoheptyliodopropyl, perfluoroisononyliodopropyl, octafluoropropyl, perfluorobutyl, octafluorocyclobutyl, perfluoropentyl, perfluorocyclopentyl, perfluorohexyl, perfluorocyclohexyl, perfluoroheptyl, perfluorocycloheptyl, perfluorooctyl, perfluorocyclooctyl, perfluorononyl, perfluorocyclononyl, perfluorodecyl, perfluorocyclodecyl, perfluoroundecyl, perfluorocycloundecyl, perfluorododecyl, perfluorocyclododecyl, perfluorotridecyl, perfluorocyclotridecyl, perfluorotetradecyl, perfluorocyclotetradecyl, perfluoropentadecyl, perfluorocyclopentadecyl, perfluorohexadecyl, perfluorocyclohexadecyl, perfluoroheptadecyl, perfluorocycloheptadecyl, perfluorooctadecyl, perfluorocyclooctadecyl, perfluorononadecyl, perfluorocyclononadecyl, perfluorononaeicosyl, perfluorocycloeicosyl, perfluorophenyl, perfluorobenzyl, perfluoroxylyl, perfluoromesitylenyl, perfluorocumyl, perfluoronaphthatyl, perfluorodecalyl, fluorodichloromethyl, 1,1-dichloro-1-fluoroethyl, 1-bromo-2-fluoroethyl, 1,1-difluoroethyl, bromotetrafluoropropyl, iodooctafluorobutyl, pentafluorophenyl, bromotetrafluorophenyl, chlorotetrafluorophenyl, iodotetrafluorophenyl, tetrafluorophenyl, chlorotrifluorophenyl, dichlorotrifluorophenyl, bromotrifluorophenyl, dibromotrifluorophenyl, trifluorophenyl, chlorodifluorophenyl, dichlorodifluorophenyl, trichlorofluorophenyl, bromodifluorophenyl, dibromodifluorophenyl, tribromodifluorophenyl, difluorophenyl, chlorofluorophenyl, dichlorofluorophenyl, trichlorofluorophenyl, tetrachlorofluorophenyl, bromofluorophenyl, dibromofluorophenyl, tribromofluorophenyl, tetrabromofluorophenyl, trifluorophenyl, hexafluorohexyl, trifluoromethylnaphthyl, di-(trifluoromethyl)-naphthyl, trifluoromethyldecalyl, di(trifluoromethyl)-decalyl, chloromethyl, chloroethyl, chloropropyl, chloroisopropyl, chlorocyclopropyl, chlorobutyl, chloroisobutyl, chloro-t-butyl, chlorocyclobutyl, chloropentyl, chloroisopentyl, chloroneopentyl, chlorocyclopentyl, chlorohexyl, chloroisohexyl, chlorocyclohexyl, chloroheptyl, chlorooctyl, chlorophenyl, chlorobenzyl, chloromesityl, chloroindenyl, chloronaphthyl, trichloroethyl, hexachloroisopropyl, pentachloropropyl, perchlorobutylethyl, perchloroethyl, perchlorodecylethyl, perchloroethylhexyl, perchlorobutylhexyl, perchlorohexylhexyl, perchlorooctylhexyl, perchloroisoamylethyl, perchloroisononylethyl, perchloroisopropylhexyl, perchloroisoamylhexyl, perchloroisoheptylhexyl, perchloroisononylhexyl, tetrachloropropyl, octachldropentyl, decachloropentyl, hexadecachlorononyl, bis(trichloromethyl)propyl, hexachlorobutyl, octachloropropyl, perchlorobutyl, octachlorocyclobutyl, perchloropentyl, perchlorocyclopentyl, perchlorohexyl, perchlorocyclohexyl, perchloroheptyl, perchlorocycloheptyl, perchlorooctyl, perchlorocyclooctyl, perchlorononyl, perchlorocyclononyl, perchlorodecyl, perchlorocyclodecyl, perchloroundecyl, perchlorocycloundecyl, perchlorododecyl, perchlorocyclododecyl, perchlorotridecyl, perchlorocyclotridecyl, perchlorotetradecyl, perchlorocyclotetradecyl, perchloropentadecyl, perchlorocyclopentadecyl, perchlorohexadecyl, perchlorocyclohexadecyl, perchloroheptadecyl, perchlorocycloheptadecyl, perchlorooctadecyl, perchlorocyclooctadecyl, perchlorononadecyl, perchlorocyclononadecyl, perchlorononaeicosyl, perchlorocycloeicosyl, perchlorophenyl, perchlorobenzyl, perchloroxylyl, perchloromesitylenyl, perchlorocumyl, perchloronaphthatyl, perchlorodecalyl, chlorodichlorome thyl, 1,1-dichloroethyl, pentachlorophenyl, tetrachlorophenyl, trichlorophenyl, dichlorophenyl, hexachloroxylyl, trichloromethylnaphthyl, di-(trichloromethyl)-naphthyl, trichloromethyldecalyl, di-(trichloromethyl)-decalyl, bromomethyl, bromoethyl, bromopropyl, bromoisopropyl, bromocyclopropyl, bromobutyl, bromoisobutyl, bromo-t-butyl, bromocyclobutyl, bromopentyl, bromoisopentyl, bromoneopentyl, bromocyclopentyl, bromohexyl, bromoisohexyl, bromocyclohexyl, bromoheptyl, bromooctyl, bromophenyl, bromobenzyl, bromomesityl, bromoindenyl, bromonaphthyl, tribromoethyl, hexabromoisopropyl, pentabromopropyl, perbromobutylethyl, perbromoethyl, perbromodecylethyl, perbromoethylhexyl, perbromobutylhexyl, perbromohexylhexyl, perbromooctylhexyl, perbromoisoamylethyl, perbromoisononylethyl, perbromoisopropylhexyl, perbromoisoamylhexyl, perbromoisoheptylhexyl, perbromoisononylhexyl, tetrabromopropyl, octabromopentyl, decabromopentyl, hexadecabromononyl, bis(tribromomethyl)propyl, hexabromobutyl, octabromopropyl, perbromobutyl, octabromocyclobutyl, perbromopentyl, perbromocyclopentyl, perbromohexyl, perbromocyclohexyl, perbromoheptyl, perbromocycloheptyl, perbromooctyl, perbromocyclooctyl, perbromononyl, perbromocyclononyl, perbromodecyl, perbromocyclodecyl, perbromoundecyl, perbromocycloundecyl, perbromododecyl, perbromocyclododecyl, perbromotridecyl, perbromocyclotridecyl, perbromotetradecyl, perbromocyclotetradecyl, perbromopentadecyl, perbromocyclopentadecyl, perbromohexadecyl, perbromocyclohexadecyl, perbromoheptadecyl, perbromocycloheptadecyl, perbromooctadecyl, perbromocyclooctadecyl, perbromononadecyl, perbromocyclononadecyl, perbromononaeicosyl, perbromocycloeicosyl, perbromophenyl, perbromobenzyl, perbromoxylyl, perbromomesitylenyl, perbromocumyl, perbromonaphthatyl, perbromodecalyl, bromodichloromethyl, 1,1-dibromoethyl, pentabromophenyl, tetrabromophenyl, tribromophenyl, dibromophenyl, hexabromoxylyl, tribromomethylnaphthyl, di-(tribromomethyl)-naphthyl, tribromomethyldecalyl, di-(tribromomethyl)-decalyl and the like.

$R^8$ is the same as $R^6$ or a hydrocarbon group having 1-30, preferably 1-20, more preferably 1-12 carbon atoms. When two or more $R^8$s are contained in a molecule, they may be same or different. Examples of the hydrocarbon group include alkyl groups such as methyl, ethyl, propyl, isopropyl, cyclopropyl, butyl, isobutyl, t-butyl, cyclobutyl, pentyl, isopentyl, neopentyl, cyclopentyl, hexyl, isohexyl, cyclohexyl, heptyl and octyl, alkenyl groups such as vinyl and allyl, aryl groups such as phenyl, tolyl, xylyl, mesityl, indenyl and naphthyl, aralkyl groups such as benzyl, tolytyl, phenetyl, styryl, benzhydryl, tolytyl, phenylbutyl and phenylpropyl.

$R^9$ is the same as $R^8$ or hydrogen atom.

$R^{10}$ is hydrogen atom or a halogen atom such as fluorine, chlorine, bromine and iodine.

Examples of the compound having the general formula (A) include 3-perfluorohexyl-1,2-epoxypropane, 3-perfluorooctyl-1,2-epoxypropane, 3-perfluorodecyl-1, 2-epoxypropane, 3-(perfluoro-3-methylbutyl)-1,2-epoxypropane, 3-(perfluoro-5-methylhexyl)-1,2-epoxypropane, 3-(perfluoro-7-methyloctyl)-1,2-epoxypropane, 3-(perfluoro-9-methyldecyl)-1,2-epoxypropane, 3-perchlorohexyl-1,2-epoxypropane, 3-perchlorooctyl-1,2-epoxypropane, 3-perchlorodecyl-1,2-epoxypropane, 3-(perchloro-3-methylbutyl)-1,2-epoxypropane, 3-(perchloro-5-methylhexyl)-1,2-epoxypropane, 3-(perchloro-7-methyloctyl)-1,2-epoxypropane, 3-(perchloro-9-methyldecyl)-1,2-epoxypropane, 3-perbromohexyl-1,2-epoxypropane, 3-perbromooctyl-1,2-epoxypropane, 3-perbromodecyl-1,2-epoxypropane, 3-(perbromo-3-methylbutyl)-1,2-epoxypropane, 3-(perbromo-5-methylhexyl)-1,2-epoxypropane, 3-(perbromo-7-methyloctyl)-1,2-epoxypropane and 3-(perbromo-9-methyldecyl)-1,2-epoxypropane.

Examples of the compound having the general formula (B) include 3-(2,2,3,3-tetrafluoropropoxy)-1,2-epoxypropane, 3-(1H,1H,5H-octafluoropentyloxy)-1,2-epoxypropane, 3-(1H,1H,7H-dodecafluoroheptyloxy)-1,2-epoxypropane, 3-(1H,1H,9H-hexadecafluorononyloxy)-1,2-epoxypropane, 3-(2,2,3,3-tetrachloropropoxy)-1,2-epoxypropane, 3-(1H,1H,5H-octachloropentyloxy)-1,2-epoxypropane, 3-(1H,1H,7H-dodecachloroheptyloxy)-1,2-epoxypropane, 3-(1H,1H,9H-hexadecachlorononyloxy)-1,2-epoxypropane, 3-(2,2,3,3-tetrafluoropropoxy)-1,2-epoxypropane, 3-(1H,1H,5H-octafluoropentyloxy)-1,2-epoxypropane, 3-(1H,1H,7H-dodecafluoroheptyloxy)-1,2-epoxypropane and 3-(1H,1H,9H-hexadecafluorononyloxy)-1,2-epoxypropane.

Examples of the compound having the general formula (C) include 2-trifluoromethylfuran, 2-(1,1,1-trifluoroethyl)furan, 2-(2-trifluoromethyl-1,1,1- trifluoroethyl) furan, trichloromethylfuran, 2-(1,1,1-trichloroethyl)furan, 2-(2-trichloromethyl-1,1,1-trichloroethyl)furan, 2-tribromomethylfuran, 2-(1,1,1-tribromoethyl)furan and 2-(2-tribromomethyl-1,1,1-tribromoethyl)furan.

Examples of the compound having the general formula (D) include 2-trimethylfluoromethyl-tetrahydrofuran, 2-(1,1,1-trifluoroethyl)tetrahydrofuran, 2-(2-trifluoromethyl-1,1,1-trifluoroethyl)tetrahydrofuran, 2-trimethylchloromethyl-tetrahydrofuran, 2-(1,1,1-trichloroethyl)tetrahydrofuran, 2-(2-trichloromethyl-1,1,1-trifluoroethyl)tetrahydrofuran, 2-trimethylbromomethyl-tetrahydrofuran, 2-(1,1,1-tribromoethyl)tetrahydrofuran and 2-(2-tribromomethyl-1,1,1-trifluoroethyl)tetrahydrofuran.

Examples of the compound having the general formula (E) include trifluoromethyltetrahydropyran, 2-(1,1,1-trifluoroethyl)tetrahydropyran, 2-(2-trifluoromethyl-1,1,1-trifluoroethyl)tetrahydropyran, trichloromethyltetrahydropyran, 2-(1,1,1-trichloroethyl)tetrahydropyran, 2-(2-trichloromethyl-1,1,1-trifluoroethyl)tetrahydropyran, tribromomethyltetrahydropyran, 2-(1,1,1-tribromoethyl)tetrahydropyran and 2-(2-tribromomethyl-1,1,1-trifluoroethyl)tetrahydropyran.

Examples of the compound having the general formula (F) include ether compounds containing at least one halogen atoms such as 2,2,3,3,3-pentafluoropropylmethyl ether, 2,2,3,3,3-pentafluoropropyl-1,1,2,2-tetrafluoroethyl ether, 1,1,2,2-tetrafluoroethyl methyl ether, 1,1,2-trifluoro-2-chloroethyl-2,2,2-trifluoroethyl ether, 1,1,3,3,3-pentafluoro-2-trifluoroethyl ethyl ether, 2,2,2-trifluoroethyl butyl ether, 2,2,2-trifluoroethyl benzyl ether, 2,2,2-trifluoroethyl tolytyl ether, 2,2,3,3-pentafluoropropyl tolytyl ether, 6-(perfluoroethyl)-hexyl triethyl ether, 1H,1H-hexafluorobutyl triethyl ether, 2-(perfluorobutyl)ethyl tolytyl ether, 2-perfluorooctylethyl tolytyl ether, 2,2,3,3,3-pentachloropropylmethyl ether, 2,2,3,3,3-pentachloropropyl-1,1,2,2-tetrachloroethyl ether, 1,1,2,2-tetrachloroethyl methyl ether, 1,1,2-trichloro-2-chloroethyl-2,2,2-trichloroethyl ether, 1,1,3,3,3-pentachloro-2-trichloroethyl ethyl ether, 2,2,2-trichloroethyl butyl ether, 2,2,2-trichloroethyl benzyl ether, 2,2,2-trichloroethyl tolytyl ether, 2,2,3,3-pentachloropropyl tolytyl ether, 6-(perchloroethyl)-hexyl triethyl ether, 1H,1H-hexachlorobutyl triethyl ether, 2-(perchlorobutyl)ethyl tolytyl ether, 2-perchlorooctylethyl tolytyl ether, 2,2,3,3,3-pentabromopropylmethyl ether, 2,2,3,3,3-pentabromopropyl-1,1,2,2-tetrabromoethyl ether, 1,1,2,2-tetrabromoethyl methyl ether, 1,1,2-tribromo-2-chloroethyl-2,2,2-tribromoethyl ether, 1,1,3,3,3-pentabromo-2-tribromoethyl ethyl ether, 2,2,2-tribromoethyl butyl ether, 2,2,2-tribromoethyl benzyl ether, 2,2,2-tribromoethyl tolytyl ether, 2,2,3,3-pentabromopropyl tolytyl ether, 6-(perbromoethyl)-hexyl triethyl ether, 1H,1H-hexabromobutyl triethyl ether, 2-(perbromobutyl)ethyl tolytyl ether and 2-perbromooctylethyl tolytyl ether.

Examples of the compound having the general formula (G) include silyl ether compounds having at least one halogen atom such as 2,2,2-trifluoroethyl trimethylsilyl ether, 2,2,3,3-pentafluoropropyl trimethylsilyl ether, 6-(perfluoroethyl)hexyl trimethylsilyl ether, 1H,1H-hexafluorobutyl trimethylsilyl ether, 2-(perfluorobutyl)ethyl trimethylsilyl ether, 6-(perfluorobutyl)hexyl trimethylsilyl ether, 2-perfluorohexylethyl trimethylsilyl ether, 2-perfluorooctylethyl trimethylsilyl ether, 2,2,2-trifluoroethyl triphenylsilyl ether, 2,2,3,3-pentafluoropropyl triphenylsilyl ether, 6-(perfluoroethyl)hexyl triphenylsilyl ether, 1H,1H-hexafluorobutyl trifluorosilyl ether, 2-(perfluorobutyl)ethyl triphenylsilyl ether, 6-(perfluorobutyl)hexyl triphenylsilyl ether, 2-perfluorohexylethyl triphenylsilyl ether, 2-perfluorooctylethyl triphenylsilyl ether, 2,2,2-trichloroethyl trimethylsilyl ether, 2,2,3,3-pentachloropropyl trimethylsilyl ether, 6-(perchloroethyl)hexyl trimethylsilyl ether, 1H,1H-hexachlorobutyl trimethylsilyl ether, 2-(perchlorobutyl)ethyl trimethylsilyl ether, 6-(perchlorobutyl)hexyl trimethylsilyl ether, 2-perchlorohexylethyl trimethylsilyl ether, 2-perchlorooctylethyl trimethylsilyl ether, 2,2,2-trichloroethyl triphenylsilyl ether, 2,2,3,3-pentachloropropyl triphenylsilyl ether, 6-(perchloroethyl)hexyl triphenylsilyl ether, 1H,1H-hexachlorobutyl trichlorosilyl ether, 2-(perchlorobutyl)ethyl triphenylsilyl ether, 6-(perchlorobutyl)hexyl triphenylsilyl ether, 2-perchlorohexylethyl triphenylsilyl ether, 2-perchlorooctylethyl triphenylsilyl ether, 2,2,2-tribromoethyl trimethylsilyl ether, 2,2,3,3-pentabromopropyl trimethylsilyl ether, 6-(perbromoethyl)hexyl trimethylsilyl ether, 1H,1H-hexabromobutyl trimethylsilyl ether, 2-(perbromobutyl)ethyl trimethylsilyl ether, 6-(perbromorobutyl)hexyl trimethylsilyl ether, 2-perbromohexylethyl trimethylsilyl ether, 2-perbromooctylethyl trimethylsilyl ether, 2,2,2-tribromoethyl triphenylsilyl ether, 2,2,3,3-pentabromopropyl triphenylsilyl ether, 6-(perbromoethyl)hexyl triphenylsilyl ether, 1H,1H-hexabromobutyl tribromosilyl ether, 2-(perbromobutyl)ethyl triphenylsilyl ether, 6-(perbromobutyl)hexyl triphenylsilyl ether, 2-perbromohexylethyl triphenylsilyl ether and 2-perbromooctylethyl triphenylsilyl ether.

Examples of the compound having the general formula (H) include acetals and ketals having at least one halogen atom such as 2,2-dimethoxy-1,1,1-trifluoropropane, 2,2-diethoxy-1,1,1-trifluoropropane, 2,2-dimethoxy-1,1,1,3,3,3-hexafluoropropane, 2,2-diethoxy-1,1,1,3,3-hexafluoropropane, 1,1-dimethoxy-1-pentafluorophenylethane, 1,1-diethoxy-1-pentafluorophenylethane, dimethoxydipentafluorophenylmethane, diethoxydipentafluorophenylmethane, 2,2-dimethoxy-1,1,1-trichloropropane, 2,2-diethoxy-1,1,1-trichloropropane, 2,2-dimethoxy-1,1,1,3,3,3-hexachloropropane, 2,2-diethoxy-1,1,1,3,3-hexachloropropane, 1,1-dimethoxy-1-pentachlorophenylethane, 1,1-diethoxy-1-pentachlorophenylethane, dimethoxydipentachlorophenylmethane, diethoxydipentachlorophenylmethane, 2,2-dimethoxy-1,1,1-tribromopropane, 2,2-diethoxy-1,1,1-tribromopropane, 2,2-dimethoxy-1,1,1,3,3,3-hexabromopropane, 2,2-diethoxy-1,1,1,3,3-hexabromopropane, 1,1-dimethoxy-1-pentabromophenylethane, 1,1-diethoxy-1-pentabromophenylethane, dimethoxydipentabromophenylmethane and diethoxydipentabromophenylmethane.

Examples of the compound having the general formula (I) include acetals and ketals having at least one fluorine atoms on a carbon skeleton derived from an alcohol such as, 2,2-bis(2,2,2-trifluoroethoxy)propane, 1,1-bis(2,2,2-trifluoroethoxy)cyclohexane, 1,1-bis(2,2,2-trifluoroethoxy)-1-phenylethane, di(2,2,2-trifluoroethoxy)diphenylmethane, di(2,2,2-trifluoroethoxy)phenylmethane, 2,2-bis(2,2,2-trichloroethoxy)propane, 1,1-bis(2,2,2-trichloroethoxy)cyclohexane, 1,1-bis(2,2,2-trichloroethoxy)-1-phenylethane, di(2,2,2-trichloroethoxy)diphenylmethane, di(2,2,2-trichloroethoxy)phenylmethane, 2,2-bis(2,2,2-tribromoethoxy)propane, 1,1-bis(2,2,2-tribromoethoxy) cyclohexane, 1,1-bis(2,2,2-tribromoethoxy)-1-phenylethane, di(2,2,2-tribromoethoxy)diphenylmethane and di(2,2,2-tribromoethoxy)phenylmethane.

Examples of the compound having the general formula (J) include orthoester compounds having at least one halogen atom on a carbon skeleton derived from a carboxylic acid, such as 1,1,1-trimethoxy-2,2,2-trifluoroethane, 1,1,1-triethoxy-2,2,2-trifluoroethane, 1,1,1-trimethoxy-2,2,2-trifluoroethane, 1,1,1-triethoxy-2,2,2-trichloroethane, 1,1,1-trimethoxy-2,2,2-tribromoethane and 1,1,1-triethoxy-2,2,2-tribromoethane.

Examples of the compound having the general formula (K) include orthoester compounds having at least one halogen atom on a carbon skeleton derived from an alcohol, such as 1,1,1-tri(2,2,2-trifluoroethoxy)ethane, 1,1,1-tri(2,2,2-trichloroethoxy)ethane, 1,1,1-tri(2,2,2-tribromoethoxy)ethane and 1,1,1-tri(2,2,2-triiodoethoxy)ethane.

Examples of the compound having the general formula (L) include hydrocarbons having at least one halogen atom, such as perfluoroheptan, perfluoromethylcyclohexane, perfluorooctane, 1-bromoheptadecafluorooctane, perfluorododecane, perfluoro-2,7-dimethyloctane, perfluoro-2,11-dimethyldodecane, tribromofluoromethane, dibromofluoromethane, 1-bromo-2-fluoroethane, 1,2-dibromo-1,1-difluoroethane, 1,1,1-trichlorofluoroethane, 1,1,1,3-tetrachlorotetrafluoropropane, 1,2-dibromohexafluoropropane, 1,1,3,4-tetrachlorohexafluorobutane, 1,1,1,3,5,6-hexachlorooctafluorohexane, 1,1,3,5,6-pentachlorononafluorohexane, hexafluorobenzene, chloropentafluorobenzene, bromopentafluorobenzene, pentafluorobenzene, dichlorotetrafluorobenzene, dibromotetrafluorobenzene, tetrafluorobenzene, trichlorotrifluorobenzene, tribromotrifluorobenzene, trifluorobenzene, tetrachlorodifluorobenzene, tetrabromodifluorobenzene, difluorobenzene, fluorobenzene, perfluorotoluene, perfluoromethylcyclohexane, trifluoromethylbenzene, benzyl fluoride, bistrifluoromethylbenzene, octafluoronaphthalene, perfluorodecaline, perfluorobiphenyl, dichloromethane, chloroform, 1,1-dichloroethane, 1,2-dichloroethane, 1,1,1-trichloroethane, 1,1,2-trichloroethane, 1,1-dichloropropane, 1,2-dichloropropane, 1,3-dichloropropane, perchlorohexane, perchloroheptane, perchloromethylcyclohexane, perchlorooctane, perchlorododecane, perchloro-2,7-dimethyloctane, perchloro-2,11-dimethyldodecane, hexachlorobenzene, pentachlorobenzene, tetrachlorobenzene, trichlorobenzene, dichlorobenzene, chlorobenzene, perchlorotoluene, perchloromethylcyclohexane, trichloromethylbenzene, benzyl chloride bistrichloromethylbenzene, octachloronaphthalene, perchlorodecaline, perchlorobiphenyl, perbromohexane, perbromoheptane, perbromomethylcyclohexane, perbromooctane, perbromododecane, perbromo-2,7-dimethyloctane, perbromo-2,11-dimethyldodecane, dibromobenzene, bromobenzene, perbromotoluene, perbromomethylcyclohexane, tribromomethylbenzene, benzyl bromide, bistribromomethylbenzene, octabromonaphthalene, perbromodecaline and perbromobiphenyl.

Examples of the compound having the general formula (M) include so called derivatives for tetrahydrofranylether, such as 2-(2',2',2'-trifluoroethoxy)tetrahydrofuran, 2-(1'-methyl-2',2',2'-trifluoroethoxy)tetrahydrofuran, 2-(1'-trifluoromethyl-2',2',2'-trifluoroethyl)-tetrahydrofuran, 2-(2',2',3',3',3'-pentafluoropropyl)-tetrahydrofuran, 2-(6'-(perfluoroethyl)hexyloxy)-tetrahydrofuran, 2-(1'H,1'H-hexafluorobutoxy)1-tetrahydrofuran, 2- (2' - (perflluorobutyl) ethoxy) -tetrahydrofuran and 2-(2'-(perfluorobutyl)hexyloxy)-tetrahydrofuran.

Examples of the compound having the general formula (N) include so called derivatives for tetrahydropyranylether, such as 2-(2',2',2'-trifluoroethyl)tetrahydropyran, 2-(1'-methyl-2',2',2'-trifluoroethoxy)tetrahydropyran, 2-(1'-trifluoromethyl)-2',2',2'-trifluoroethoxy)tetrahydropyran, 2-(2',2',3',3',3'-pentafluoropropyl)tetrahydropyran, 2-(6'-perfluoroethyl)hexyloxy)tetrahydropyran, 2-(1'H,1'H-hexafluorobutoxy)tetrahydropyran, 2-(2'-(perfluorobutyl)ethoxy)tetrahydropyran and 2-(2'-(perfluorobutyl)hexyloxy)tetrahydropyran.

Among the compounds having the above general formulae (A)-(N), those having the general formulae (F) and (G) are preferable. Also, among the compounds exemplified above, preferable are 3-perfluorohexyl-1,2-epoxypropane, 2-trifluoromethylfran, 2-trifluoromethyltetrahydrofuran, 2-trifluoromethyltetrahydrofuran, 2,2,2-trifluoroethyl benzyl ether, 2,2,2-trifluoroethyl tolytyl ether, 2,2,3,3-pentafluoropropyl tolytyl ether, 1H,1H-hexafluorobutyl tolytyl ether, 2,2,2-trifluoroethyl triphenylsilyl ether, 2,2,3,3-pentafluoropropyl triphenylsilyl ether, 1H,1H-hexafluorobutyl triphenylsilyl ether, 2,2-dimethoxy-1,1,1-trifluoropropane, 2,2-diethoxy-1,1,1-trifluoropropane, 2,2-dimethoxy-1,1,1,3,3,3-hexafluoropropane, 2,2-diethoxy-1,1,1,,3,3,3-hexafluoropropane, 2,2-bis(2,2,2-trifluoroethoxy)propane, 1,1-bis(2,2,2-trifluoroethoxy)cyclohexane, 1,1,1-trimethoxy-2,2,2-trifluoroethane, 1,1,1-triethoxy-2,2,2-trifluoroethane, 1,1,1-tri(2,2,2-trifluoroethoxy)ethane, hexafluorobenzene, perfluorotoluene, bistrifluoro-methylbenzene, dichloromethane, chloroform, 1,1-dichloroethane, 1,2-dichloroethane, 1,1,1-trichloroethane, 1,1,2-trichloroethane, 2-(2',2',2'-trifluoroethoxy)tetrahydrofuran, 2-(1'-methyl-2',2',2'-trifluoroethoxy)tetrahydrofuran, 2-(1'-trifluoromethyl-2',2',2'-trifluoroethoxy)tetrahydrofuran, 2-(2',2',2'-trifluoroethoxy)tetrahydropyran, 2-(1'-methyl-2',2',2'-trifluoroethoxy)tetrahydropyran and 2-(1'-trifluoromethyl)-2',2',2'-trifluoroethoxy)tetrahydropyran and the like. They may be used alone or in combination of two or more.

The sulfide used as component (4 D) has preferably the general formula

$$R^5\text{-}S\text{-}R^5$$

wherein $R^5$ is a hydrocarbon group having 1-30, preferably 1-20 carbon atoms, two $R^5$ may be same or different and two $R^5$ may combine each other to form a ring.

As examples of such hydrocarbon group, there are mentioned alkyl groups such as methyl, ethyl, propyl, isopropyl, cyclopropyl, butyl, isobutyl, tert-butyl, cyclobutyl, pentyl, isopentyl, neopentyl, cyclopentyl, hexyl, isohexyl, cyclohexyl, heptyl, octyl; alkenyl groups such as vinyl, allyl; aryl groups such as phenyl, mesityl, tolyl, xylyl, indenyl and naphthyl; aralkyl groups such as benzyl, tolytyl, phenethyl, styryl, benzhydryl, phenylbuthyl, phenylpropyl.

Among two $R^5$, at least one $R^5$ is preferably a bulky group such as branched alkyl (e.g. branched C2-6 alkyl), cycloalkyl, aryl or aralkyl or a ring formed by combining two $R^5$ of which examples are tetrahydrothiophene and thiane. Preferable compounds are diethylsulfide, diisopropylsulfide, dibutylsulfide, diisobutylsulfide, ditert-butylsulfide, dicyclopentylsulfide, dicyclohexylsulfide, diphenylsulfide, ditolylsulfide, methyltritylsulfide, ethyltritylsulfide, propyltritylsulfide, propyltritylsulfide, isopropyltritylsulfide, dibenzylsulfide, di(1-methyl-1-phenylethyl)sulfide, tetrahydrotiophene, thiane and the like.

Optionally, an inorganic carrier, a particulate polymer or an inorganic carrier and a particulate polymer may be used as one component of the catalyst.

The inorganic carrier may be intrinsically in the form of particles, granules, flakes, foil or fibers, but, whatever the shape may be, should be 5 - 200 μm, preferably 10 - 100 μm in maximum length. The inorganic carrier is preferably porous, having a surface area of 50 - 1,000 $m^2/g$ and a pore volume of 0.05 - 3 $cm^3$. It may be chosen from the group of a carbonaceous material, a metal, a metal oxide, a metal chloride and a metal carbonate, or a mixture thereof, which is calcined usually at 200° - 900°C in the air, nitrogen, argon or other inert gas. Suitable metals for the inorganic carrier are aluminum and nickel. Eligible metal oxides are Group I - VIII metal oxides of the Periodic Table including $SiO_2$, $Al_2O_3$, MgO, CaO, $B_2O_3$, $TiO_2$, $ZrO_2$, $Fe_2O_3$, $SiO_2{\cdot}Al_2O_3$, $Al_2O_3{\cdot}MgO$, $Al_2O_3{\cdot}CaO$, $Al_2O_3{\cdot}MgO{\cdot}CaO$, $Al_2O_3{\cdot}MgO{\cdot}SiO_2$, $Al_2O_3{\cdot}CuO$, $Al_2O_3{\cdot}Fe_2O_3$, $Al_2O_3{\cdot}NiO$ and $SiO_2{\cdot}MgO$. The double oxides are not particularly restricted in terms of structure and component ratio when used in the invention. The metal oxides may have adsorbed thereto small quantities of moisture and may further contain a small amount of impurities.

The metal chloride used in the invention is a chloride of an alkaline metal or alkaline earth metal,

$MgCl_2$ and $CaCl_2$ are preferred. Examples of the metal carbonate include magnesium carbonate, calcium carbonate and barium carbonate, while those of the carbonaceous material referred to herein include carbon black and activated carbon. The above metal oxides are most preferred amongst the other inorganic carrier materials.

The term particulate polymer as used herein as a catalyst support or carrier designates a solid particulate form of either thermoplastic or thermosetting resin having an average particle size 5 - 2,000 μm, preferably 10 - 100 μm, practically ranging from low molecular weight to ultra high molecular weight polymers as long as these polymers remain solid during the stages of catalyst preparation and the polymerization reaction. Specific examples of the particulate polymer include ethylene polymers, ethylene alpha-olefin copolymers, propylene polymers or copolymers, poly-1-butene and like polyolefins preferably of 2 - 12 carbon atoms, polyester, polyamide, polyvinylchloride, polymethylacrylate, polymethylmethacrylate, polystyrene, polynorbornene and naturally occurring polymers as well as mixtures thereof. The foregoing inorganic and particulate polymers carriers may be used per se according to the invention. Alternatively, they may be pretreated with an organoaluminum compound such as trimethylaluminum, triethylaluminum, triisobutylaluminum, tri-n-hexylaluminum, dimethylaluminum chloride, diethylaluminum chloride and diethylmonoethoxyaluminum, a modified organoaluminum compound having Al-O-Al bonds, or a silane compound.

The inorganic carrier may be used after treatment with an active hydrogen-containing compound such as alcohol and aldehydes, an electron-donating compound such as ester and ether, or an alkoxide-containing compound such as tetraalkoxysilicate, tetraalkoxyaluminum and transition-metal tetraalkoxide.

The carriers may be contacted with various pretreating compounds in an atmosphere of an inert gas such as nitrogen or argon in the presence of an inert liquid hydrocarbon such as an aromatic hydrocarbon (6 - 12 carbon atoms) including benzene, toluene, xylene and ethylbenzene or an aliphatic or alicyclic hydrocarbon (5 - 12 carbon atoms) including heptane, hexane, decane, dodecane and cyclohexane, with or without stirring at -100°C to 200°C, preferably -50° to 100°C for 30 minutes to 50 hours, preferably 1 - 24 hours. This pretreatment reaction is carried out preferably in the presence of a solvent of an aromatic hydrocarbon such as benzene, toluene, xylene and ethylbenzene in which the pretreating compounds are rendered soluble. This resulting carrier may be readily put to use for the preparation of catalyst components without having to remove the solvent. If the pretreating compound, for example a modified organoaluminum compound, is insoluble or hardly soluble, there may be added pentene, hexane, decane, dodecane or cyclohexane to allow the reaction product to precipitate and thereafter dry. Alternatively, part or all of the aromatic hydrocarbon solvent may be removed as by means of drying.

There is no particular restriction imposed upon the ratio of carrier/pretreating compound, the latter being usually 1 - 10,000 millimoles, preferably 5 - 1,500 millimoles per 100 grams carrier.

The catalyst component used in the process of the present invention is obtained by mutually contacting (1) a compound of the general formula $Me^1R^1p(OR^2)qX^14\text{-}p\text{-}q$ [component (1)], (2) a compound of the general formula $Me^2R^3m(OR^4)nX^2z\text{-}m\text{-}n$ [component (2)], (3) an organocyclic compound having two or more conjugated double bonds [component (3)] and (4) a compound selected from the group consisting of A) and a modified organoaluminum compound containing Al-O-Al bond and with at least one branched-chain alkyl group attached to aluminum atom, B) a boric compound, C) a compound containing C-X bond where X is a halogen atom and D) a sulfide [component (4)], as mentioned previously. But no special limitation is placed on in what order these components are to be contacted.

For example, the above components (1) to (4) may be contacted by any of the following methods: a method of contacting all of the components (1) to (4) simultaneously, a method of first contacting components (1) and (2) followed by contact of component (3) and subsequent contact of component (4), a method of contacting the components (1) to (3) at a time followed by contact of component (4), a method of first contacting components (2) and (3) followed by contact of component (1) and subsequent contact of component (4), a method of first contacting components (3) and (4) followed by contact of component (1) and subsequent contact of component (2), and a method of contacting a portion of component (3) with component (1), followed by contact of the remaining portion of component (3) with component (2), and subsequent contact of component (4). Particularly preferred is the method of contacting the components (1) to (3) followed by contact of component (4).

The further catalyst component used in the present invention is obtained by mutually contacting component (1), component (2), component (3), component (4) and an inorganic carrier or particulate polymer carrier [component (5)], as mentioned previously. But no special limitation is placed on in what order these components are to be contacted.

For example, the above components (1) to (5) may be contacted by any of the following methods:

① components (1)-(5) are contacted simultaneously,

② components (1)-(4) are contacted simultaneously, followed by contacting the product with component (5),

③ components (1), (2) and (4) are contacted simultaneously, followed by contacting the product with component (3) and then with component (5),

④ components (1) and (2) are contacted, followed by contacting the product with component (3), then components (4) and then component (5),

⑤ components (1) and (2) are contacted, components (3)-(5) are contacted and then both products are contacted,

⑥ components (1) and (4) are contacted, followed by contacting the product with component (2), then component (3) and then component (5),

⑦ components (1) and (4) are contacted, components (2), (3) and (5) are contacted and then both products are contacted,

⑧ components (1) and (5) are contacted, followed by contacting the product with component (2), then component (3) and then component (4),

⑨ components (1) and (5) are contacted, components (2)-(4) are contacted and then both products are contacted,

⑩ components (1), (2) and (4) are contacted simultaneously, followed by contacting the product with component (3) and then component (5),

⑪ components (2) and (3) are contacted, followed by contacting the product with component (1), then component (4), and then component (5),

⑫ components (2) and (4) are contacted, followed by contacting the product with component (3), then component (1) and then component (5),

⑬ components (2) and (4) are contacted, followed by contacting component (3), then component (5) and then component (1),

⑭ components (2) and (4) are contacted, followed by contacting the product with component (1), then component (5) and then component (3),

⑮ components (2) and (5) are contacted, followed by contacting the product with component (1), then (3) and then (4),

⑯ components (2)-(5) are contacted simultaneously, followed by contacting the product with (1),

⑰ components (2)-(4) are contacted simultaneously, followed by contacting the product with (1) and then (5),

⑱ components (3) and (4) are contacted, followed by contacting the product with (1), then (2) and then (5),

⑲ components (2) and (4), followed by contacting the product with (1) and then with a product obtained by contacting (3) and (5),

⑳ components (3) and (5) are contacted, followed by contacting the product within (1), then (2) and then (4),

㉑ component (1) and a portion of component (4) are contacted, followed by contacting the product with a product obtained by contacting (2), the remaining of (4), (3) and (5),

㉒ component (1) and a portion of component (5) are contacted, followed by contacting the product with a product obtained by contacting (2), (3), (4) and the remaining of (5) and the like.

Among them, preferred are a method wherein (2)-(5) are contacted, followed by contacting the product with (1), a method wherein (2) and (4) are contacted, followed by contacting the product with (3), then (1) and then (5), a method wherein (2) and (4) are contacted, followed by contacting the product with (3), then (5) and then (1), a method wherein (2) and (4) are contacted, followed by contacting the product with (1), then (5) and then (3).

The method of contact reaction of these components is not specially limited, either. Usually, the contact reaction is carried out with or without stirring in an inert atmosphere such as nitrogen or argon and in the presence of a liquid inert hydrocarbon such as an aromatic hydrocarbon (usually having 6 to 12 carbon atoms), e.g. benzene, toluene, xylene or ethylbenzene, or an aliphatic or alicyclic hydrocarbon (usually having 5 to 12 carbon atoms), e.g. heptane, hexane, decane, dodecane or cyclohexane. Conditions for the contact reaction include a temperature in the range of usually -100°C to 200°C, preferably -50°C to 100°C, and a duration in the range of 30 minutes to 50 hours, preferably 1 to 24 hours.

In the case where the components are contacted in an inert hydrocarbon solvent, after completion of the contact reaction of all the components, the reaction solution may be used as it is in the polymerization, or the reaction product may be once withdrawn as a solid catalyst component using a suitable means such as precipitation or drying and thereafter used in the polymerization. Of course, the contact reaction of each component may be conducted plural times.

For 1 mole of component (1), component (2) is usually employed in a proportion of 0.01 to 100 moles, preferably 0.1 to 10 moles, more preferably 1 to 5 moles, component (3) is employed usually in a proportion of 0.01 to 100 moles, preferably 0.1 to 10 moles, more preferably 0.5 to 2 moles, and component (4) is employed usually in a proportion of 1 to 100,000 moles, preferably 5 to 1,000 moles.

For 100 g of component (1), component (2) is usually employed in the amount of 0.05 - 20 g, preferably 0.1 - 10 g, more preferably 0.5 - 5 g in terms of the weight of transition metal.

The catalyst component of the present invention obtained by mutually contacting the components (1) to (4) or (1) to (5) as described above is usually combined with a promotor component, whereby there is obtained a catalyst useful for the polymerization or copolymerization of olefins. Any promotor known in this industry is employable as long as it does not impair the object of the present invention and the performance of the above catalyst component. But typically there is used such a modified organoaluminum compound as shown below.

Modified Organoaluminum Compound

A modified organoaluminum compound employable suitably in the present invention contains Al-O-Al bond in the molecule. The number of such bond is usually in the range of 1 to 100, preferably 1 to 50. Usually, such a modified organoaluminum compound is a product obtained by the reaction of an organoaluminum compound and water. This reaction is usually conducted in an inert hydrocarbon. Examples of inert hydrocarbons employable in this reaction include aliphatic, alicyclic and aromatic hydrocarbons such as pentane, hexane, heptane, cyclohexane, methylcyclohexane,benzene, toluene and xylene. But it is desirable to use an aliphatic or aromatic hydrocarbon.

As the organoaluminum compound for use in preparing the modified organoaluminum compound there may be used any of those represented by the general formula $R_nAlX_{3-n}$ where R is a hydrocarbon radical such as an alkyl, alkenyl, aryl or aralkyl group having 1 to 18, preferably 1 to 12, carbon atoms, X is a hydrogen atom or a halogen atom, and n is an integer of $1 \leqq n \leqq 3$. But the use of a trialkylaluminum is preferred. The alkyl group in the trialkylaluminum may be any of methyl, ethyl, propyl, isopropyl, butyl, isobutyl, pentyl, hexyl, octyl, decyl and dodecyl, with methyl being particularly preferred.

The reaction ratio (water/Al mole ratio) of water to the organoaluminum compound is in the range of 0.25/1 to 1.2/1, preferably 0.5/1 to 1/1. The reaction temperature is usually in the range of 70° to 100°C, preferably -20° to 20°C, and the reaction time is usually in the range of 5 to 24 hours, preferably 10 to 5 hours. As the water to be used in the reaction there may be used water of crystallization contained in a copper sulfate hydrate or an aluminum sulfate hydrate or even a component which can produce water in the reaction system.

According to the present invention, an olefin or olefins are homopolymerized or copolymerized in the presence of a catalyst comprising the foregoing catalyst component and a promotor component typified by the modified organoaluminum compound described above. In this case, the catalyst component and the modified organoaluminum compound may be fed into the polymerization reaction system separately or as a mixture of the two prepared in advance. A suitable ratio between the catalyst component and the modified organoaluminum compound is selected in such a manner that the atomic ratio of aluminum in the modified organoaluminum compound to the transition metal in the catalyst component is in the range from 1 to 100,000, preferably 5 to 1,000, more preferably 50 to 100.

In the olefins referred to herein there are included α-olefins, cyclic olefins, dienes, trienes and styrene analogs. Examples of α-olefins include those having 2 to 12, preferably 2 to 8, carbon atoms. More concrete examples are ethylene, propylene, butene-1, hexene-1 and 4-methylpentene-1. An α-olefin can be homopolymerized using the catalyst component of the invention and it is also possible to copolymerize two or more kinds of α-olefins using such catalyst component. The copolymerization may be any of alternating copolymerization, random copolymerization and block copolymerization.

In the copolymerization of α-olefins there are included the case where ethylene and an α-olefin having 3 to 12, preferably 3 to 8, carbon atoms are copolymerized, such as ethylene/propylene, ethylene/butene-1, ethylene/hexene-1 and ethylene/4-methylpentene-1 and the case where propylene and an α-olefin having 3 to 12, preferably 3 to 8, carbon atoms, such as propylene/butene-1, propylene/4-methylpentene-1, propylene/4-methylbutene-1, propylene/hexene-1 and propylene/octene-1. In the case of copolymerizing ethylene or propylene with another α-olefin, the amount of such α-olefin may be selected optionally on condition that it does not exceed 90 mol% of the total monomer quantity. Generally, however, in the case of an ethylene copolymer, the amount of such another α-olefin is not larger than 40 mol%, preferably not larger than 30 mol%, more preferably not larger than 20 mol%, while in the case of a propylene copolymer, the amount of such another α-olefin is selected in the range of 1-90 mol%, preferably 5-90 mol%, more preferably 10-70 mol%.

Examples of cyclic olefins employable in the invention are those having 3 to 24, preferably 3 to 18, carbon atoms, including cyclopentene, cyclobutene, cyclohexene, 3-methylcyclohexene, cyclooctene, cyclodecene, tetracyclodecene, octacyclodedene, dicyclopentadiene, norbornene, 5-methyl-2-norbornene, 5-ethyl-2-norbornene, 5-isobutyl-2-norbornene, 5,6-dimethyl-2-norbornene, 5,5,6-trimethyl-2-norbornene and ethylidene norbornene. Usually, a cyclic olefin is copolymerized with the foregoing α-olefin and in this case the amount of the cyclic olefin is not larger than 50 mol%, usually in the range of 1-50 mol%, preferably 2-50 mol%, relative to the copolymer.

Dienes and trienes employable in the present invention are chain polyenes which can be represented by the following general formula:

$$CH_2CH(CH)_n(CHCH_2)_m$$

where m is 1 or 2 and n is 0 to 20, preferably 2 to 20. Examples are butadiene, 1,4-hexadiene, 1,5-hexadiene, 1,9-decadiene, 1,13-tetradecadiene, 2,6-dimethyl-1,5-heptadiene, 2-methyl-2,7-octadiene, 2,7-dimethyl-2,6-octadiene and 1,5,9-decatriene. In the case of using a chain diene or triene in the present invention, it is usually copolymerized with the foregoing α-olefin, and the content of chain diene and/or triene in the copolymer is usually in the range of 0.1 to 50 mol%, preferably 0.2 to 10 mol%.

Styrene analogs employable in the present invention are styrene and styrene derivatives. As examples of such derivatives there are mentioned t-butylstyrene, α-methylstyrene, p-methylstyrene, divinylbenzene, 1,1-diphenylethylene, N,N-dimethyl-p-aminoethylstyrene and N,N-diethyl-p-aminoethylstyrene.

The catalyst component of the present invention is also suitable for use in further polymerizing a homopolymer or a copolymer of olefin(s) with a polar monomer for the purpose of modification of the homopolymer or copolymer. As examples of such polar monomer there are mentioned unsaturated carboxylic acid esters such as methyl acrylate, methyl methacrylate, butyl methacrylate, dimethyl maleate, diethyl maleate, monomethyl maleate, diethyl fumarate and dimethyl itaconate. The polar monomer content of the copolymer thus modified is usually in the range of 0.1 to 10 mol%, preferably 0.2 to 2 mol%.

The polymerization reaction may be carried out in the form of slurry polymerization, solution polymerization or vapor-phase polymerization in the presence of the catalyst component and promotor component described above. Particularly, a slurry polymerization or a vapor-phase polymerization is preferred. Olefin(s) is polymerized in a substantially oxygen- and water-free condition and in the presence or absence of an inert hydrocarbon solvent selected from aliphatic hydrocarbons such as hexane and heptane, aromatic hydrocarbons such as benzene, toluene and xylene and alicyclic hydrocarbons such as cyclohexane and methylcyclohexane. Conditions for the polymerization involve a temperature in the range of 20° to 200°C, preferably 50° to 100°C, a pressure in the range from atmospheric pressure to 70 kg/cm$^2$G, preferably from atmospheric pressure to 20 kg/cm$^2$G, and a polymerization time in the range from 5 minutes to 10 hours, preferably 5 minutes to 5 hours.

The molecular weight of the polymer to be prepared can be adjusted to some extent by changing polymerization conditions such as polymerization temperature and catalyst mole ratio, but the addition of hydrogen to the polymerization reaction system is more effective for this purpose.

What is called a scavenger, as a component for the removal of water, may be added into the polymerization system. Examples of such scavenger include organoaluminum compounds such as trimethylaluminum, triethylaluminum and triisobutylaluminum, as well as the foregoing modified organoaluminum compounds and modified organoaluminum compounds containing a branched-chain alkyl group.

The process of the present invention is also applicable to a multi-stage polymerization of two or more stages involving different polymerization conditions such as different hydrogen concentrations, different monomer quantitites and different polymerization temperatures and pressures.

[Examples]

The following examples are given to illustrate the present invention more concretely, but it is to be understood that the invention is not limited thereto.

The following methods were adopted to determine physical properties of the polymers obtained in the following working and comparative examples.

Melt Index (MI)

Determined at 190°C, under a load of 2.16 kg, according to ASTM D 1238-57T.

Density

Determined according to ASTM D 1505-68.

Determination of Melting Point using Differential Scanning Calorimeter (DSC)

Using a melting point measuring device Model DSC-20 (a product of Seiko Denshi K.K.), a polymer sample (5 mg) is held at 180°C for 3 minutes, then cooled to 0°C at a rate of 10°C/min, and after holding the sample at 0°C for 10 minutes, the temperature is raised at a rate of 10°C/min for the determination of melting point.

Mw/Mn

Determined using a Type 150C GPC device (a product of Waters Co.), a column of GMH-6 (a product of Toyo Soda Manufacturing Co.), a solvent o-dichlorobenzene, and under the conditions of temperature 135°C, flow rate 1.0 ml/min.

Degree of Branching

Butene-1 concentration (pc./1000C) is determined by $^{13}C$-NMR at a temperature of 120°C, using an NMR device (a product of Japan Electron Optics Laboratory Co.) and a solvent of ODCB/deuterated benzene, and it is regarded as the degree of branching.

Preparation of Modified Organoaluminum Compound

Modified organoaluminum compound (methylalmoxane) used as a promotor in the following working and comparative examples was prepared in the following manner.

13 g of copper sulfate pentahydrate was placed in a three-necked flask having an internal volume of 300 ml and equipped with an electromagnetic induction stirrer and was suspended in 50 ml of toluene. Then, 150 ml of a solution containing 1 mmol/ml of trimethylaluminum was added dropwise into the resulting suspension at 0°C over a 2 hour period. Thereafter, the temperature was raised to 25°C and reaction was allowed to take place at that temperature for 24 hours. Subsequently, the reaction solution was filtered to remove toluene from the solution containing the reaction product, thereby affording 4 g of methylaluminoxane as white crystals.

Example 1

(1) Preparation of Isobutylaluminoxane Solution

150 ml of purified hexane was charged into a three-necked 300 ml flask equipped with an electromagnetic inductor stirrer, in a nitrogen atmosphere, and further added was 50 ml of a stock solution of triisobutylaluminum.

Then, the system was held at 0°C and 50 μl of pure water was added over a period of 12 minutes at intervals of 10 seconds under stirring. Thereafter, the system was stirred at 0°C for 2 hours, then warmed up to room temperature, and purified hexane was added to obtain a 1 ml/mol solution. The following are the results of analysis of isobutylaluminoxane obtained:

Molecular weight (benzene freezing point depression): 1073

IR : Measured at an isobutylaluminoxane concentration of 0.5 mmol/ml, using 0.1 mm liquid fixed cell.

Absorption based on Al-O-Al bond:

793 $cm^{-1}$, 775 $cm^{-1}$

(2) Preparation of Catalyst Component

100 ml of purified toluene was charged into a three-necked 300 ml flask equipped with an electromagnetic induction stirrer, in a nitrogen atmosphere, then 5.9 g of triethylaluminum and 2.1 g of indene were added, followed by cooling to -60°C. Into this solution was added over a 20 minute period a solution which had been prepared by placing 50 ml of toluene, 4.2 g of $Zr(OC_3H_7)_4$ and 0.9 g of indene into another 100 cc flask. Thereafter, stirring was conducted at -60°C for 1 hour, then the temperature was raised slowly up to 20°C over a 2 hour period under stirring, followed by further stirring at 45°C for 1 hour, to obtain a solution of dark brown. The concentration of this solution was 0.076 mmol/ml in terms of Zr. Then, 0.17 ml of this solution was poured into a dried eggplant type 50 ml flask in a nitrogen atmosphere and subsequently 3.9 ml of the isobutylaluminoxane solution in hexane prepared in the above (1) was added, followed by stirring at room temperature for 1 hour.

(3) Preparation of Catalyst

1.30 ml of a 1 mmol/ml methylaluminoxane solution was added into the solution prepared in the above (2), followed by stirring at room temperature for 2 hours, to prepare a catalyst.

Polymerization

A stainless steel autoclave having an internal volume of 3 liters and equipped with a stirrer was purged with nitrogen, into which were then added 200 g of dried NaCl and 1 ml of a solution (concentration: 0.5 mmol/ml) of triisobutylaluminum in hexane as a scavenger in the system. Subsequently, the whole quantity of the catalyst prepared in the above (3) was fed.

The polymerization system was heated to 60°C under stirring. Then, a gaseous mixture of ethylene and butene-1 (butene-1/ethylene mole ratio: 0.25) was fed into the autoclave to a total pressure of 9 kgf/cm$^2$G and polymerization was started. The polymerization was continued for 1 hour while maintaining the total pressure at 9 kgf/cm$^2$G under continuous supply of a gaseous ethylene/butene-1 mixture (butene-1/ethylene mole ratio: 0.05).

Thereafter, surplus gaseous mixture was discharged, followed by cooling, the NaCl was removed and the contents withdrawn to afford 38 g of a white polymer.

Physical properties of the polymer are as shown in Table 2.

Example 2

(1) Preparation of Catalyst Component

A catalyst component was prepared in the same way as in Example 1 except that the amount of the transition metal component was changed from 0.17 ml to 0.22 ml, that of the isobutylaluminoxane solution in hexane was changed from 4 ml to 8 ml and that of the 1 mmol/ml methylaluminoxane solution was changed from 1.3 ml to 0.8 ml (the details are as shown in Table 1).

Polymerization

Polymerization was performed in the same way as in Example 1.

Physical properties of the resulting polymer are as shown in Table 2.

Example 3

(1) Preparation of Catalsyt Component

150 ml of purified toluene was charged into a three-necked 300 ml flask equipped with an electromagnetic induction stirrer, in a nitrogen atmosphere, then 3.8 g of $Zr(On\text{-}C_4H_9)_4$ and 2.76 g of cyclopentadienyltrimethylsilane were added and stirring was performed at room temperature for 30 minutes. Thereafter, while the system was held at 0°C, 4.8 g of diethylaluminum chloride was added dropwise over a period of 5 minutes. Then, the system was warmed up to room temperature and stirring was conducted for 2 hours. The concentration of this solution is 0.062 mmol/ml in terms of Zr. Then, 0.25 ml of this solution was poured into a dried eggplant type 50 ml flask in a nitrogen atmosphere and subsequently 7.5 ml of the isobutylaluminoxane solution in hexane prepared in the above (1) was added, followed by stirring at room temperature for 1 hour, to prepare a transition metal catalyst component.

(2) Preparation of Catalyst

Into the solution prepared in the above (1) was added 0.75 ml of a 1 mmol/ml methylaluminoxane solution, followed by stirring at room temperature for 2 hours, to prepare a catalyst.

Polymerization

Polymerization was conducted in the same way as in Example 1.

Physical properties of the resulting polymer are as shown in Table 2.

Example 4

(1) Preparation of Catalyst Component

150 ml of purified toluene was charged into a three-necked 300 ml flask equipped with an electromagnetic inductor stirrer, in a nitrogen atmosphere, then 3.8 g of $Zr(On\text{-}C_4H_9)_4$ and 5.16 g of ethylenebisindenylethane were added and stirring was performed at room temperature for 30 minutes. Thereafter, while the system was held at 0°C, 3.1 g of trimethylaluminum was added dropwise over a 5 minute period. Subsequently, the system was warmed up to room temperature and stirring was performed for 2 hours.

The concentration of this solution was 0.062 mmol/ml in terms of Zr. Then, 0.29 ml of this solution was poured into a dried eggplant type 50 ml flask in a nitrogen atmosphere and thereafter 5.4 ml of the isobutylaluminoxane solution in hexane prepared in the above (1) was added and stirring was conducted at room temperature for 1 hour to prepare a transition metal catalyst component.

(2) Preparation of Catalyst

1.8 ml of a 1 mmol/ml methylaluminoxane solution was added into the solution prepared in the above (1), followed by stirring at room temperature for 2 hours, to prepare a catalyst.

Polymerization

Polymerization was carried out in the same way as in Example 1.
Physical properties of the resulting polymer are as shown in Table 2.

Example 5

(1) Preparation of Catalyst Component

150 ml of purified toluene was charged into a three-necked 300 ml flask equipped with an electromagnetic induction stirrer, in a nitrogen atmosphere, then 3.8 g of $Zr(On-C_4H_9)_4$ and 4.65 g of indene were added, followed by stirring at room temperature for 30 minutes. Thereafter, while the system was held at 0°C, 30 μl of a nBuMgCl solution (concentration: 2 mmol/ml) in ether was added dropwise. After completion of the dropwise addition, the system was warmed up to room temperature and stirring was conducted for 2 hours. The concentration of this solution was 0.063 mmol/ml in terms of Zr. 0.29 ml of this solution was poured into a dried eggplant type 50 ml flask in a nitrogen atmosphere, then 9.0 ml of the isobutylaluminoxane solution in hexane prepared in the above (1) was added and stirring was performed at room temperature for 1 hour to prepare a transition metal catalyst component.

(2) Preparation of Catalyst

1.8 ml of a 1 mmol/ml methylaluminoxane solution was added into the solution prepared in the above (1) and stirring was conducted at room temperature for 2 hours to prepare a catalyst.

Polymerization

Polymerization was carried out in the same way as in Example 1.
Physical properties of the resulting polymer are as shown in Table 2.

Example 6

(1) Preparation of Catalyst Component

150 ml of purified toluene was charged into a three-necked 300 ml flask equipped with an electromagnetic induction stirrer, in a nitrogen atmosphere, then 2.71 g of $Zr(On-C_2H_5)_4$ and 2.0 g of cyclopentadiene were added and stirring was conducted at room temperature for 30 minutes. Thereafter, 6.84 g of triethylaluminum was added dropwise over a 5 minute period while the system was held at 0°C. Then, the system was warmed up to room temperature and stirring was performed for 2 hours. The concentration of this solution was 0.062 mmol/ml in terms of Zr. 0.25 ml of this solution was poured into a dried eggplant type 50 ml flask in a nitrogen atmosphere, then 15 ml of the isobutylaluminoxane solution in hexane prepared in the above (1) was added and stirring was conducted at room temperature for 1 hour to prepare a transition metal catalyst component.

(2) Preparation of Catalyst

0.75 ml of a 1 mmol/ml methylaluminoxane solution was added into the solution prepared in the above (1), followed by stirring at room temperature for 2 hours, to prepare a catalyst.

Polymerization

Polymerization was carried out in the same way as in Example 1.
Physical properties of the resulting polymer are as shown in Table 2.

Example 7

(1) Preparation of Isobutylaluminoxane

150 ml of purified hexane was placed into a three-necked 300 ml flask equipped with an electromagnetic induction stirrer, in a nitrogen atmosphere, then 51 ml of a stock solution of triisobutylaluminum was added. Then, while the system was held at 0°C, 50 μl of pure water was added dropwise over a 15 minute period at intervals of 10 seconds under stirring. Thereafter, the system was stirred at 0°C for 2 hours, then warmed up to room temperature and stirring was further conducted for 5 hours. Subsequently, purified hexane was added to obtain a 1 ml/mol solution. The following is the result of analysis of isobutylaluminoxane obtained:

Molecular weight (benzene freezing point depression): 1513

(2) Preparation of Catalyst Component

150 ml of purified toluene was placed into a three-necked 300 ml flask equipped with an electromagnetic induction stirrer, in a nitrogen atmosphere, then 3.27 g of $Zr(On\text{-}C_3H_7)_4$ and 2.3 g of indene were added. After stirring at room temperature for 30 minutes, 11.6 g of triethylaluminum was added dropwise over a 10 minute period while the system was held at 0°C, followed by stirring at room temperature for 2 hours. The concentration of this solution was 0.61 mmol/ml in terms of Zr. 0.27 ml of this solution was poured into a dried eggplant type 50 ml flask in a nitrogen atmosphere, then 8 ml of the isobutylaluminoxane solution in hexane prepared above in (1) was added and stirring was performed at room temperature for 1 hour to prepare a transition metal catalyst component.

(3) Preparation of Catalyst

1.6 ml of a 1 mmol/ml methylaluminoxane solution was added into the solution prepared above in (1), followed by stirring at room temperature for 2 hours, to prepare a catalyst.

Polymerization

Polymerization was carried out in the same way as in Example 1.

Physical properties of the resulting polymer are as shown in Table 2.

Example 8

(1) Preparation of Isopropylaluminoxane Solution

150 ml of purified hexane was placed into a three-necked 300 ml flask equipped with an electromagnetic induction stirrer, in a nitrogen atmosphere, then 31.2 g of a stock solution of triisopropylaluminum was added. Subsequently, the system was held at 0°C and 50 μl of pure water was added dropwise over a 12 minute period at intervals of 10 seconds under stirring. Thereafter, the system was stirred at 0°C for 2 hours, then warmed up to room temperature and further stirred for 5 hours. Then, purified hexane was added to obtain a 1 ml/mol solution. The following is the result of analysis of isopropyl-aluminoxane obtained:

Molecular weight (benzene freezing point depression): 1150

(2) Preparation of Catalyst Component

100 ml of purified toluene was placed into a three-necked 300 ml flask equipped with an electromagnetic induction stirrer, in a nitrogen atmosphere, then 5.9 g of triethylaluminum and 2.1 of indene were added, followed by cooling to -60°C. Into this solution was added over a 20 minute period a solution which had been prepared by charging 50 ml of toluene, 4.2 g of $Zr(OC_3H_7)_4$ and 0.9 g of indene into another 100 cc flask. Thereafter, stirring was conducted at -60°C for 1 hour, then the temperature was raised slowly up to 20°C over a 2 hour period under stirring, followed by further stirring at 45°C for 1 hour, to obtain a solution of dark brown. The concentration of this solution was 0.076 mmol/ml in terms of Zr. 0.17 ml of this solution was poured into a dried eggplant type 50 ml flask, then 6.5 ml of the isopropylaluminoxane solution in hexane prepared above in (1) was added and stirring was conducted at room temperature for 1 hour.

(3) Preparation of Catalyst

0.65 ml of a 1 mmol/ml methylaluminoxane solution was added into the solution prepared above in (2) and stirring was performed for 2 hours to prepare a catalyst.

Polymerization

Polymerization was carried out in the same way as in Example 1.

Physical properties of the resulting polymer are as shown in Table 2.

Example 9

(1) Preparation of Catalyst Component

150 ml of purified toluene was placed into a three-necked 300 ml flask equipped with an electromagnetic induction stirrer, in a nitrogen atmosphere, then 2.33 g of $ZrCl_4$ and 4.65 g of indene were added and stirring was conducted at room temperature for 30 minutes. Thereafter, the system was held at 0°C and 40 μl of a $C_2H_5MgCl$ solution in ether (concentration: 2 mmol/ml) was added dropwise. After completion of the dropwise addition, the system was warmed up to room temperature and stirring was performed for 2 hours. The concentration of this solution was 0.064 mmol/ml in terms of Zr. 0.31 ml of this solution was poured into a dried eggplant type 50 ml flask in a nitrogen atmosphere and then 6.0 ml of the isobutylaluminoxane solution in hexane prepared in Example 1 was added, followed by stirring at room temperature for 1 hour, to prepare a transition metal catalyst component.

(2) Preparation of Catalyst

2 ml of a 1 mmol/ml methylaluminoxane solution was added into the solution prepared above in (1) and stirring was conducted at room temperature for 2 hours to prepare a catalyst.

Polymerization

Polymerization was carried out in the same way as in Example 1.

Physical properties of the resulting polymer are as shown in Table 2.

Example 10

(1) Preparation of $Zr(C_6H_5)_4$

500 ml of a diethyl ether solution containing 70 g of benzylmagnesium chloride was put into a three-necked 1-liter flask equipped with an electromagnetic induction stirrer, at 0°C in a nitrogen atmosphere, then 30 g of $ZrCl_4$ was added over a 30 minute period. The resulting mixture was stirred for 2 hours, while the temperature was raised up to room temperature. Then, 300 ml of decalin was added and stirring was conducted at room temperature for 1 hour. The resulting $MgCl_2$ was isolated. The decalin solution obtained was heated to 50°C and ether removed while the heating was continued and nitrogen introduced. 32 g of $Zr(C_6H_5)_4$ was obtained from the decalin solution thus prepared.

(2) Preparation of Catalyst Component

150 ml of purified toluene was put into a three-necked 300 ml flask equipped with an electromagnetic induction stirrer, in a nitrogen atmosphere, then 4.55 g of $Zr(C_6H_5)_4$ prepared above in (1) and 4.65 g of indene were added and stirring was conducted at room temperature for 30 minutes. Then, the system was held at 0°C and 12.3 ml of a stock solution of $AlC_2H_{52}(OC_2H_5)$ was added dropwise over a 15 minute period. Thereafter, the system was warmed up to room temperature and stirring was performed for 2 hours. The concentration of this solution is 0.06 mmol/ml in terms of Zr. 0.24 ml of this solution was poured into a dried eggplant type 50 ml flask, then 4.2 ml of the isobutyl-aluminoxane solution in hexane prepared in Example 1 was added and stirring was conducted at room temperature for 1 hour to prepare a transition metal catalyst component.

(3) Preparation of Catalyst

1.4 ml of a 1 mmol/ml methylaluminoxane solution was added into the solution prepared above in (2), followed by stirring at room temperature for 2 hours, to prepare a catalyst.

Polymerization

Polymerization was carried out in the same way as in Example 1.

Physical properties of the resulting polymer are as shown in Table 2.

Example 11

(1) Preparation of Catalyst Component

150 ml of purified toluene was put into a three-necked 300 ml flask equipped with an electromagnetic induction stirrer, in a nitrogen atmosphere, then 3.4 g of $Ti(OC_4H_9)_4$ and 4.65 g of indene were added and stirring was conducted at room temperature for 30 minutes. Then, the system was held at 0°C and 40 μl of a nBuMgCl solution in ether (concentration: 2 mmol/ml) was added dropwise. After completion of the dropwise addition, the system was warmed up to room temperature and stirring was performed for 2 hours.

The concentration of this solution was 0.063 mmol/ml in terms of Zr. 0.24 ml of this solution was poured into a dried eggplant type 50 ml flask in a nitrogen atmosphere, then 4.5 ml of the isobutylaluminoxane solution in hexane prepared in Example 1 was added, followed by stirring at room temperature for 1 hour, to prepare a transition metal catalyst component.

(2) Preparation of Catalyst

1.5 ml of a 1 mmol/ml methylaluminoxane solution was added into the solution prepared above in (1) and stirring was conducted at room temperature for 2 hours to prepare a catalyst.

Polymerization

Polymerization was carried out in the same way as in Example 1.

Physical properties of the resulting polymer are as set out in Table 2.

Example 12

(1) Preparation of Transition Metal Catalyst Component

150 ml of purified toluene was put into a three-necked 300 ml flask equipped with an electromagnetic induction stirrer, in a nitrogen atmosphere, then 4.1 g of $Hf(OC_3H_7)_4$ and 3.5 g of indene were added and stirring was performed at room temperature for 30 minutes. Thereafter, the system was held at 0°C and 50 μl of a PhMgCl solution in ether (concentration: 2 mmol/ml) was added. After completion of the dropwise addition, the system was warmed up to room temperature and stirring was conducted for 2 hours. The concentration of this solution was 0.065 mmol/ml in terms of Zr. 0.29 ml of this solution was poured into a dried eggplant type 50 ml flask, then 5.7 ml of the isobutyl-aluminoxane solution in hexane prepared in Example 1 was added, followed by stirring at room temperature for 1 hour, to prepare a transition metal catalyst component.

(2) Preparation of Catalyst

1.9 ml of a 1 mmol/ml methylaluminoxane solution was added into the solution prepared above in (1) and stirring was conducted at room temperature for 2 hours to prepare a catalyst.

Polymerization

Polymerization was carried out in the same way as in Example 1.

Physical properties of the resulting polymer are as set out in Table 2.

Example 13

(1) Preparation of Catalyst

The catalyst prepared in Example 1 was used.

Polymerization

A stainless steel autoclave having an internal volume of 3 liters and equipped with a stirrer was purged with nitrogen, into which were then added 1 liter of purified hexane and 1 ml of a tributylaluminum solution in hexane (concentration: 0.5 mmol/ml) as a scavenger in the system. Subsequently, the whole quantity of the catalyst referred to above in (1) was fed.

The polymerization system was heated to 60°C under stirring. Then, ethylene was fed to a total pressure of 9 kgf/$cm^2$G to start polymerization. The polymerization was continued for 1 hour while the total pressure was maintained at 9 kgf/$cm^2$G under continuous supply of ethylene.

Thereafter, surplus gas was discharged, followed by cooling, and the contents were withdrawn to afford 82 g of a white polymer. Physical properties of the polymer are as set out in Table 2.

Example 14

(1) Preparation of Catalyst Component

150 ml of purified toluene was put into a three-necked 300 ml flask equipped with an electromagnetic induction stirrer, in a nitrogen atmosphere, then 3.8 g of $Zr(On\text{-}C_4H_9)_4$ and 5.16 g of ethylenebisindenylethane were added and stirring was performed at room temperature for 30 minutes. Thereafter, the system

was held at 0°C and 3.1 g of trimethylaluminum was added dropwise over a 5 minute period, then the system was warmed up to room temperature and stirring was conducted for 2 hours. The concentration of this solution is 0.062 mmol/ml in terms of Zr. 0.29 ml of this solution was poured into a dried eggplant type 50 ml flask in a nitrogen atmosphere, then 9 ml of the isobutyl-aluminoxane solution in hexane prepared in Example 1 was added, followed by stirring at room temperature for 1 hour, to prepare a transition metal catalyst component.

(2) Preparation of Catalyst

5.4 ml of a 1 mmol/ml methylaluminoxane solution was added into the solution prepared above in (1) and stirring was performed at room temperature for 2 hours to prepare a catalyst.

Polymerization

A stainless steel autoclave having an internal volume of 3 liters and equipped with a stirrer was purged with nitrogen, into which were then added 1 liter of purified toluene and 1 ml of a triisobutylaluminum solution in hexane (concentration: 0.5 mmol/ml) as a scavenger in the system. Subsequently, the whole quantity of the catalyst prepared above in (2) was fed.

The polymerization system was heated to 30Åé under stirring. Then, propylene was fed to a total pressure of 3.5 kgf/$cm^2$G to start polymerization. The polymerization was continued for 2 hours while the total pressure was maintained at 3.5 kgf/$cm^2$G under continuous supply of propylene.

Thereafter, surplus gas was discharged, followed by cooling, and the contents were withdrawn to afford 18 g of a white polymer. Physical properties of the polymer are as set out in Table 2.

Comparative Example 1

(1) Preparation of Catalyst Component

100 ml of purified toluene was put into a three-necked 100 ml flask equipped with an electromagnetic induction stirrer, in a nitrogen atmosphere, then 5.9 g of triethylaluminum and 2.1 g of indene were added, followed by cooling to -60°C. Into this solution was added over a 20 minute period a solution which had been prepared by placing 50 ml of toluene, 4.2 g of $Zr(OC_3H_7)_4$ and 0.9 g of indene into another 100 cc flask. Thereafter, stirring was conducted at -60°C for 1 hour, then the temperature was raised slowly to 20°C over a 2 hour period under stirring, followed by further stirring at 45°C for 1 hour, to give a solution of dark brown. The concentration of this solution was 0.076 mmol/ml in terms of Zr.

(2) Preparation of Catalyst

0.17 ml of the solution of the transition metal catalyst component prepared above in (1) was poured into a dried eggplant type 50 ml flask in a nitrogen atmosphere, then 1.30 ml of a 1 mmol/ml methylaluminoxane solution was added and stirring was performed at room temperature for 2 hours to prepare a catalyst.

Polymerization

Polymerization was carried out in the same manner as in Example 1.

Physical properties of the resulting polymer are as set out in Table 2.

Example 15

(1) Preparation of Transition Metal Catalyst Component

150 ml of purified toluene was put into a three-necked 300 ml flask equipped with an electromagnetic induction stirrer in a nitrogen atmosphere, then 3.0 g of $Zr(OPr)_3Cl$ and 9.3 g of indene were added and stirring was conducted at room temperature for 30 minutes. Thereafter, the system was held at 0°C and 4.6 g of triethylaluminum was added dropwise over a 30 minute period, then the system was warmed up to room temperature, followed by stirring for 2 hours, to prepare a transition metal catalyst component. The concentration of this solution was 0.060 mmol/ml. 0.30 ml of this solution was poured into a dried eggplant type 50 ml flask, then 5.4 ml of the isobutylaluminoxane solution in hexane prepared in Example 1 was added and stirring was performed at room temperature for 1 hour.

(2) Preparation of Catalyst

1.8 ml of a 1 mmol/ml methylaluminoxane solution was added into the solution prepared above in (1), followed by stirring at room temperature for 2 hours, to prepare a catalyst.

Polymerization

Polymerization was carried out in the same manner as in Example 1.
Physical properties of the resulting polymer are as set out in Table 2.

Example 16

(1) Preparation of Transition Metal Catalyst Component

150 ml of purified toluene was put into a three-necked 300 ml flask equipped with an electromagnetic induction stirrer, in a nitrogen atmosphere, then 4.0 g of $zr(C_7C_7)_3Cl$ and 4.7 g of indene were added and stirring was conducted at room temperature for 30 minutes. Thereafter, the system was held at 0°C and 2.9 g of triethylaluminum was added dropwise over a 30 minute period, then the system was warmed up to room temperature and stirring was performed for 2 hours to prepare a transition metal catalyst component. The concentration of this solution was 0.062 mmol/ml in terms of Zr. 0.25 ml of this solution was poured into a dried eggplant type 50 ml flask, then 7.8 ml of the isobutyl-aluminoxane solution in hexane prepared in Example 1 was added, followed by stirring at room temperature for 1 hour.

(2) Preparation of Catalyst

A 1 mmol/ml methylaluminoxane solution was added into the solution prepared above in (1) and stirring was made at room temperature for 2 hours to prepare a catalyst.

Polymerization

Polymerization was carried out in the same manner as in Example 1.
Physical properties of the resulting polymer are as set out in Table 2.

Example 17

(1) Preparation of Transition Metal Catalyst Component

150 ml of purified toluene was fed into a three-necked 300 ml flask equipped with an electromagnetic induction stirrer, in a nitrogen atmosphere, then 4.0 g of $Zr(OBu)_4$ and 11.6 g of indene were added, followed by stirring at room temperature for 30 minutes. Thereafter, the system was held at 0°C and 50 µl of a benzylmagnesium chloride ($C_7H_7MgCl$) solution in ether (concentration: 2 mmol/ml) was added dropwise, then the system was warmed up to room temperature and stirring was performed for 2 hours to prepare a transition metal catalyst component. The concentration of this solution was 0.060 mmol/ml in terms of Zr. 0.25 ml of this solution was poured into a dried eggplant type 50 ml flask in a nitrogen atmosphere, then 4.5 ml of the isobutylaluminoxane solution in hexane prepared in Example 1 was added, followed by stirring at room temperature for 1 hour.

(2) Preparation of Catalyst

A 1 mmol/ml methylaluminoxane solution was added into the solution prepared above in (1) and stirring was made at room temperature for 2 hours to prepare a catalyst.

Polymerization

Polymerization was performed in the same manner as in Example 1.
Physical properties of the resulting polymer are as set out in Table 2.

Example 18

(1) Preparation of Catalyst

The catalyst prepared in Example 1 was used.

Polymerization

A stainless steel autoclave having an internal volume of 3 liters and equipped with a stirrer was purged with nitrogen, into which were then added 300 ml of purified toluene and 1 ml of a triisobutylaluminum solution in hexane (concentration: 0.5 mmol/ml) as a scavenger in the system. Further added were 3.6 ml of 1,5-hexadiene, 0.6 ml of a 1 mmol/ml methylaluminoxane solution and subsequently the catalyst referred to in the

above (1) in an amount of 0.5 mg as zirconium atom. Then, ethylene was fed into the autoclave and polymerization was started at 30°C. The polymerization was continued for 6 hours while ethylene was supplied into the autoclave continuously to maintain the internal pressure at 9 kgf/cm²G.

Thereafter, surplus gas in the reactor was discharged and the reactor was cooled to afford 68 g of ethylene/1,5-hexadiene copolymer. This copolymer had an ethylene content of 97.5 mol%, a density of 0.9239 g/cm³ and a melting point of 137°C. Catalytic activity was 137,000 g/gZr.

Example 19

(1) Preparation of Catalyst

The catalyst prepared in Example 4 was used.

(2) Polymerization

A stainless steel autoclave having an internal volume of 3 liters and equipped with a stirrer was purged with nitrogen, into which were then added 300 ml of purified toluene and 1 ml of a triisobutylaluminum solution in hexane (concentration: 0.5 mmol/ml) as a scavenger in the system. Further added were 1 ml of a 1 mmol/ml methylaluminoxane solution and subsequently the catalyst referred to in the above (1) in an amount of 0.5 mg as zirconium atom. Then, ethylene was fed into the autoclave and polymerization was started at 30°C. The polymerization was continued for 15 minutes while the internal pressure was maintained at 9 kgf/cm²G under continuous supply of ethylene into the autoclave. Thereafter, 54 ml of methyl methacrylate was fed into the reactor and ethylene was fed to a total pressure of 9 kgf/cm²G. In this condition the polymerization was continued at 30°C for 3 hours. Thereafter, surplus gas in the reactor was discharged, followed by cooling of the reactor, to afford 17 g of polymer.

The polymer was dissolved in toluene, into which was then added acetone to precipitate the polymer. The precipitated polymer was dried and the dried polymer was formed into a 25 μm thick sheet (pressed at 190°C for 5 minutes) and checked for infrared absorption spectrum. As a result, absorption based on carbonyl group was recognized at 1740 $cm^{-1}$. The dried polymer had an Mw/Mn ratio of 4.9 and an intrinsic viscosity of 2.0 dl/g (135°C tetralin). Catalytic activity was 34,000g.polymer/g.Zr.

Example 20

(1) Preparation of Catalyst

The catalyst prepared in Example 4 was used.

(2) Polymerization

A stainless steel autoclave having an internal volume of 3 liters and equipped with a stirrer was purged with nitrogen, into which were then added 300 ml of purified toluene and 1 ml of a triisobutylaluminum solution in hexane (concentration: 0.5 mmol/ml) as a scavenger in the system. Further added were 1 ml of a 1 mmol/ml methylaluminoxane solution and subsequently 0.5 mg of the catalyst referred to in the above (1) in an amount of 0.5 mg as zirconium atom. Then, the system was heated to 50°C and a gaseous mixture of propylene and butene-1 (propylene 85 mol%, butene-1 15 mol%) was fed into the autoclave up to a pressure of 5 kgf/cm²G to start polymerization. The polymerization was continued for 2 hours while the internal pressure was maintained at 5 kgf/cm²G under continuous supply of the above gaseous mixture into the autoclave.

Thereafter, surplus gas in the reactor was discharged, and methanol was fed into the reactor to precipitate the resulting product. The product was washed with methanol and then dried to yield 38 g of copolymer.

The copolymer had a butene-1 content of 11.2 mol% ($^{13}C$-NMR), an Mw/Mn of 4.2 (GPC) and an intrinsic viscosity of 0.92 dl/g (135°C tetralin). Catalytic activity was 76,000g.copolymer/g.Zr.

Example 21

(1) Preparation of Catalyst

The catalyst prepared in Example 4 was used.

(2) Polymerization

A stainless steel autoclave having an internal volume of 3 liters and equipped with a stirrer was purged with nitrogen, into which were then added 300 ml of purified toluene and 1 ml of a triisobutylaluminum solution in hexane (concentration: 0.5 mmol/ml) as a scavenger in the system. Further added were 5 ml of cyclopentene and the catalyst referred to in the above (1) in an amount of 1 mg as zirconium atom. Thereafter, reaction was allowed to take place at 30°C for 24 hours. Then, ethylene was- fed into the autoclave up to a pressure of 3.5 kgf/cm²G to start polymerization. The polymerization was continued for 1 hour while

the internal pressure was maintained at 3.5 kgf/cm$^2$G under continuous supply of ethylene into the autoclave.

Thereafter, surplus gas in the reactor was discharged, and methanol was fed into the reactor to precipitate the resulting product. The product was washed with methanol and dried to yield 38 g of copolymer.

The copolymer had a butene-1 content of 11.2 mol% ($^{13}$C-NMR), an Mw/Mn of 4.2 (GPC) and an intrinsic viscosity of 0.92 dl/g (135°C tetralin). Catalytic activity was 76,000g.copolymer/g.Zr.

Example 22

(1) Preparation of Catalyst

The catalyst prepared in Example 4 was used.

(2) Polymerization

A stainless steel autoclave having an internal volume of 3 liters and equipped with a stirrer was purged with nitrogen, into which were then added 300 ml of purified toluene and 1 ml of a triisobutylaluminum solution in hexane (concentration: 0.5 mmol/ml) as a scavenger in the system. Further added were 5 ml of cyclopentene, 1 ml of a 1 mmol/ml methylaluminoxane solution and the catalyst referred to in the above (1) in an amount of 1 mg as zirconium atom. Thereafter, reaction was allowed to take place at 30°C for 24 hours. Then, ethylene was fed into the autoclave up to a pressure of 3.5 kgf/cm$^2$G to start polymerization. The polymerization was continued for 1 hour while the internal pressure was maintained at 3.5 kgf/cm$^2$G under continuous supply of ethylene into the autoclave.

Thereafter, surplus gas in the reactor was discharged and the resulting product was washed with methanol and dried to yield 25 g of polymer.

The polymer had an ethylene content of 97.5 mol% ($^{13}$C-NMR), an Mw/Mn of 4.5 (GPC) and an intrinsic viscosity of 1.5 dl/g (135°C tetralin). Catalytic activity was 25,000g.polymer/g.Zr.

Table 1

| | Transition Metal Catalyst Component | | | | composition Ratio | Amount in Polymerization | | Al/Me |
|---|---|---|---|---|---|---|---|---|
| | Component(1) | Component(2) | Component(3) | Component(4) | (1):(2):(3):(4) | Amount of Transition Metal | Modified Al | Ratio |
| | $Me(OR)_nX_{4-n}$ | Cyclic Compound | | Branched, modified organoaluminum compound | Molar Ratio | mg | | |
| Example 1 | $Zr(On\text{-}Pr)_4$ | indene | $AlEt_3$ | IBAO | 1 : 2 : 4 : 300 | 1.2 | MAO | 100 |
| 2 | 〃 | 〃 | 〃 | 〃 | 1 : 2 : 4 : 500 | 1.5 | 〃 | 50 |
| 3 | $Zr(On\text{-}Bu)_4$ | $CpSiMe_3$ | $AlEt_2Cl$ | 〃 | 1 : 2 : 4 : 500 | 1.4 | 〃 | 〃 |
| 4 | 〃 | $Et(Ind)_2$ | $AlMe_3$ | 〃 | 1 : 2 : 8 : 300 | 1.6 | 〃 | 100 |
| 5 | 〃 | indene | nBuMgCl | 〃 | 1 : 4 : 6 : 500 | 1.6 | 〃 | 〃 |
| 6 | $Zr(OEt)_4$ | cyclopentadiene | $AlEt_3$ | 〃 | 1 : 3 : 6 : 1000 | 1.4 | 〃 | 50 |
| 7 | $Zr(On\text{-}Pr)_4$ | indene | 〃 | IBAO(1:1.25) | 1 : 2 : 10 : 500 | 1.5 | 〃 | 100 |
| 8 | 〃 | 〃 | 〃 | IPAO(1:1) | 1 : 2 : 4 : 500 | 1.2 | 〃 | 50 |
| 9 | $ZrCl_4$ | 〃 | EtMgCl | IBAO(1:1) | 1 : 4 : 8 : 300 | 1.8 | 〃 | 100 |
| 10 | $ZrBz_4$ | 〃 | $AlEt_2(OEt)$ | 〃 | 1 : 4 : 8 : 300 | 1.3 | 〃 | 〃 |
| 11 | $Ti(On\text{-}Bu)_4$ | 〃 | nBuMgCl | 〃 | 1 : 4 : 8 : 300 | 1.4 | 〃 | 〃 |
| 12 | $Hf(On\text{-}Pr)_4$ | 〃 | PhMgCl | 〃 | 1 : 3 : 10 : 300 | 1.7 | 〃 | 〃 |
| 13 | $Zr(OPr)_4$ | 〃 | $AlEt_3$ | 〃 | 1 : 2 : 4 : 300 | 1.2 | 〃 | 100 |
| 14 | $Zr(On\text{-}Bu)_4$ | $Et(Ind)_2$ | $AlMe_3$ | 〃 | 1 : 2 : 8 : 300 | 1.6 | 〃 | 300 |
| 15 | $Zr(OnPr)_3Cl$ | indene | $AlEt_3$ | 〃 | 1 : 8 : 4 : 300 | 1.3 | 〃 | 100 |
| Comparative Example 1 | $Zr(OPr)_4$ | indene | $AlEt_3$ | 〃 | 1 : 2 : 4 : 0 | 1.2 | 〃 | 100 |
| 2 | 〃 | 〃 | 〃 | 〃 | 1 : 2 : 4 : 0 | 1.4 | 〃 | 500 |
| Example 16 | $ZrBz_3Cl$ | indene | $AlEt_3$ | 〃 | 1 : 4 : 2 : 500 | 1.7 | 〃 | 50 |
| 17 | $Zr(OnBu)_4$ | 〃 | BzMgCl | 〃 | 1 : 10 : 10 : 300 | 1.8 | 〃 | 100 |

Table 2

| | | Yield g | Catalytic Activity g/gMe | Mw/Mn | M F R g/10min | Density g/cm³ | Melting Point °C |
|---|---|---|---|---|---|---|---|
| Example | 1 | 38 | 46,000 | 5.4 | 1.0 | 0.9215 | 114.0 |
| | 2 | 27 | 40,000 | 4.6 | 0.6 | 0.9219 | 114.3 |
| | 3 | 37 | 52,000 | 4.6 | 0.4 | 0.9223 | 114.7 |
| | 4 | 27 | 48,000 | 6.7 | 2.3 | 0.9116 | 105.1 |
| | 5 | 18 | 29,000 | 5.9 | 0.5 | 0.9210 | 114.8 |
| | 6 | 44 | 62,000 | 3.3 | 16.3 | 0.9285 | 113.9 |
| | 7 | 35 | 53,000 | 5.1 | 0.3 | 0.9221 | 114.8 |
| | 8 | 32 | 38,000 | 5.3 | 1.5 | 0.9232 | 115.3 |
| | 9 | 11 | 19,000 | 3.4 | 24.1 | 0.9241 | 116.1 |
| | 10 | 19 | 25,000 | 5.3 | 0.8 | 0.9269 | 115.7 |
| | 11 | 15 | 21,000 | 3.9 | 0.6 | 0.9223 | 114.5 |
| | 12 | 6 | 10,000 | [illegible].1 | 0.2 | 0.9285 | 116.1 |
| | 13 | 82 | 98,000 | 3.8 | 0.08 | 0.9510 | 129.9 |
| | 14 | 18 | 29,000 | 3.3 | 5.2 | 0.9031 | 140.8 |
| | 15 | 55 | 42,000 | 4.3 | 1.9 | 0.9213 | 113.9 |
| Comparative Example | 1 | 17 | 20,000 | 4.7 | 3.1 | 0.9162 | 107.7 |
| | 2 | 56 | 40,000 | 4.6 | 4.8 | 0.9228 | 114.9 |
| Example | 16 | 54 | 32,000 | 4.2 | 1.3 | 0.9250 | 115.3 |
| | 17 | 61 | 34,000 | 4.6 | 3.2 | 0.9243 | 116.3 |

Example 23

$Zr(OC_4H_9)_4$ (hereinafter referred to as $Zr(OBu)_4$) (0.22 g), indene (0.23 ml), 2,2,2-trifluoroethyl triphenylsilyl ether (1.1 x $10^{-9}$ mole) and triethyl aluminum (0.19 ml) were dissolved in 13 ml of toluene. Into 0.5 ml of the obtained solution, a solution of methylaluminoxane in toluene (Al/Zr = 100) was added, and stirring was performed for 30 minutes at room temperature. The solution was introduced into a 2 ℓ autoclave and a gaseous mixture of ethylene and 1-butene (butene-1/ethylene mole ratio : 0.2) was fed thereto to a pressure of 9 atm and polymerization was performed at 60°C for 2 hours. Catalytic activity was 140 Kg/g Zr, density was 0.9210

g/cm$^3$, MFR was 0.5 g/10 min (190°C), melting point was 116.2°C and Mw/Mn was 9.3.

Example 24

$Zr(OBu)_3Cl$ (0.26 g), indene (0.28 ml) and 3-perfluorohexyl-1,2-epoxypropane (4.4 × $10^{-5}$ mole) were dissolved in 17 ml of toluene. Into 0.5 ml of the obtained solution, a solution of methylaluminoxane in toluene (Al/Zr = 100) was added, and stirring was performed for 30 minutes at room temperature. The solution was introduced into a 2 ℓ autoclave and a gaseous mixture of ethylene and 1-butene (butene-1/ethylene mole ratio : 0.2) was fed thereto to a pressure of 9 atm and polymerization was performed at 60°C for 2 hours. Catalytic activity was 20 Kg/g Zr, density was 0.9284 g/cm$^3$, MFR was 1.2 g/10 min (190°C), melting point was 116.7°C and Mw/Mn was 9.6.

Example 25

$Zr(OBu)_2Cl_2$ (0.26 g), indene (0.28 ml), diethylaluminumchloride (0.28 ml) and perfluoromethylcyclohexane (4.4 × $10^{-5}$ mole) were dissolved in 17 ml of toluene. Into 0.5 ml of the obtained solution, a solution of methylaluminoxane in toluene (Al/Zr = 100) was added, and stirring was performed for 30 minutes at room temperature. The solution was introduced into a 2 ℓ autoclave and a gaseous mixture of ethylene and 1-butene (butene-1/ethylene mole ratio : 0.2) was fed thereto to a pressure of 9 atm and polymerization was performed at 60°C for 2 hours. Catalytic activity was 29 Kg/g Zr, density was 0.9230 g/cm$^3$, MFR was 0.82 g/10 min (190°C), melting point was 117.5°C and Mw/Mn was 8.2.

Example 26

$Ti(OBu)_4$ (0.13 g), indene (0.35 ml), 2,2-bisethoxy-1,1,3,3,3-hexylfluoropropane (2.2 × $10^{-5}$ mole) and triethylaluminum (0.29 ml) were dissolved in 17 ml of toluene. Into 0.5 ml of the obtained solution, a solution of methylaluminoxane in toluene (Al/Ti = 100) was added, and stirring was performed for 30 minutes at room temperature. The solution was introduced into a 2 ℓ autoclave and a gaseous mixture of ethylene and 1-butene (butene-1/ethylene mole ratio : 0.2) was fed thereto to a pressure of 9 atm and polymerization was performed at 60°C for 2 hours. Catalytic activity was 29 Kg/g Ti, density was 0.9230 g/cm$^3$, MFR was 0.82 g/10 min (190°C), melting point was 117.5°C and Mw/Mn was 8.2.

Example 27

$Zr(OPr)_4$ (0.29 g), indene (0.41 ml) and diethylethoxyaluminum (0.67 ml) were dissolved in 40 ml of toluene. Into the solution, 2,2-bis(2,2,2-trifluoroethoxy)propane (2,2 × $10^{-5}$ mole) was added and stirred for 30 minutes at room temperature. Into 0.5 ml of the obtained solution, a solution of methylaluminoxane in toluene (Al/Zr = 100) was added, and stirring was performed for 30 minutes at room temperature. The solution was introduced into a 2 ℓ autoclave and a gaseous mixture of ethylene and 1-butene (butene-1/ethylene mole ratio : 0.2) was fed thereto to a pressure of 9 atm and polymerization was performed at 60°C for 2 hours. Catalytic activity was 130 Kg/g Zr, density was 0.9230 g/cm$^3$, MFR was 1.5 g/10 min (190°C), melting point was 114.2°C and Mw/Mn was 7.0.

Example 28

$Hf(OPr)_4$ (0.23 g), indene (0.23 ml), chloropentafluorobenzene (2.2 × $10^{-5}$ mole) and triethylaluminum (0.38 ml) were dissolved in 25 ml of toluene. Into 0.5 ml of the obtained solution, a solution of methylaluminoxane in toluene (Al/Hf = 100) was added, and stirring was performed for 30 minutes at room temperature. The solution was introduced into a 2 ℓ autoclave and a gaseous mixture of ethylene and 1-butene (butene-1/ethylene mole ratio : 0.2) was fed thereto to a pressure of 9 atm and polymerization was performed at 60°C for 2 hours. Catalytic activity was 40 Kg/g Zr, density was 0.9230 g/cm$^3$, MFR was 0.9 g/10 min (190°C), melting point was 117.2°C and Mw/Mn was 8.9.

Example 29

200 g of sea sand which had been acid-washed and heat-treated at 300°C were introduced into a 2 ℓ autoclave, which was fully dried. $Zr(OBu)_4$ (0.11 g), indene (0.23 ml) and trihexylaluminum (0.69 ml) were dissolved into 13 ml of toluene. Into 0.5 ml of the solution, 2,2,2-trifluoroethyl tolytyl ether (2.2 × $10^{-5}$ mole) was

added, and stirring was performed for 30 minutes at room temperature. The solution was introduced into a 2 ℓ autoclave and a gaseous mixture of ethylene and 1-butene (butene-1/ethylene mole ratio : 0.2) was fed thereto to a pressure of 9 atm and polymerization was performed at 60°C for 2 hours. Catalytic activity was 134 Kg/g Zr, density was 0.9208 g/cm$^3$, MFR was 3.5 g/10 min (190°C), melting point was 112.3°C and Mw/Mn was 7.5.

Example 30

200 g of sea sand which had been acid-washed and heat-treated at 300°C were introduced into a 2 ℓ autoclave, which was fully dried. $Zr(OBu)_4$ (0.11 g), 1,2-bisindenylethane (0.1 g), 2,2,2-trifluoroethyl tolytyl ether ($1.1 \times 10^{-5}$ mole) and trihexylaluminum (0.69 ml) were dissolved in 13 ml of toluene. Into 0.5 ml of the obtained solution a solution of methylaluminoxane in toluene (Al/Zr = 100) was added, and stirring was performed for 30 minutes at room temperature. The solution was introduced into a 2 ℓ autoclave and a gaseous mixture of ethylene and 1-butene (butene-1/ethylene mole ratio : 0.2) was fed thereto to a pressure of 9 atm and polymerization was performed at 60°C for 2 hours. Catalytic activity was 134 Kg/g Zr, density was 0.9208 g/cm$^3$, MFR was 3.5 g/10 min (190°C), melting point was 112.3°C and Mw/Mn was 7.5.

Example 31

$Zr(OBu)_4$ (0.22 g), indene (0.23 ml) and n-butyl lithium (5 mmole) were dissolved in 13 ml of toluene. Into 0.5 ml of the obtained solution a solution of methylaluminoxane in toluene (Al/Zr = 100) and was added and stirring was performed for 30 minutes at room temperature. Further, hexafluorobenzene ($2.2 \times 10^{-5}$ mole) was added and stirring was performed for 30 minutes at room temperature. The solution was introduced into a 2 ℓ autoclave and a gaseous mixture of ethylene and 1-butene (butene-1/ethylene mole ratio: 0.2) was fed thereto to a pressure of 9 atm and polymerization was performed at 60°C for 2 hours. Catalytic activity was 33 Kg/g Zr, density was 0.9220 g/cm$^3$, MFR was 1.2 g/10 min (190°C), melting point was 116.3°C and Mw/Mn was 9.1.

Example 32

$Ti(OBu)_4$ (0.13 g), indene (0.35 ml) and n-butyl magnesium (5 mmole) were dissolved in 17 ml of toluene. Into 0.5 ml of the obtained solution a solution of methylaluminoxane in toluene (Al/Ti = 100) and was added and stirring was performed for 30 minutes at room temperature. Further, 1,1,1-triethoxy-2,2,2-trifluoroethane ($2.2 \times 10^{-5}$ mole) was added and stirring was performed for 30 minutes at room temperature. The solution was introduced into a 2 ℓ autoclave and a gaseous mixture of ethylene and 1-butene (butene-1/ethylene mole ratio: 0.2) was fed thereto to a pressure of 9 atm and polymerization was performed at 60°C for 2 hours. Catalytic activity was 30 Kg/g Zr, density was 0.9270 g/cm$^3$, MFR was 0.01 g/10 min (190°C), melting point was 119.3°C and Mw/Mn was 7.5.

Example 33

$Zr(OPr)_4$ (0.29 g), 1,3-dimethylcyclopentadiene (0.41 ml) and diethylethoxyaluminum (0.07 ml) were dissolved in 40 ml of toluene. Into 0.5 ml of the solution, a solution of methylaluminoxane in toluene was added (Al/Zr = 100) and stirring was performed for 30 minutes at room temperature. Further, 1,1-tri-(2,2,2-trifluoroethoxy)ethane ($2.2 \times 10^{-5}$ mole) was added and stirring was performed for 30 minutes at room temperature. The solution was introduced into a 2 ℓ autoclave and a gaseous mixture of ethylene and 1-butene (butene-1/ethylene mole ratio: 0.2) was fed thereto to a pressure of 9 atm and polymerization was performed at 60°C for 2 hours. Catalytic activity was 130 Kg/g Zr, density was 0.9200 g/cm$^3$, MFR was 0.6 g/10 min (190°C), melting point was 113.2°C and Mw/Mn was 6.5.

Example 34

$Zr(OPr)_4$ (0.29 g), 1,3-dimethylcyclopentadiene (0.41 ml) and diethylethoxyaluminum (0.07 ml) were dissolved in 40 ml of toluene. Into 0.5 ml of the solution, a solution of methylaluminoxane in toluene was added (Al/Zr = 100) and stirring was performed for 30 minutes at room temperature. Further, 1,1-tri-(2,2,2-trifluoroethoxy)ethane ($2.2 \times 10^{-5}$ mole) was added and stirring was performed for 30 minutes at room temperature. The solution was introduced into a 2 ℓ autoclave and an ethylene gas was fed thereto to a pressure of 9 atm and polymerization was performed at 60°C for 2 hours. Catalytic activity was 30 Kg/g Zr, density was 0.9630 g/cm$^3$, MFR was 0.6 g/10 min (190°C), melting point was 135.2°C and Mw/Mn was 4.5.

Comparative Example 3

Example 24 was conducted excepting that 3-perfluorohexyl-1,2-epoxypropane was not used.

Catalytic activity was 10 Kg/g Zr, density was 0.9208 g/cm$^3$, MFR was 0.3 g/10 min (190°C), melting point was 112.3°C and Mw/Mn was 4.3.

Comparative Example 4

Example 27 was conducted excepting that 2,2-bis(2,2,2-trifluoroethoxy)propane was not used.

Catalytic activity was 62 Kg/g Zr, density was 0.9208 g/cm$^3$, MFR was 0.7 g/10 min (190°C), melting point was 113.7°C and Mw/Mn was 4.3.

Comparative Example 5

Example 28 was conducted excepting that chloropentafluorobenzene was not used.

Catalytic activity was 20 Kg/g Zr, density was 0.9211 g/cm$^3$, MFR was 0.4 g/10 min (190°C), melting point was 114.5°C and Mw/Mn was 6.3.

Comparative Example 6

Example 29 was conducted excepting that 2,2-trifluoroethyl tolytyl ether was not used.

Catalytic activity was 74 Kg/g Zr, density was 0.9100 g/cm$^3$, MFR was 1.8 g/10 min (190°C), melting point was 111.0°C and Mw/Mn was 5.5.

Comparative Example 7

Example 32 was conducted excepting that 1,1,1-triethoxy-2,2,2-trifluoroethane was not used.

Catalytic activity was 12 Kg/g Zr, density was 0.9245 g/cm$^3$, MFR was 0.02 g/10 min (190°C), melting point was 118.5°C and Mw/Mn was 4.3.

Comparative Example 8

Example 34 was conducted excepting that 1,1,1-tri-(2,2,2-trifluoroethoxy)ethane was not used.

Catalytic activity was 15 Kg/g Zr, density was 0.9625 g/cm$^3$, MFR was 1.6 g/10 min (190°C), melting point was 134.2°C and Mw/Mn was 4.0.

Example 35

(1) Preparation of Catalyst Component

150 ml of purified toluene was charged into a three necked 300 ml flask equipped with an electromagnetic induction stirrer, in a nitrogen atmosphere, then 3.3 g of tetrapropoxyzirconium ($Zr(OC_3H_7)_4$) and 2.3 g of indene were added and stirring was conducted at room temperature for 30 minutes. Thereafter, 4.6 g of triethylaluminum was added dropwise while the system was held at 0°C. Then, the system was warmed up to room temperature and stirring was performed for 24 hours. The concentration of this solution was 0.062 mmol/ml in terms of Zr. 3.0 ml of this solution was poured into a dried 50 ml flask in nitrogen atmosphere, then 3.7 ml of a 1 mmol/ml methylaluminoxane solution was added and stirring was conducted at room temperature for 30 minutes. Thereafter, 0.2 mmol of triethylammonium tetra(pentafluorophenyl)boron was added dropwise and stirring was performed for 3 hours.

(2) Polymerization

A stainless steel autoclave having an internal volume of 3 liters and equipped with stirrer was purged with nitrogen, into which were then added 1 liter of purified toluene and 2 mg (as converted to zirconium atoms) of catalyst component prepared on the above.

The polymerization system was heated to 60°C under stirring. Then, a gaseous mixture of ethylene and butene-1 (butene-1/ethylene mole ratio: 0.25) was fed into the autoclave to total pressure of 9 kgf/cm$^2$G and polymerization was started. The polymerization was continued for 2 hours while maintaining the total pressure at 9 kgf/cm$^2$G under condition supply of a gaseous mixture of ethylene and butene-1 (butene-1/ethylene mole ratio: 0.05).

Thereafter, surplus gaseous mixture was discharged, followed by cooling, the contents withdrawn to afford

72 g of white polymer.

As a result, there was obtained a powder having a density of 0.9211 g/cm$^3$, MI (MFR) of 2.3 g/10 min and melting point of 116.5°C.

Example 36

(1) Preparation of Catalyst Component

150 ml of purified toluene was charged into a three necked 300 ml flask equipped with an electromagnetic induction stirrer, in a nitrogen atmosphere, then 3.3 g of tetrapropoxyzirconium ($Zr(OC_3H_7)_4$) and 4.6 g of indene were added and stirring was conducted at room temperature for 30 minutes. Thereafter, 2.9 g of triethylaluminum was added dropwise while the system was held at 0°C. Then, the system was warmed up to room temperature and stirring was performed for 24 hours. The concentration of this solution was 0.062 mmol/ml in terms of Zr.

3.0 ml of this solution was poured into a dried 50 ml flask in nitrogen atmosphere, then 4.6 ml of a 1 mmol/ml methylaluminoxane solution was added and stirring was conducted at room temperature for 30 minutes. Thereafter, 0.4 mmol of triethylammonium tetra(pentafluorophenyl)boron was added dropwise and stirring was performed for 3 hours.

(2) Polymerization

Polymerization was performed in the same way as in Example 35. (1.5 mg (as converted to zirconium atoms) of catalyst component prepared on the above was added into autoclave)

Thereafter, surplus gaseous mixture was discharged, followed by cooling, the contents withdrawn to afford 82 g of white polymer.

As a result, there was obtained a powder having a density of 0.9211 g/cm$^3$, MI (MFR) of 10.3 g/10 min, Mw/Mn of 3.9 and melting point of 116.5°C.

Example 37

(1) Preparation of one Catalyst Component

150 ml of purified toluene was charged into a three necked 300 ml flask equipped with an electromagnetic induction stirrer, in a nitrogen atmosphere, then 3.3 g of tetrapropoxyzirconium ($Zr(OC_3H_7)_4$) and 2.6 g of cyclopentadiene were added and stirring was conducted at room temperature for 30 minutes. Thereafter, 9.1 g of triethylaluminum was added dropwise while the system was held at 0°C. Then, the system was warmed up to room temperature and stirring was performed for 4 hours. The concentration of this solution was 0.06 mmol/ml in terms of Zr.

3.0 ml of this solution was poured into a dried 50 ml flask in nitrogen atmosphere, then 3.6 ml of a 1 mmol/ml methylaluminoxane solution was added and stirring was conducted at room temperature for 30 minutes.

(2) Polymerization

A stainless steel autoclave having an internal volume of 3 liters and equipped with stirrer was purged with nitrogen, into which were then added 1 liter of purified toluene, 2 mg (as converted to zirconium atoms) of catalyst component prepared on the above and 0.05 mmol of triethylammonium tetra(pentafluorophenyl)boron.

The polymerization system was heated to 60°C under stirring. Then, a gaseous mixture of ethylene and butene-1 (butene-1/ethylene mole ratio: 0.25) was fed into the autoclave to total pressure of 9 kgf/cm$^2$G and polymerization was started. The polymerization was continued for 2 hours while maintaining the total pressure at 9 kgf/cm$^2$G under condition supply of a gaseous mixture of ethylene and butene-1 (butene-1/ethylene mole ratio: 0.05).

Thereafter, surplus gaseous mixture was discharged, followed by cooling, the contents withdrawn to afford 73 g of white polymer.

As a result, there was obtained a powder having a density of 0.9219 g/cm$^3$, MI (MFR) of 1.6 g/10 min, Mw/Mn of 4.3 and melting point of 115.9°C.

Comparative Example 9

(1) Preparation of Catalyst Component

150 ml of purified toluene was charged into a three necked 300 ml flask equipped with an electromagnetic induction stirrer, in a nitrogen atmosphere, then 3.3 g of tetrapropoxyzirconium ($Zr(OC_3H_7)_4$) and 2.3 g of indene were added and stirring was conducted at room temperature for 30 minutes. Thereafter,

4.6 g of triethylaluminum was added dropwise while the system was held at 0°C. Then, the system was warmed up to room temperature and stirring was performed for 24 hours. The concentration of this solution was 0.062 mmol/ml in terms of Zr. 3.0 ml of this solution was poured into a dried 50 ml flask in nitrogen atmosphere, then 3.7 ml of a 1 mmol/ml methylaluminoxane solution was added and stirring was conducted at room temperature for 30 minutes.

(2) Polymerization

Polymerization was performed in the same way as in Example 35. (2.0 mg (as converted to zirconium atoms) of catalyst component prepared on the above was added into autoclave)

Thereafter, surplus gaseous mixture was discharged, followed by cooling, the contents withdrawn to afford 42 g of white polymer.

As a result, there was obtained a powder having a density of 0.9219 g/cm³, MI (MFR) of 1.5 g/10 min, Mw/Mn of 4.2 and melting point of 116.0°C.

Example 38

200 g of sea sand which had been acid-washed and heat-treated at 300°C were introduced into a 2 ℓ autoclave, which was fully dried. $Zr(OBu)_4$ (0.11 g), indene, (0.23 ml) and trihexylaluminum (0.69 ml) were dissolved into 13 ml of toluene. Into 0.5 ml of the obtained solution, a solution of methylaluminoxane in toluene (Al/Zr = 100) was added, and stirring was performed for 30 minutes at room temperature. Further, diphenylsulfide ($2.2 \times 10^{-5}$ mole) was added and stirring was performed for 30 minutes at room temperature. The solution was introduced into a 2 ℓ autoclave and a gaseous mixture of ethylene and 1-butene (butene-1/ethylene mole ratio: 0.2) was fed thereto to a pressure of 9 atm and polymerization was performed at 60°C for 2 hours. Catalytic activity was 150 Kg/g Zr, density was 0.9204 g/cm³, MFR was 0.9 g/10 min (190°C), melting point was 114.5°C and Mw/Mn was 6.6.

Example 39

200 g of sea sand which had been acid-washed and heat-treated at 300°C were introduced into a 2 ℓ autoclave, which was fully dried. $Zr(OBu)_4$ (0.11 g), indene (0.23 ml) and trihexylaluminum (0.69 ml) were dissolved into 13 ml of toluene. Into 0.5 ml of the solution, diphenylsulfide ($1.1 \times 10^{-5}$ mole) was added, and stirring was performed for 30 minutes at room temperature. Into 0.5 ml of the obtained solution, a solution of methylaluminoxane in toluene (Al/Zr = 100) was added, and stirring was performed for 30 minutes at room temperature. The solution was introduced into a 2 ℓ autoclave and a gaseous mixture of ethylene and 1-butene (butene-1/ethylene mole ratio : 0.2) was fed thereto to a pressure of 9 atm and polymerization was performed at 60°C for 2 hours. Catalytic activity was 140 Kg/g Zr, density was 0.9214 g/cm³, MFR was 1.2 g/10 min (190°C), melting point was 115.5°C and Mw/Mn was 7.6.

Example 40

200 g of sea sand which had been acid-washed and heat-treated at 300°C were introduced into a 2 ℓ autoclave, which was fully dried. $Zr(OBu)_4$ (0.11 g), indene (0.23 ml) and trihexylaluminum (0.69 ml) were dissolved into 13 ml of toluene. Into 0.5 ml of the obtained solution, a solution of methylaluminoxane in toluene (Al/Zr = 100) was added, and stirring was performed for 30 minutes at room temperature. Further, methyltolytyl sulfide ($2.2 \times 10^{-5}$ mole) was added, and stirring was performed for 30 minutes at room temperature. The solution was introduced into a 2 ℓ autoclave and a gaseous mixture of ethylene and 1-butene (butene-1/ethylene mole ratio : 0.2) was fed thereto to a pressure of 9 atm and polymerization was performed at 60°C for 2 hours. Catalytic activity was 160 Kg/g Zr, density was 0.9214 g/cm³, MFR was 1.5 g/10 min (190°C), melting point was 113.5°C and Mw/Mn was 6.8.

Example 41

200 g of sea sand which had been acid-washed and heat-treated at 300°C were introduced into a 2 ℓ autoclave, which was fully dried. $Zr(OBu)_4$ (0.11 g), 1,3-dimethylcyclopentadiene (0.13 ml) and triethylaluminum (0.69 ml) were dissolved into 13 ml of toluene. Into 0.5 ml of the obtained solution, a solution of methylaluminoxane in toluene (Al/Zr = 100) was added, and stirring was performed for 30 minutes at room temperature. Further, methyltolytyl sulfide ($2.2 \times 10^{-5}$ mole) was added, and stirring was performed for 30 minutes at room temperature. The solution was introduced into a 2 ℓ autoclave and a gaseous mixture of ethylene and 1-butene (butene-1/ethylene mole ratio : 0.2) was fed thereto to a pressure of 9 atm and polymerization was performed

at 60°C for 2 hours. Catalytic activity was 120 Kg/g Zr, density was 0.9104 g/cm³, MFR was 0.5 g/10 min (190°C), melting point was 109.5°C and Mw/Mn was 5.6.

Example 42

200 g of sea sand which had been acid-washed and heat-treated at 300°C were introduced into a 2 ℓ autoclave, which was fully dried. $Zr(OBu)_4$ (0.11 g), indene (0.23 ml) and diethylaluminum (0.69 ml) were dissolved into 13 ml of toluene. Into 0.5 ml of the obtained solution, a solution of methylaluminoxane in toluene (Al/Zr = 100) was added, and stirring was performed for 30 minutes at room temperature. Further, methyltolytyl sulfide ($2.2 \times 10^{-5}$ mole) was added, and stirring was performed for 30 minutes at room temperature. The solution was introduced into a 2 ℓ autoclave and a gaseous mixture of ethylene and 1-butene (butene-1/ethylene mole ratio : 0.2) was fed thereto to a pressure of 9 atm and polymerization was performed at 60°C for 2 hours. Catalytic activity was 50 Kg/g Zr, density was 0.9250 g/cm³, MFR was 3.2 g/10 min (190°C), melting point was 118.5°C and Mw/Mn was 6.6.

Example 43

200 g of sea sand which had been acid-washed and heat-treated at 300°C were introduced into a 2 ℓ autoclave, which was fully dried. $Zr(Osu)_4$ (0.11 g), indene (0.23 ml) and dibutylmagnesium (5 mmole) were dissolved into 13 ml of toluene. Into 0.5 ml of the obtained solution, a solution of methylaluminoxane in toluene (Al/Zr = 100) was added, and stirring was performed for 30 minutes at room temperature. Further, methyltolytyl sulfide ($2.2 \times 10^{-5}$ mole) was added, and stirring was performed for 30 minutes at room temperature. The solution was introduced into a 2 ℓ autoclave and a gaseous mixture of ethylene and 1-butene (butene-1/ethylene mole ratio : 0.2) was fed thereto to a pressure of 9 atm and polymerization was performed at 60°C for 2 hours. Catalytic activity was 40 Kg/g Zr, density was 0.9104 g/cm³, MFR was 0.5 g/10 min (190°C), melting point was 109.5°C and Mw/Mn was 5.6.

Example 44

200 g of sea sand which had been acid-washed and heat-treated at 300°C were introduced into a 2 ℓ autoclave, which was fully dried. $Zr(OPr)_4$ (0.11 g), indene (0.23 ml), triethylaluminum (0.69 ml) and tetrahydrothiophene ($1.1 \times 10^{-5}$ mole) were dissolved into 13 ml of toluene. Into 0.5 ml of the obtained solution, a solution of methylaluminoxane in toluene (Al/Zr = 100) was added, and stirring was performed for 30 minutes at room temperature. Further, methyltolytyl sulfide ($2.2 \times 10^{-5}$ mole) was added, and stirring was performed for 30 minutes at room temperature. The solution was introduced into a 2 ℓ autoclave and a gaseous mixture of ethylene and 1-butene (butene-1/ethylene mole ratio : 0.2) was fed thereto to a pressure of 9 atm and polymerization was performed at 60°C for 2 hours. Catalytic activity was 50 Kg/g Zr, density was 0.9100 g/cm³, MFR was 1.1 g/10 min (190°C), melting point was 109.9°C and Mw/Mn was 6.6.

Example 45

200 g of sea sand which had been acid-washed and heat-treated at 300°C were introduced into a 2 ℓ autoclave, which was fully dried. $Hf(OBu)_4$ (0.11 g), indene (0.23 ml), triethylaluminum (0.69 ml) and thian ($1.1 \times 10^{-5}$ mole) were dissolved into 13 ml of toluene. Into 0.5 ml of the obtained solution, a solution of methylaluminoxane in toluene (Al/Zr = 100) was added, and stirring was performed for 30 minutes at room temperature. The solution was introduced into a 2 ℓ autoclave and a gaseous mixture of ethylene and 1-butene (butene-1/ethylene mole ratio : 0.2) was fed thereto to a pressure of 9 atm and polymerization was performed at 60°C for 2 hours. Catalytic activity was 30 Kg/g Zr, density was 0.9200 g/cm³, MFR was 3.2 g/10 min (190°C), melting point was 118.5°C and Mw/Mn was 7.6.

Comparative Example 10

Example 38 was conducted except that diphenylsulfide was not used.

Catalytic activity was 74 kg/g Zr, density was 0.9100 g/cm³, MFR was 1.8 g/10 min (190°C), melting point was 110°C and Mw/Mn was 5.5.

Comparative Example 11

Example 43 was conducted except that dibenzylsulfide was not used.

Catalytic activity was 12 kg/g Zr, density was 0.9245 g/cm$^3$, MFR was 0.02 g/10 min (190°C), melting point was 118.5°C and Mw/Mn was 4.3.

Comparative Example 12

Example 45 was conducted except that thian was not used.

Catalytic activity was 12 kg/g Zr, density was 0.9211 g/cm$^3$, MFR was 0.4 g/10 min (190°C), melting point was 114.5°C and Mw/Mn was 6.3.

Example 46

(1) Preparation of Catalyst Component

150 ml of purified toluene was charged into a 300 ml flask under nitrogen, then $Zr(OBu)_4$(3.85g) and indence (11.6g) were added and stirring was performed for 30 minutes at room temperature.

Then triethylaluminum (11.6g) was added dropwise while the system was held at 0°C. Then, the system was warmed upto room temperature and stirring was performed for 2 hours to produce a transition metal catalyst component (②).

The concentration of this solution was 0.056 mmol/ml in terms of Zr.

Into a 50 ml flask 1 g of $SiO_2$ (a product of Fuji Devison, Grade #952, surface area: 300 m$^2$/g) which had been calcined at 600°C for 5 hours was added and 10 ml of purified toluene were added.

Thereafter 4 ml of the above solution (②) was added and stirring was performed at room temperature for 1 hour (referred to as (③).

1.3 ml of the above slurry (③) was added into another 50 ml flask and 8 ml of a solution of isobutylaluminoxane (obtained in the same manner as in Example 1) in hexane were added and stirring was performed at room temperature for 1 hour to obtain a catalyst component. (2) Contact of the Catalyst Component with Promoter. 15.3 ml of a solution of methylaluminoxane (1 mmol/ℓ) were added and stirring was performed at room temperature for 2 hours.

Then, the solution was removed and the catalyst was obtained (referred to as (④).

(3) Polymerization

A 3ℓ stainless steel autoclave equipped with stirrer was purged with nitrogen and 200 g of dried common salt were added, the catalyst (④) was added in the amount of 1.8 mg in terms of Zr, and heated at 60°C under stirring.

Then, a gaseous mixture of ethylene and butene-1 (butene-1/ethylene mole ratio: 0.25) was fed into the autoclave to total pressure of 9 kgf/cm$^2$G and polymerization was started. The polymerization was continued for 2 hours while maintaining the total pressure at 9 kgf/cm$^2$G under condition supply of a gaseous mixture of ethylene and butene-1 (butene-1/ethylene mole ratio: 0.05).

After polymerization, the system was cooled and the salt was removed to afford 94 g of white polymer. The supported amount of transition metal was 2 wt%, MAO/Zr ratio was 100.

The results are as set out in Table 3.

Example 47

(1) Preparation of Catalyst Component

150 ml of purified toluene was charged into a 300 ml flask under nitrogen, then $Zr(OPr)_4$(3.27g) and indence (9.3g) were added and stirring was performed for 30 minutes at room temperature.

Then triethylaluminum (4.6g) was added dropwise while the system was held at 0°C. Then, the system was warmed upto room temperature and stirring was performed for 2 hours to produce a transition metal catalyst component (①).

The concentration of this solution was 0.06 mmol/ml in terms of Zr.

Into a 50 ml flask 1 g of $SiO_2$ (a product of Fuji Devison, Grade #952, surface area: 300 m$^2$/g) which had been calcined at 600°C for 5 hours was added and 10 ml of purified toluene were added.

Thereafter 2 ml of the above solution (①), was added and stirring was performed at room temperature for 1 hour (referred to as (②).

1.7 ml of the above slurry (②) was added into another 50 ml flask and 5 ml of a solution of isobutylaluminoxane (obtained in the same manner as in Example 1) in hexane were added and stirring was performed at room temperature for 1 hour to obtain a catalyst component. (2) Contact of the Catalyst Component with Promoter. 1 ml of a solution of methylaluminoxane (1 mmol/ℓ) were added and stirring was performed at room temperature for 2 hours.

Then, the solution was removed and the catalyst was obtained.

(3) Polymerization

Polymerization was performed in the same way as in Example 46.

The supported amount of transition metal was 2 wt%, MAO/Zr ratio was 100.

The results are as set out in Table 3.

Example 48

(1) Preparation of Catalyst Component

150 ml of purified toluene was charged into a 300 ml flask under nitrogen, then $Zr(OPr)_4$(3.27g) and cyclopentadiene (5.3g) were added and stirring was performed for 30 minutes at room temperature.

Then triethylaluminum (4.6g) was added dropwise while the system was held at 0°C. Then, the system was warmed upto room temperature and stirring was performed for 2 hours to produce a transition metal catalyst component (①).

The concentration of this solution was 0.06 mmol/ml in terms of Zr.

Into a 50 ml flask 1 g of $SiO_2$ (a product of Fuji Devison, Grade #952, surface area: 300 $m^2/g$) which had been calcined at 600°C for 5 hours was added and 10 ml of purified toluene and 3 ml of a solution of methylaluminoxane in toluene (1 mmol/mg) were added.

Thereafter 2 ml of the above solution (①) was added and stirring was performed at room temperature for 1 hour (referred to as (②).

1.8 ml of the above slurry (②) was added into another 50 ml flask and 4.4 ml of a solution of isobutylaluminoxane (obtained in the same manner as in Example 1) in hexane were added and stirring was performed at room temperature for 1 hour to obtain a catalyst component.

(2) Contact of the Catalyst Component with Promoter 0.73 ml of a solution of methylaluminoxane (1 mmol/ℓ) were added and stirring was performed at room temperature for 2 hours.

Then, the solution was removed and the catalyst was obtained.

(3) Polymerization

Polymerization was performed in the same way as in Example 46.

The supported amount of transition metal was 1.1 wt%, the addition amount thereof was 1.3 mg and MAO/Zr ratio was 50.

The results are as set out in Table 3.

Example 49

(1) Preparation of Catalyst Component

150 ml of purified toluene was charged into a 300 ml flask under nitrogen, then $Zr(OPr)_4$(3.27g) and trimethylcyclopentadienyl silane ($CpSiMe_3$) (11g) were added and stirring was performed for 30 minutes at room temperature.

Then triethylaluminum (9.1g) was added dropwise while the system was held at 0°C. Then, the system was warmed upto room temperature and stirring was performed for 2 hours to produce a transition metal catalyst component (①).

The concentration of this solution was 0.057 mmol/ml in terms of Zr.

Into a 50 ml flask 1 g of $SiO_2$ (a product of Fuji Devison, Grade #952, surface area: 300 $m^2/g$) which had been calcined at 600°C for 5 hours was added and 10 ml of purified toluene and 3 ml of a solution of methylaluminoxane in toluene (1 mmol/mℓ) were added.

Thereafter 3 ml of the above solution (①) was added and stirring was performed at room temperature for 1 hour (referred to as (②).

2 ml of the above slurry (②) was added into another 50 ml flask and 6.4 ml of a solution of isobutylaluminoxane (obtained in the same manner as in Example 1) in hexane were added and stirring was performed at room temperature for 1 hour to obtain a catalyst component.

(2) Contact of the Catalyst Component with Promoter. 1 ml of a solution of methylaluminoxane (1 mmol/ℓ) were added and stirring was performed at room temperature for 2 hours.

Then, the solution was removed and the catalyst was obtained.

(3) Polymerization

Polymerization was performed in the same way as in Example 46.

The supported amount of transition metal was 1.55 wt%, the addition amount thereof was 1.9 mg and MAO/Zr ratio was 100.

The results are as set out in Table 3.

Example 50

(1) Preparation of Catalyst Component

150 ml of purified toluene was charged into a 300 ml flask under nitrogen, then $Zr(OPr)_4$(3.27g) and indene (11.6g) were added and stirring was performed for 30 minutes at room temperature.

Then diethylaluminumethoxide ($AlEt_2(OEt)$) (26g) was added dropwise while the system was held at 0°C. Then, the system was warmed upto room temperature and stirring was performed for 2 hours to produce a transition metal catalyst component (①).

The concentration of this solution was 0.051 mmol/ml in terms of Zr.

Into a 50 ml flask 1 g of a copluverized product of $MgCl_2$ and triethoxyaluminum ($Al(OEt)_3$) and 10 ml of purified toluene was added and stirring was performed at room temperature for 2 hours.

The above pulverized product was obtained by adding 10 g of anhydrous magnesium chloride and 3.8 g of triethoryaluminum into a stainless steel pot of 400 ml containing 25 stainless steel balls each having a diameter of 1/2 inch followed by ball-milling at room temperature for 6 hours under nitrogen atmosphere.

Thereafter 3.2 ml of the above solution (①) was added and stirring was performed at room temperature for 1 hour (referred to as ②).

1.5 ml of the above slurry (②) was added into another 50 ml flask and 5.6 ml of a solution of isobutylaluminoxane (obtained in the same manner as in Example 1) in hexane were added and stirring was performed at room temperature for 1 hour to obtain a catalyst component.

(2) Contact of the Catalyst Component with Promoter. 1.9 ml of a solution of methylaluminoxane (1 mmol/ℓ) were added and stirring was performed at room temperature for 1 hour.

Then, the solution was removed and the catalyst was obtained.

(3) Polymerization

Polymerization was performed in the same way as in Example 46.

The supported amount of transition metal was 2 wt%, the addition amount thereof was 1.7 mg and MAO/Zr ratio was 100.

The results are as set out in Table 3.

Example 51

(1) Preparation of Catalyst Component

The same component (1) as in Example 50 was used.

In a 50 ml flask, 5 ml of purified toluene and 0.3 ml of the above solution ① and then 5.0 ml of a solution of isobutylaluminoxane in hexane used in Example 1 was added and stirring was performed for 1 hour at room temperature to afford a catalyst component.

Thereafter 1,6 ml of a methylaluminoxane solution (1 mmol/ml) was added and stirring was performed at room temperature for 1 hour (referred to as ②).

Into a 50 ml flask 1 g of polyethylene powder (linear low density polyethylene, MFR 1.0 g/10 min, bulk density 0.30 g/cc, particle size 500μ, mp 121°C) and all of the above ② were added.

Then stirring was performed and the solvent was removed to afford the catalyst.

(2) Polymerization

Polymerization was performed in the same way as in Example 46.

The supported amount of transition metal was 0.15 wt%, the addition amount thereof was 1.5 mg and MAO/Zr ratio was 100.

The results are as set out in Table 3.

Example 52

(1) Preparation of Catalyst Component

150 ml of purified toluene was charged into a 300 ml flask under nitrogen, then $Zr(OBu)_4$(3.85g) and bisindenylethane (10.3g) were added and stirring was performed for 30 minutes at room temperature.

Then $AlEt_3$ (9.1g) was added dropwise while the system was held at 0°C. Then, the system was warmed upto room temperature and stirring was performed for 2 hours to produce a transition metal catalyst component (②).

The concentration of this solution was 0.061 mmol/ml in terms of Zr.

Into a 50 ml flask 1 g of $SiO_2$ (a product of Fuji Devison, Grade #952) which had been calcined at 600°C for 5 hours was added and 10 ml of purified toluene and 3 ml of a solution of trimethylaluminum in toluene (1 mmol/ml) were added.

Thereafter 4 ml of the above solution (①) was added and stirring was performed at room temperature for 1 hour (referred to as ②).

1 ml of the above slurry (②) was added into another 50 ml flask and 8.5 ml of a solution of isobutylaluminoxane (obtained in the same manner as in Example 1) in hexane were added and stirring was performed at room temperature for 1 hour to obtain a catalyst component.

(2) Contact of the Catalyst Component with Promoter. 2.9 ml of a solution of methylaluminoxane (1 mmol/ℓ) were added and stirring was performed at room temperature for 1 hour.

Then, the solution was removed and the catalyst was obtained.

(3) Polymerization

Polymerization was performed in the same way as in Example 46.

The supported amount of transition metal was 2 wt%, the addition amount thereof was 1.3 mg and MAO/Zr ratio was 100.

The results are as set out in Table 3.

Example 53

(1) Preparation of Catalyst Component

150 ml of purified toluene was charged into a 300 ml flask under nitrogen, then $Zr(OPr)_3Cl$ (3.0g) and cyclopentadiene (5.3g) were added and stirring was performed for 30 minutes at room temperature.

Then diethylaluminum chloride (11.6g) was added dropwise while the system was held at 0°C. Then, the system was warmed upto room temperature and stirring was performed for 2 hours to produce a transition metal catalyst component (①).

The concentration of this solution was 0.060 mmol/ml in terms of Zr.

Into a 50 ml flask 1 g of $Al_2O_3$ (a product of Shokubai Kasei, surface area: 300 $m^2/g$, particle size: 60 μm) which had been calcined at 400°C for 5 hours was added and 10 ml of purified toluene were added.

Thereafter 4 ml of the above solution (①) added and stirring was performed at room temperature for 1 hour (referred to as ②).

2 ml of the above slurry (②) was added into another 50 ml flask and 3.7 ml of a solution of isobutylaluminoxane (obtained in the same manner as in Example 1) in hexane were added and stirring was performed at room temperature for 1 hour to obtain a catalyst component.

(2) Contact of the Catalyst Component with Promoter. 1.9 ml of a solution of methylaluminoxane (1 mmol/ℓ) were added and stirring was performed at room temperature for 1 hour.

Then, the solution was removed and the catalyst was obtained.

(3) Polymerization

Polymerization was performed in the same way as in Example 46.

The supported amount of transition metal was 1.1 wt%, the addition amount thereof was 1.7 mg and MAO/Zr ratio was 100.

The results are as set out in Table 3.

Example 54

(1) Preparation of Catalyst Component

150 ml of purified toluene was charged into a 300 ml flask under nitrogen, then $Zr(OPr)_4$(3.27g) and indene (4.7g) were added and stirring was performed for 30 minutes at room temperature.

Then $AlEt_3$ (9.1g) was added dropwise while the system was held at 0°C. Then, the system was warmed upto room temperature and stirring was performed for 2 hours to produce a transition metal catalyst component (①).

The concentration of this solution was 0.059 mmol/ml in terms of Zr.

Into a 50 ml flask 1 g of $Mg(CO_3)_2$ which had been calcined at 150°C for 2 hours was added and 10 ml of purified toluene and 3 ml of a solution of methylaluminoxane in toluene (1 mmol/ml) were added.

Thereafter 3 ml of the above solution (①) was added and stirring was performed at room temperature for 1 hour (referred to as ②).

2 ml of the above slurry (②) was added into another 50 ml flask and 11 ml of a solution of isobutylaluminoxane (obtained in the same manner as in Example 1) in hexane were added and stirring was performed at room temperature for 1 hour to obtain a catalyst component.

(2) Contact of the Catalyst Component with Promoter. 2.2 ml of a solution of methylaluminoxane (1 mmol/ℓ) were added and stirring was performed at room temperature for 1 hour.

Then, the solution was removed and the catalyst was obtained.

(3) Polymerization

Polymerization was performed in the same way as in Example 46.

The supported amount of transition metal was 1.6 wt%, the addition amount thereof was 2.0 mg and MAO/Zr ratio was 100.

The results are as set out in Table 3.

Example 55

(1) Preparation of Catalyst Component

The transition metal catalyst component of Example 54 was used 1 .

Into a 50 ml flask 1 g of $SiO_2$ (a product of Fuji Devison, Grade #952) which had been calcined at 600°C for 5 hours was added and 10 ml of purified toluene and 5 ml of a solution of isobutylaluminoxane in hexane (1 mmol/mg) were added.

Thereafter 2.5 ml of the above solution (①) was added and stirring was performed at room temperature for 1 hour (referred to as ②).

2 ml of the above slurry (②) was added into another 50 ml flask and 1.6 ml of a solution of isobutylaluminoxane (obtained in the same manner as in Example 1) in hexane were added and stirring was performed at room temperature for 1 hour to obtain a catalyst component.

(2) Contact of the Catalyst Component with Promoter. 1.6 ml of a solution of methylaluminoxane (1 mmol/ℓ) were added and stirring was performed at room temperature for 1 hour.

Then, the solution was removed and the catalyst was obtained.

(3) Polymerization

Polymerization was performed in the same way as in Example 46.

The supported amount of transition metal was 1.3 wt%, the addition amount thereof was 1.5 mg and MAO/Zr ratio was 100.

The results are as set out in Table 3.

Example 56

(1) Preparation of Catalyst Component

150 ml of purified toluene was charged into a 300 ml flask under nitrogen, then $Zr(OPr)_4$(3.27g) and indene (4.7g) were added and stirring was performed for 30 minutes at room temperature.

Then 40 ml of a solution of nBuMgCl in ether (2 mmol/ml) were added dropwise while the system was held at 0°C. Then, the system was warmed upto room temperature and stirring was performed for 2 hours to produce a transition metal catalyst component (①).

The concentration of this solution was 0.063 mmol/ml in terms of Zr.

Into a 50 ml flask 1 g of $SiO_2$ (a product of Fuji Devison, Grade #952) which had been calcined at 600°C for 5 hours was added and 10 ml of purified toluene and 3 ml of a solution of methylaluminoxane in toluene (1 mmol/ml) were added.

Thereafter 3 ml of the above solution (①) was added and stirring was performed at room temperature for 1 hour (referred to as ②).

2 ml of the above slurry (②) was added into another 50 ml flask and 4.9 ml of a solution of isopropylaluminoxane (IPrAO) in hexane were added and stirring was performed at room temperature for 1 hour to obtain a catalyst component.

(2) Contact of the Catalyst Component with Promoter. 1.64 ml of a solution of methylaluminoxane (1 mmol/ℓ) were added and stirring was performed at room temperature for 1 hour. Then, the solution was removed and the catalyst was obtained.

(3) Polymerization

Polymerization was performed in the same way as in Example 46.

The supported amount of transition metal was 1.1 wt%, the addition amount thereof was 1.5 mg and MAO/Zr ratio was 100.

The results are as set out in Table 3.

Example 57

(1) Preparation of Catalyst Component

150 ml of purified toluene was charged into a 300 ml flask under nitrogen, then tetrabutoxytitanium $Ti(OBu)_4$(3.40g) and cyclopentadiene (5.3g) were added and stirring was performed for 30 minutes at room temperature.

Then 40 ml of a solution of phenylmagnesium chloride in ether PhMgCl (2 mmol/ml) were added dropwise while the system was held at 0°C. Then, the system was warmed upto room temperature and stirring was performed for 2 hours to produce a transition metal catalyst component (①).

The concentration of this solution was 0.063 mmol/ml in terms of Ti.

Into a 50 ml flask 1 g of $SiO_2$ (a product of Fuji Devison, Grade #952) which had been calcined at 600°C for 5 hours was added and 10 ml of purified toluene and 3 ml of a solution of methylaluminoxane in toluene (1 mmol/ml) were added.

Thereafter 6.6 ml of the above solution (①) was added and stirring was performed at room temperature for 1 hour (referred to as ①).

1.5 ml of the above slurry (②) was added into another 50 ml flask and 11 ml of a solution of isopropylaluminoxane (obtained in the same manner as in Example 1) in hexane were added and stirring was performed at room temperature for 1 hour to obtain a catalyst component.

(2) Contact of the Catalyst Component with Promoter. 11 ml of a solution of methylaluminoxane (1 mmol/ℓ) were added and stirring was performed at room temperature for 1 hour.

Then, the solution was removed and the catalyst was obtained.

(3) Polymerization

Polymerization was performed in the same way as in Example 46.

The supported amount of transition metal was 2.0 wt%, the addition amount thereof was 1.5 mg and MAO/Ti ratio was 100.

The results are as set out in Table 3.

Example 58

(1) Preparation of Catalyst Component

150 ml of purified toluene was charged into a 300 ml flask under nitrogen, then $Hf(OPr)_4$(4.1g) and cyclopentadiene (5.3g) were added and stirring was performed for 30 minutes at room temperature.

Then 40 ml of a solution of benzylmagnesiumchloride BzMgCl in ether (2 mmol/ml) were added dropwise while the system was held at 0°C. Then, the system was warmed upto room temperature and stirring was performed for 2 hours to produce a transition metal catalyst component (①).

The concentration of this solution was 0.065 mmol/ml in terms of Hf.

Into a 50 ml flask 1 g of $SiO_2$ (a product of Fuji Devison, Grade #952) which had been calcined at 600°C for 5 hours was added and 10 ml of purified toluene and 5 ml of a solution of methylaluminoxane in toluene (1 mmol/ml) were added.

Thereafter 0.9 ml of the above solution (①) was added and stirring was performed at room temperature for 1 hour (referred to as ②).

2.4 ml of the above slurry (②) was added into another 50 ml flask and 4.2 ml of a solution of isobutylaluminoxane (obtained in the same manner as in Example 1) in hexane were added and stirring was performed at room temperature for 1 hour to obtain a catalyst component.

(2) Contact of the Catalyst Component with Promoter. 4.2 ml of a solution of methylaluminoxane (1 mmol/ℓ) were added and stirring was performed at room temperature for 1 hour.

Then, the solution was removed and the catalyst was obtained.

(3) Polymerization

Polymerization was performed in the same way as in Example 46.

The supported amount of transition metal was 1.0 wt%, the addition amount thereof was 1.5 mg and MAO/Hf ratio was 100.

The results are as set out in Table 3.

Example 59

(1) Preparation of Tetrabenzylzirconium ($ZrBr_4$)

Into a 1 ℓ flask, 500 ml of benzylmagnesiumchloride (70g) in diethyl ether and then 30g of $ZrCl_4$ were added at 0°C under nitrogen.

Stirring was performed for 2 hours during which the temperature was raised to room temperature 300 ml of decalive was added and stirring was performed for 1 hour at room temperature.

The resultant $MgCl_2$ was separated, and the obtained decaline solution was heated at 50°C to remove ether, 32 g of $ZrBz_4$ were obtained from the decaline solution.

(2) Preparation of Catalyst Component

150 ml of purified toluene was charged into a 300 ml flask under nitrogen, then $ZrBz_4$(4.5g) and indence (9.3g) were added and stirring was performed for 30 minutes at room temperature.

Then $AlEt_3$ (4.6 g) was added dropwise while the system was held at 0°C. Then, the system was warmed upto room temperature and stirring was performed for 2 hours to produce a transition metal catalyst component (①).

The concentration of this solution was 0.061 mmol/ml in terms of Zr.

Into a 50 ml flask 1 g of $SiO_2$ (a product of Fuji Devison, Grade #952) which had been calcined at 600°C for 5 hours was added and 10 ml of purified toluene and 3 ml of a solution of methylaluminoxane in toluene (1 mmol/ml) were added.

Thereafter 2.7 ml of the above solution (①) was added and stirring was performed at room temperature for 1 hour (referred to as ②).

1.8 ml of the above slurry (③) was added into another 50 ml flask and 9.3 ml of a solution of isobutylaluminoxane (obtained in the same manner as in Example 1) in hexane were added and stirring was performed at room temperature for 1 hour to obtain a catalyst component.

(3) Contact of the Catalyst Component with Promoter. 3.7 ml of a solution of methylaluminoxane (1 mmol/ℓ) were added and stirring was performed at room temperature for 1 hour.

Then, the solution was removed and the catalyst was obtained.

(4) Polymerization

Polymerization was performed in the same way as in Example 46.

The supported amount of transition metal was 1.5 wt%, the addition amount thereof was 1.7 mg and MAO/Zr ratio was 100.

The results are as set out in Table 3.

Example 60

(1) Preparation of Catalyst Component

150 ml of purified toluenen was charged into a 300 ml flask under nitrogen, then $ZeC\ell_4$(2.3g) and indene (4.65g) were added and stirring was performed for 30 minutes at room temperature. Then triethylaluminum (11.6g) was added dropwise while the system was held at 0°C. Then, the system was warmed upto room temperature and stirring was performed for 2 hours to produce a transition metal catalyst component (①). The concentration of this solution was 0.060 mmol/ml in terms of Zr.

Into a 50 ml flask 1g of $SiO_2$ (a product of Fuji Devison, Grade #952, which had been calcined at 600°C for 5 hours was added and 10 ml of purified toluene and 5 ml of a solution of methylaluminoxane in toluene (1 mmol/ml) we are added.

Thereafter 3.2 ml of the above solution (1) was added and stirring was performed at room temperature for 1 hour (referred to as ②).

3.2 ml of the above slurry (②) was added into another 50 ml flask and 10.4 ml of a solution of isobutylaluminoxane (obtained in the same manner as in Example 1) in hexane were added and stirring was performed at room temperature for 1 hour to obtain a catalyst component.

(2) contact of the Catalyst Component with Promoter

4.2 ml of a solution of methylaluminoxane (1 mmol/l) were added and stiring was performed at room temperature for 1 hour. Then, the solution was removed and the catalyst was obtained.

(3) Polymerization

Polymerization was performed in the same way as in Example 46.

The supported amount of transition metal was 1.0 wt%, the addition amount thereof was 1.9 mg and MAO/Zr ratio was 100.

The results are as set out in Table 3.

Example 61

Homopolymerization was conducted in the same way as in Example 46 excepting that ethylene was used in place of the mixed gas of ethylene and butene-1. The results are as set out in Table 3.

Example 62

Homopolymerization of propylene was conducted in the same way as in Example 52 except that propylene was used in place of the mixed gas of ethylene and butene-1, the polymerization temperature was 50°C, the pressure was 7 kgf /cm$^2$ and the polymerization time was 1 hour. The results are as set out in Table 3.

Example 63

(1) Preparation of Catalyst Component

150 ml of purified toluene was charged into a 300 ml flask under nitrogen, then monoisopropoxytrichlorozirconium (2.6 g) and indene (11.6 g) were added and stirring was performed for 30 minutes at room temperature. Then triethylaluminum (11.6 g) was added dropwise while the system was held at 0°C. Then, the system was warmed upto room temperature and stirring was performed for 2 hours to produce a a transition metal catalyst component (①). The concentration of this solution was 0.057 mmol/ml in terms of Zr.

Into a 50 ml flask 1 g of $SiO_2$ (a product of Fuji Devison, Grade #952) which had been calcined at 600°C for 5 hours was added and 10 ml of purified toluene were added.

Thereafter 4 ml of the above solution (①) was added and stirring was performed at room temperature for 1 hour (referred to as (②).

1.3 ml of the above slurry (②) was added into another 50 ml flask and 10 ml of a solution of isobutylaluminoxane (obtained in the same manner as in Example 1) in hexane were added and stirring was performed at room temperature for 1 hour to obtain a catalyst component.

(2) Contact of the Catalyst

Component with Promoter 2 ml of a solution of methylaluminoxane (1 mmol/l) were added and stirring was performed at room temperature for 2 hours. Then, the solution was removed and the catalyst was obtained.

(3) Polymerization

A 3 l stainless steel autoclave equipped with stirrer was purged with nitrogen and 200 g of dried common salt were added, the catalyst ② was added in the amount of 1.5 mg in terms of Zr, and heated at 60°C under stirring.

Then a gaseous mixture of ethylene and butene-1 (butene-1/ethylene mole ratio: 0.25) was fed into the autoclave to total pressure of 9 kgf/cm$^2$G and polymerization was started. The polymerization was continued for 2 hours while maintaining the total pressure at 9 kgf/cm$^2$G under condition supply of a gaseous mixture of ethylene and butene-1 (butene-1/ethylene mole ratio: 0.05).

After polymerization, the system was cooled and the salt was removed to afford 176g of white polymer. The supported amount of transition metal was 1 wt%, MAO/Zr ratio was 100.

The results are as set out in Table 3.

Example 65

(1) Preparation of Catalyst Component

150 ml of purified toluene was charged into a 300 ml flask under nitrogen, then tetrabutoxyzirconium (3.85g) and indene (2.3g) were added and stirring was performed for 30 minutes at room temperature. Then 20 ml of a solution of n-butyl lithium in ethyer (2 mol/l) were added dropwise while the system was held at 0°C. Then, the system was warmed upto room temperature and stirring was performed for 2 hours to produce a transition metal catalyst component (①). The concentration of this solution was 0.056 mmol/ml in terms of Zr.

Into a 50 ml flask 1 g of $SiO_2$ (a product of Fuji Devison, Grade #952) which had been calcined at 600°C for 5 hours was added and 10 ml of purified toluene were added.

Thereafter 4 ml of the above solution (①) was added and stirring was performed at room temperature for 1 hour (referred to as ②).

1.3 ml of the above slurry (②) was added into another 50 ml flask and 10 ml of a solution of isobutylaluminoxane (obtained in the same manner as in Example 1) in hexane were added and stirring was performed at room temperature for 1 hour to obtain a catalyst component.

(2) Contact of the Catalyst Component with Promoter

2 ml of a solution methylaluminoxane (1 mmol/l) were added and stirring was performed at room temperature for 2 hours. Then, the solution was removed and the catalyst was obtained.

(3) Polymerization

Polymerization was performed in the same way as in Example 64.

The obtained white polymer was 91 g the supported amount of transition metal was 1 wt% (to silica) and MAO/Zr ratio was 100.

The results are as set out in Table 3.

Example 66

(1) Preparation of Catalyst Component

(a) 150 ml of purified toluene was charged into a 300 ml flask under nitrogen, then Zr $(OBa)_4$ (3.85 g) and indene (2.3 g) were added and stirring was performed for 30 minutes at room temperature.

The concentration of this solution was 0.064 mmol/ml in terms of Zr.

(b) Into a 50 ml flask 2 g of $SiO_2$ (a product of Fuji Devison, Grade #952) which had been calcined at 600°C for 5 hours was added and 10 ml of purified toluene and 6 ml of a solution of methylaluminoxane in toluene (1 mmol/ml) were added.

Thereafter 4 ml of the above solution (ⓐ) was added and stirring was performed at room temperature for 1 hour.

(c) 2 ml of the above slurry (ⓑ) was added into another 50 ml flask and 12 ml of a solution of isobutylaluminoxane in hexane and 27.5 mg of triethylaluminum were added.

(2) Contact of the Catalyst Component with Promoter 2.4 ml of a solution of methylaluminoxane (1 mmol/l) were added and stirring was performed at room temperature for 2 hours. Then, the solution was not removed to obtain a catalyst.

(3) Polymerization

A 3 l stainless steel autoclave equipped with stirrer was purged with nitrogen and 1 ℓ of purified hexane were added, the catalyst was added in the amount of 1.3 mg in terms of Zr, and heated at 60°C. Then ethylene was fed to 9 kgf/cm$^2$G and polymerization was performed for 2 hours. 38 g of a white polymer were obtained. The supported amount of transition metal was 1.1 wt% and MAO/Zr ratio was 100. The results are as set out in Table 3.

Comparative Example 13

(1) Preparation of Catalyst Component

150 ml of purified toluene was charged into a 300 ml flask under nitrogen, then Zr $(OBa)_4$ (3.85 g) and indene (11.6 g) were added and stirring was performed for 30 minutes at room temperature. Then triethylaluminum (11.6 g ) was added dropwise while the system was held at 0°C. Then, the system was warmed upto room temperature and stirring was performed for 2 hours to produce a transition metal catalyst component. The concentration of this solution was 0.056 mmol/ml in terms of Zr.

1.3 ml of the above solution was added into a 50 ml flask and 36 ml of a solution of isobutylaluminoxane in hexane (1 mmol/ml) were added and stirring was performed at room temperature for 1 hour to obtain a catalyst component.

(2) Contact of the Catalyst Component with Promoter

7.3 ml of a solution of methylaluminoxane (1 mmol/l) were added and stirring was performed at room temperature for 2 hours.

(3) Polymerization

A 3 l stainless steel autoclave equipped with stirrer was purged with nitrogen and 200 g of dried common salt were added, the catalyst was added in the amount of 1.4 mg in terms of Zr, and heated at 60°C under stirring.

Then, a gaseous mixture of ethylene and butene-1 (butene-1/ethylene mole ratio: 0.25) was fed into the autoclave to total pressure of 9 kgf/cm$^2$G and polymerization was started. The polymerization was continued for 2 hours while maintaining the total pressure at 9 kgf/cm$^2$G under condition supply of a gaseous mixture of ethylene and butene-1(butene-1/ethylene mole ratio: 0.05).

After polymerization, the system was cooled and the salt was removed to afford 100 g of white polymer. MAO/Zr ratio was 100.

The results are as set out in Table 3.

Comparative Example 14

(1) Preparation of Catalyst Component

150 ml of purified toluene was charged into a 300 ml flask under nitrogen, then indene (11.6 g) and

triethylaluminum (11.6g) were added and stirring was performed for 30 minutes at room temperature. Then 36 ml of a solution of isobutylaluminoxane were added and stirring was performed at room temperature for 2 hours.

Into a 50 ml flask 1 g of $SiO_2$ (a product of Fuji Devison, Grade #952) which had been calcined at 600°C for 5 hours was added and 10 ml of purified toluene were added.

Thereafter 4 ml of the above solution was added and stirring was performed at room temperature for 1 hour.

(2) Polymerization

A 3 l stainless steel autoclave equipped with stirrer was purged with nitrogen and 200 g of dried common salt were added, 1.3 ml of the catalyst solution was added, and heated at 60°C and the polymerization was performed in the same way as in Comparative Example 13.

After the polymerization, polymer could not be recognized. The results are as set out in Table 3.

Comparative Example 15

(1) Preparation of Catalyst Component

150 ml of purified toluene was charged into a 300 ml flask under nitrogen, then Zr $(OBa)_4$ (3.85 g) and indene (11.6 g) were added and stirring was performed for 30 minutes at room temperature. Then triethylaluminum (11.6 g) was added dropwise while the system was held at 0°C. Then, the system was warmed upto room temperature and stirring was performed for 2 hours to produce a transition metal catalyst component. The concentration of this solution was 0.060 mmol/ml in terms of Zr.

Into a 50 ml flask 1 g of $SiO_2$ (a product of Fuji Devison, Grade #952) which had been calcined at 600°C for 5 hours was added and 10 ml of purified toluene were added.

Thereafter 4 ml of the above solution was added and stirring was performed at room temperature for 1 hour.

1.3 ml of the above slurry (③) was added into another 50 ml flask and 11 ml of a solution of isobutylaluminoxane in hexane were added and stirring was performed at room temperature for 1 hour to obtain a catalyst component.

(2) Contact of the Catalyst Component with Promoter

2.2 ml of a solution of methylaluminoxane (1 mmol/l) were added and stirring was performed at room temperature for 2 hours. Then, the solution was removed and the catalyst was obtained.

(3) Polymerization

A 3 l stainless steel autoclave equipped with stirrer was purged with nitrogen and 200 g of dried common salt were added, the catalyst was added in the amount of 1.7 mg in terms of Zr, and heated at 60°C and the polymerization was performed in the same way as in Comparative Example 13.

After the polymerization, polymer could not be recognized. The results are as set out in Table 3.

Comparative Example 16

(1) Preparation of Catalyst Component

150 ml of purified toluene was charged into a 300 ml flask under nitrogen, then Zr $(OBa)_4$ (3.85 g) and indene (11.6 g) were added and stirring was performed for 2 hours at room temperature. The concentration of this solution was 0.060 mmol/ml in terms of Zr.

Into a 50 ml flask 2 g of $SiO_2$ (a product of Fuji Devison, Grade #952) which had been calcined at 600°C for 5 hours was added and 10 ml of purified toluene were added.

Thereafter 4 ml of the above solution was added and stirring was performed at room temperature for 1 hour.

1.3 ml of the above slurry (③) was added into another 50 ml flask and 11 ml of a solution of isobutylaluminoxane in hexane were added and stirring was performed at room temperature for 1 hour to obtain a catalyst component.

(2) Contact of the Catalyst Component with Promoter

2.2 ml of a solution of methylaluminoxane (1 mmol/l) were added and stirring was performed at room temperature for 1 hour. Then, the solution was removed and the catalyst was obtained.

(3) Polymerization

A 3 l stainless steel autoclave equipped with stirrer was purged with nitrogen and 200 g of dried common salt were added, the catalyst was added in the amount of 1.7 mg in terms of Zr, and heated at 60°C and the polymerization was performed in the same way as in Comparative Example 13.

After the polymerization, polymer could not be recognized. The supported amount of transition metal was

1.1 wt% and MAO/Zr ratio was 100. The results are as set out in Table 3.

Comparative Example 17

(1) Preparation of Catalyst Component

150 ml of purified toluene was charged into a 300 ml flask under nitrogen, then Zr $(OBa)_4$ (3.85 g) and indene (11.6 g) were added and stirring was performed for 30 minutes at room temperature. Then triethylaluminum (11.6 g) was added dropwise while the system was held at 0°C. Then, the system was warmed upto room temperature and stirring was performed for 2 hours to produce a transition metal catalyst component. The concentration of this solution was 0.056 mmol/ml in terms of Zr.

Into a 50 ml flask 1 g of $SiO_2$ (a product of Fuji Devison, Grade #952) which had been calcined at 600°C for 5 hours was added and 10 ml of purified toluene were added.

Thereafter 4 ml of the above solution was added and stirring was performed at room temperature for 1 hour.

(2) Contact of the Catalyst Component with Promoter

In another 50 mℓ flask, 1.3 ml of the above slurry and 2 ml of a solution of methylaluminoxane (1 mmol/l) were added and stirring was performed at room temperature for 2 hours. Then, the solution was removed and the catalyst was obtained.

(3) Polymerization

A 3 l stainless steel autoclave equipped with stirrer was purged with nitrogen and 200 g of dried common salt were added, the catalyst ④ was added in the amount of 1.5 mg in terms of Zr, and heated at 60°C under stirring. The polymerization was performed in the same way as in Comparative Example 13. After polymerization, the system was cooled and the salt was removed to afford 47 g of white polymer. The supported amount of transition metal was 1 wt%, MAO/Zr ratio was 100.

The results are as set out in Table 3.

Comparative Example 18

(1) Preparation of Catalyst Component

The same transition metal catalyst was used (①).

Into a 50 ml flask, 1 g of $SiO_2$ (a product of Fuji Devison, Grade #952) which had been calcined at 600°C for 5 hours was added and 10 ml of purified toluene were added.

Thereafter 2 ml of the above solution was added and stirring was performed at room temperature for 1 hour.

2 ml of the above slurry was added into another 50 ml flask and 9.3 ml of a solution of isobutylaluminoxane in hexane were added and stirring was performed at room temperature for 1 hour to obtain a catalyst component.

(2) Polymerization

Polymerization was performed in the same way as in Example 46.

The supported amount of transition metal was 2.0 wt%, the addition amount thereof was 1.8 mg and MAO/Zr ratio was 100.

The results are as set out in Table 3.

Comparative Example 19

(1) Preparation of Catalyst Component

Into a 50 ml flask, 2 g of $SiO_2$ (a product of Fuji Devison, Grade #952) which had been calcined at 600°C for 5 hours was added and 11 ml of a solution of zirconosen dichloride in toluene (0.02 mol/l) were added and stirring was performed at room temperature for 1 hour.

1 ml of the above slurry was added into another 50 ml flask and 10 ml of a solution of isobutylaluminoxane in hexane were added and stirring was performed at room temperature for 1 hour to obtain a catalyst component.

(2) Contact of the Catalyst Component with Promoter

2.0 ml of solution of methylaluminoxane (1 mmol/l) were added and stirring was performed at room temperature for 2 hours. Then, the solution was removed and the catalyst was obtained.

(3) Polymerization

A 3 l stainless steel autoclave equipped with stirrer was purged with nitrogen and 200 g of dried common salt were added, the catalyst was added in the amount of 1.4 mg in terms of Zr, and heated at 60°C

under stirring. The polymerization was performed in the same way as in comparative Example 13.

After polymerization, the system was cooled and the salt was removed to afford 18 g of white polymer. The supported amount of transition metal was 1 wt%, MAO/Zr ratio was 100.

The results are as set out in Table 3.

Comparative Example 20

(1) Preparation of Catalyst Component

Into a 50 ml flask, 1 ml of a solution of zircosenedichloride (0.02 ml/l) was added and then 10 ml of a solution of isobutylaluminoxane in hexane was added stirring was performed at room temperature for 1 hour to obtain a catalyst component.

(2) Contact of the Catalyst Component with Promoter

2.0 ml of a solution of methylaluminoxane (1 mmol/l) were added and stirring was performed at room temperature for 2 hours.

(3) Polymerization

A 3 l stainless steel atuoclave equipped with stirrer was purged with nitrogen and 200 g of dried common salt were added, the catalyst was added in the amount of 1.5 mg in terms of Zr, and heated at 60°C under stirring. The polymerization was performed in the same way as in Comparative Example 13. During the polymerization blocks were formed. MAO/Zr ratio was 100.

The results are as set out in Table 3.

Table 3

| | | Yield | Catalytic Activity | MI | Bulk Density | Density | Melting Point |
|---|---|---|---|---|---|---|---|
| | | g | g/gMe[1] | g/10min | g/cc | g/cm³ | °C |
| Example | 46 | 94 | 52,000 | 1.3 | 0.40 | 0.9221 | 114.0 |
| | 47 | 107 | 67,000 | 1.8 | 0.37 | 0.9216 | 113.9 |
| | 48 | 100 | 77,000 | 27 | 0.39 | 0.9227 | 98.3 |
| | 49 | 160 | 84,000 | 2.3 | 0.38 | 0.9115 | 97.9 |
| | 50 | 124 | 73,000 | 5.9 | 0.37 | 0.9233 | 114.8 |
| | 51 | 116 | 77,000 | 1.5 | 0.38 | 0.9218 | 114.0 |
| | 52 | 151 | 89,000 | 0.9 | 0.40 | 0.9110 | 98.5 |
| | 53 | 83 | 49,000 | 19 | 0.39 | 0.9223 | 97.3 |
| | 54 | 78 | 39,000 | 1.3 | 0.33 | 0.9311 | 115.3 |
| | 55 | 96 | 64,000 | 1.5 | 0.41 | 0.9219 | 114.2 |
| | 56 | 89 | 59,000 | 1.7 | 0.39 | 0.9234 | 114.6 |
| | 57 | 33 | 22,000 | 36 | 0.36 | 0.9218 | 98.6 |
| | 58 | 21 | 14,000 | 5.4 | 0.36 | 0.9209 | 100.4 |
| | 59 | 99 | 58,000 | 3.2 | 0.35 | 0.9336 | 115.3 |
| | 60 | 61 | 32,000 | 54 | 0.33 | 0.9318 | 115.8 |
| | 61 | 59 | 33,000 | 0.3 | 0.41 | 0.9498 | 132.9 |
| | 62 | 35 | 27,000 | 12 | 0.36 | 0.9097 | 142.3 |
| | 63 | 78 | 49,000 | 25 | 0.36 | 0.9228 | 113.7 |
| | 64 | 76 | 51,000 | 17 | 0.37 | 0.9219 | 112.6 |
| | 65 | 91 | 54,000 | 1.9 | 0.39 | 0.9226 | 113.1 |
| | 66 | 38 | 29,000 | 0.1 | 0.35 | 0.949 | 129 |
| Comparative example | 13 | 100 | 72,000 | 1.3 | 0.21 | 0.9219 | 114.1 |
| | 14 | 0 | - | - | - | - | - |
| | 15 | 0 | - | - | - | - | - |
| | 16 | 34 | 24,000 | 4.9 | 0.38 | 0.9223 | 109.8 |
| | 17 | 47 | 31,000 | 2.7 | 0.40 | 0.9220 | 114.3 |
| | 18 | 7 | 4,000 | 5.0 | 0.35 | 0.9198 | 113.5 |
| | 19 | 18 | 13,000 | 50 | 0.36 | | |
| | 20 | Blocks | - | - | - | - | - |

## Claims

**1.** A catalyst component for the polymerization of olefins, prepared by contacting the following components (1) to (4) with one another:

(1) a compound represented by the general formula $Me^1R^1p(OR^2)qX^{1}4\text{-}p\text{-}q$ where $R^1$ and $R^2$ each are hydrocarbon radicals having 1 to 24 carbon atoms, $X^1$ is a halogen atom, $Me^1$ is Zr, Ti, or Hf and p, q are $0 \leqq p \leqq 4$, $0 \leqq q \leqq 4$, $0 \leqq p+q \leqq 4$.

(2) a compound represented by the general formula $Me^2R^3m(OR^4)nX^2z\text{-}m\text{-}n$ where $R^3$ and $R^4$ each are hydrocarbon radicals having 1 to 24 carbon atoms, $X^2$ is a halogen atom, $Me^2$ is an element from the Groups I to III in the Periodic Table, z is the valence, and m and n are $0 \leqq m \leqq z$, $0 \leqq n \leqq z$, $0 \leqq m+n \leqq z$.

(3) an organocyclic compound having two or more conjugated double bonds; and

(4) a compound selected from the group consisting of A) a modified organoaluminum compound containing Al-O-Al bond and with at least one branched-chain alkyl group attached to aluminum atom, B) a boric compound, C) a compound containing C-X bond where X is a halogen atom and D) a sulfide.

**2.** A catalyst according to Claim 1, additionally comprising component

(5) an inorganic carrier or particulate polymer carrier or mixture thereof.

**3.** A catalyst component according to Claim 1 or 2 additionally comprising

(6) a modified organoaluminum compound derived from reacting an organoaluminum compound with water and having 1-100 Al-0-Al bonds in the molecule.

**5.** A catalyst component as set forth in any one of Claims 1 to 4 wherein said organocyclic compound is a compound represented by the following general formula:

$$(Cp)_LSiR_{4-L}$$

where Cp is cyclopentadienyl, substituted cyclopentadienyl, indenyl or substituted indenyl, R is a hydrocarbon radical having 1 to 24 carbon atoms selected from alkyl, alkoxy, aryl, aryloxy and aralkyl, or hydrogen, and L is $1 \leqq L \leqq 4$.

**6.** A catalyst component as set forth in any one of claims 1 to 5 wherein said modified organoaluminum compound is a product obtained by the reaction of an organoaluminum compound having a branched chain and water.

**7.** A catalyst component as set forth in any one of Claims 1 to 6 wherein said organoaluminum compound is a compound represented by the following general formula:

$$R_mR'_nAlX_{3-m-n}$$

wherein R is a branched-chain alkyl group having 3 to 18 carbon atoms, R' is a hydrocarbon radical having 1 to 18 carbon atoms, X is a hydrogen atom or a halogen atom, m and n are in the ranges of $0 < m \leqq 3$ and $0 \leqq n < 3$, respectively.

**8.** A catalyst component as set forth in Claim 3, wherein said modified organoaluminum compound is represented by the following general formula:

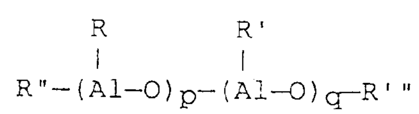

where R and R' are as defined above, R" and R"' have the same meaning as R', provided R" and R"' may conjointly form a ring, p is $1 \leqq p \leqq 100$, and q is $0 \leqq q \leqq 10$.

**9.** A catalyst component as set forth in any one of Claims 1 to 8 wherein the amount of component (2) and that of component (3) are each in the range of 0.01 to 100 mols per mol of component (1).

**10.** A catalyst component as set forth in any one of Claims 1 to 10 wherein the amount of component (4) is in the range of 1 to 100,000 mols per mol of component (1).

**11.** A catalyst component as set forth in any one of Claims 1 to 10 wherein said boric compound is one or more compounds selected from trialkylammoniumborate, dialkylammoniumborate and N,N-dialkylaniliniumborate.

**12.** A catalyst component as set forth in Claim 11, wherein the alkyl radical in the boric compound is an alkyl radical having 1 to 12 carbon atoms.

**13.** A catalyst component as set forth in any one of Claims 1 to 12, wherein said compound containing C-X bond is a compound represented by the following general formula:

$$R^5\text{-}R^6q \text{ or } R^5(A\text{-}R^6)_4$$

where A is selected from -O-, $-OSiR^7_2-$, $-C(OR^8)_2-$ and $-C(OR^8)_2O-$, R5 is a halocarbon radical having 1 to 30 carbon atoms, $R^6$ and $R^7$ which may be the same or different are a hydrogen atom, halogen atom or hydrocarbon radical having 1 to 30 carbon atoms, $R^8$ is halogen atom hydrocarbon radicals having 1 to 30 carbon atoms, $R^5$ and $R^6$ may combine with each other to form a ring, q is $0 \leqq q \leqq 4$.

**14.** A catalyst component as set forth in Claim 15, wherein said a compound containing C-X bond is selected from compounds represented by the following general formulae (A) to (N):

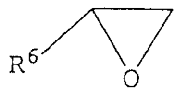

(A)

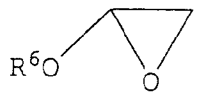

(B)

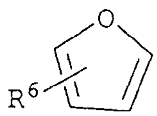

(C)

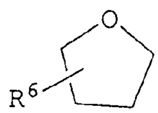

(D)

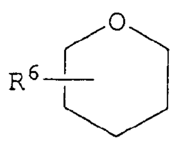

(E)

$R^6$-O-$R^8$ (F)

$R^6$-O-$SiR^8_3$ (G)

$R^6R^9C(OR^8)_2$ (H)

$R^8R^9C(OR^6)(OR^8)$ (I)

$R^6C(OR^8)_3$ (J)

$R^8C(OR^6)(OR^8)_2$ (K)

$R^6$-$R^{10}$ (L)

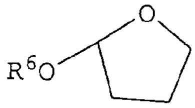

(M)

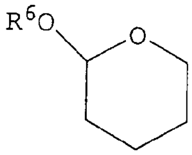

(N)

wherein $R^6$ is a halocarbon radical having 1 to 30 carbon atoms, $R^8$ is a hydrocarbon group having 1 to 30 carbon atoms, $R^9$ is a hydrocarbon group having 1 to 30 carbon atoms or hydrogen atom and $R^{10}$ is a hydrogen atom or a halogen atom.

**15.** A catalyst component as set forth in claim 14, wherein said a compound containing C-X bond is one or more selected from the group consisting of 3-perfluorohexyl-1,2-epoxypropane, 2-trifluoromethylfuran, 2-trifluoromethylhydrofuran, 2-trifluoromethyltetrahydropyran, 2,2,2-trifluoroethylbenzylether, 2,2,2-trifluoroethyltritylether, 2,2,3,3-pentafluoropropyltritylether, 1H,1H-hexafluorobutyltritylether, 2,2,2-trifluoroethyltriphenylsilylether, 2,2,3,3-pentafluoropropyltriphenylsilylether, 1H,1H-hexafluorobutyltriphenylsilylether, 2,2-dimethoxy-1,1,1-trifluoropropane, 2,2-diethoxy-1,1,1-trifluoropropane, 2,2-dimethoxy-1,1,1,3,3,3-hexafluoropropane, 2,2-diethoxy-1,1,1,3,3,3-hexafluoropropane, 2,2-bis(2,2,2-trifluoroethoxy)-propane, 1,1-bis(2,2,2-trifluoroethoxy)-cyclohexane, 1,1,1-trimethoxy-2,2,2-trifluoroethane, 1,1,1-triethoxy-2,2,2-trifluoroethane, 1,1,1-tri(2,2,2-trifluoroethoxy)-ethane, hexafluorobenzene, perfluorotoluene, bistrifluoromethylbenzene, dichloromethane, chloroform, 1,1-dichloroethane, 1,2-dichloroethane, 1,1,1-trichloroethane and 1,1,1-trichloroethane.

**16.** A catalyst component as set forth in any one of Claims 2 to 15 wherein said inorganic carrier is formed of a porous inorganic compound selected from carbonaceous material, metal, metal oxide, metal chloride, metal carbonate and mixtures thereof.

**17.** A catalyst component as set forth in any one of Claims 2 to 16 wherein the inorganic carrier has a maximum length of 5 - 200 μm, a surface area of 5 - 1,000 $m^2/g$ and a pore volume of 0.05 - 3 $cm^3$,

**18.** A catalyst component as set forth in any one of Claims 2 to 17 wherein the particulate polymer carrier is formed of a thermoplastic or thermosetting resin having an average particle size of 5 - 2,000 μm.

**19.** A process for preparing an olefin polymer, characterised by homopolymerizing or copolymerizing an olefin or olefins in the presence of a catalyst according to any one of Claims 1 to 18.